(19) Europäisches Patentamt
European Patent Office
Office européen des brevets

(11) **EP 4 307 212 A1**

(12) **EUROPEAN PATENT APPLICATION**
published in accordance with Art. 153(4) EPC

(43) Date of publication:
**17.01.2024 Bulletin 2024/03**

(21) Application number: **22794524.3**

(22) Date of filing: **02.04.2022**

(51) International Patent Classification (IPC):
**G06T 5/50** (2006.01)     **H04N 5/349** (2011.01)
**H04N 5/232** (2006.01)

(52) Cooperative Patent Classification (CPC):
**G06T 5/50; G06T 7/70; G06T 7/80; G06T 7/90;**
H04N 23/60; H04N 25/48

(86) International application number:
**PCT/CN2022/085191**

(87) International publication number:
**WO 2022/228053 (03.11.2022 Gazette 2022/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.04.2021 CN 202110473797**

(71) Applicant: **Huawei Technologies Co., Ltd.
Longgang
Shenzhen, Guangdong 518129 (CN)**

(72) Inventor: **CHENG, Chiachu
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **IMAGE PROCESSING METHOD AND RELATED DEVICE**

(57)     An image processing method and a related device are provided. The method includes: obtaining a plurality of original images, where the plurality of original images are images obtained by separately sensing at a plurality of image capturing positions by using a photosensitive element, and a distance between two image capturing positions with a minimum distance in the plurality of image capturing positions is greater than a distance between any two adjacent sensing pixels in the photosensitive element (701); and superimposing the plurality of original images based on the plurality of image capturing positions, to obtain a composite image, where pixels in the composite image are sub-pixels obtained through division in a process of superimposing the plurality of original images, and a resolution of the composite image is greater than a resolution of any one of the plurality of original images (702). An image resolution can be effectively improved.

Obtain a plurality of original images, where the plurality of original images are images obtained by separately sensing at a plurality of image capturing positions by using a photosensitive element, and a distance between two image capturing positions with a minimum distance in the plurality of image capturing positions is greater than a distance between any two adjacent sensing pixels in the photosensitive element — 701

Superimpose the plurality of original images based on the plurality of image capturing positions, to obtain a composite image, where pixels in the composite image are determined based on sub-pixels obtained through division in a process of superimposing the plurality of original images, and a resolution of the composite image is greater than a resolution of any one of the plurality of original images — 702

FIG. 7

## Description

This application claims priority to Chinese Patent Application No. 202110473797.7, filed with the China National Intellectual Property Administration on April 29, 2021 and entitled "IMAGE PROCESSING METHOD AND RELATED DEVICE", which is incorporated herein by reference in its entirety.

## TECHNICAL FIELD

This application relates to the field of image processing technologies, and in particular, to an image processing method and a related device.

## BACKGROUND

In an existing solution for improving an image resolution (also referred to as resolution), a distance between two image capturing positions with a minimum distance is less than a distance d between any two adjacent pixels (pixel) in a photosensitive element (also referred to as a photosensitive component, an image sensor, or an image sensor). Therefore, in a process of movement and image capturing, a minimum distance by which the photosensitive element moves each time needs to be less than the distance between two adjacent pixels, for example, a minimum distance of movement is d/2, d/3, or d/5. Because the minimum distance by which the photosensitive element moves each time is excessively short, a brake with a quite high precision level is required for implementation. However, this cannot be implemented by an existing brake. Consequently, a yield rate of improving an image resolution is extremely low.

## SUMMARY

Embodiments of this application disclose an image processing method and a related device, to effectively improve an image resolution.

According to a first aspect, an embodiment of this application discloses an image processing method, including: obtaining a plurality of original images, where the plurality of original images are images obtained by separately sensing at a plurality of image capturing positions by using a photosensitive element, and a distance between two image capturing positions with a minimum distance in the plurality of image capturing positions is greater than a distance between any two adjacent sensing pixels in the photosensitive element; and superimposing the plurality of original images based on the plurality of image capturing positions, to obtain a composite image, where pixels in the composite image are determined based on sub-pixels (sub-pixel) obtained through division in a process of superimposing the plurality of original images, and a resolution of the composite image is greater than a resolution of any one of the plurality of original images.

In this embodiment of this application, sensing is separately performed at the plurality of image capturing positions by using the photosensitive element, and one original image is obtained through sensing at each image capturing position. In this way, the plurality of original images may be obtained through sensing at the plurality of image capturing positions, and the plurality of image capturing positions are in a one-to-one correspondence with the plurality of original images. Then, the plurality of original images are superimposed based on the plurality of image capturing positions during sensing, that is, the plurality of original images are superimposed in a same coordinate system (or plane) in a staggered manner, and when the plurality of original images are superimposed in a same coordinate system (or plane), any one of the plurality of original images is stacked at a corresponding image capturing position. In a process of superimposing the plurality of original images, one pixel in any original image is divided into a plurality of sub-pixels, and sub-pixels obtained through division in the superimposition process may be used as pixels to form the composite image. In this way, one pixel in the original image corresponds to a plurality of pixels in the composite image. Therefore, the resolution of the composite image is greater than the resolution of any one of the plurality of original images. Because the distance between the two image capturing positions with the minimum distance in the plurality of image capturing positions is greater than the distance between any two adjacent sensing pixels in the photosensitive element, that is, a minimum distance of each movement of the photosensitive element during image capturing is greater than the distance between any two adjacent sensing pixels in the photosensitive element, a requirement on a precision level of a brake is not high. An existing brake moves to capture an image and then images are superimposed, so that an image resolution can be effectively improved. It should be noted that, a size of the composite image may be the same as a size of the original image, and the size of the composite image may alternatively be slightly less than the size of the original image. This is because the plurality of original images are superimposed in a staggered manner, and a non-overlapping region inevitably exists. For the non-overlapping region, pixels in the original image are not divided into sub-pixels, and the pixels in the original image may be directly used as pixels of the composite image. In this case, pixels in the composite image come from a non-overlapping region and the non-overlapping region, and the size of the composite image is the same as the size of the original image. In the composite image, a quantity of pixels of the original image that are directly used as pixels of the composite image is far less than a total quantity of pixels of the composite image. Therefore, impact on (application of) the composite image may be ignored. If the pixels in the composite image come only from the overlapping region, in this case, the size of the composite image is slightly less than the size of the original image. It should be further noted that, compared with the conventional technology in which the minimum distance of each movement of the photosensitive element is less than the distance between two adjacent pixels, in this embodiment of this application, the minimum distance of each movement of the photosensitive element is greater than the distance between two adjacent pixels. Therefore, in this embodiment of this application, an area of the non-overlapping region caused by superimposition of the original images in a staggered manner is greater than that in the conventional technology. To be specific, a quantity of pixels in the original image that are not divided into sub-pixels in this embodiment of this application is greater than that in the conventional technology. However, compared with the conventional technology, the quantity of the pixels in the added part that are not divided into sub-pixels is far less than the total quantity of pixels of the composite image. Even if the pixels in the added part that are not divided into sub-pixels are directly used as pixels of the composite image, impact brought by this on (application of) the composite image can still be ignored. It should be understood that, any sensing pixel in the photosensitive element can sense only a spectrum in one wavelength range, and the original image is an image obtained by the photosensitive element through direct sensing. Therefore, any pixel in the original image includes only one type of color information. When the photosensitive element senses only a spectrum in one wavelength range, that is, when all sensing pixels in the photosensitive element sense a spectrum in a same wavelength range, all pixels in the original image are of a same color. When the photosensitive element senses spectrums in three wavelength ranges, for example, four adjacent 2×2 sensing pixels are used as one spectrum sensing unit, and adjacent and regularly repeatedly arranged spectrum sensing units form an integral photosensitive element, the four sensing pixels in the spectrum sensing unit may sense spectrums in three wavelength ranges, that is, the four sensing pixels in the spectrum sensing unit may sense spectrums of three colors. Therefore, the original image includes pixels of three colors, and color arrangements of all pixels in the original image correspond to the arrangement of the spectrum sensing units in the photosensitive element. When the photosensitive element senses spectrums in three wavelength ranges, most pixels in the composite image are sub-pixels obtained through division in the superimposition process, and each sub-pixel is superimposed with three colors in the superimposition process. Therefore, most pixels in the composite image include three types of color information. In the composite image, the pixels of the original image that are directly used as pixels of the composite image include only one type of color information, and a quantity of pixels of this part is far less than the total quantity of pixels in the composite image, and may be ignored. Therefore, it may be considered that any pixel in the composite image includes three types of color information. For ease of description, it is considered in the following by default that any pixel in the composite image includes three types of color information. In conclusion, in this embodiment of this application, a spatial resolution and a color resolution of an image can be effectively improved.

In a possible implementation, the distance s between the two image capturing positions with the minimum distance in the plurality of image capturing positions is $[(a \times n+b)/n] \times d$; a is a positive integer; n is a prime number; $1 \leq b \leq n-1$, and b is an integer; and d is the distance between any two adjacent sensing pixels in the photosensitive element.

In this embodiment of this application, the distance s between the two image capturing positions with the minimum distance in the plurality of image capturing positions is $[(a \times n+b)/n] \times d$, that is, the minimum distance s of each movement of the photosensitive element during image capturing is $(a+b/n) \times d$. Because $1 \leq b \leq n-1$, b/n is a fraction; and a is a positive integer, and therefore, a+b/n is greater than 1 and a+b/n is not an integer. In this way, the minimum distance s of each movement of the photosensitive element during image capturing may be greater than the distance d between any two adjacent sensing pixels in the photosensitive element, and s is not an even-numbered multiple of d. In this embodiment of this application, the plurality of original images are superimposed in a staggered manner, a pixel in an original image needs to be divided into a plurality of sub-pixels, and during superimposition, pixels in different original images are required not to completely overlap. In this embodiment of this application, s is not an even-numbered multiple of d, so that pixels in different original images do not completely overlap during superimposition. This ensures that pixels in the original images can be divided into sub-pixels in the superimposition process, and helps ensure that the sub-pixels are superimposed with three types of color information. It should be noted that, n is a prime number, n may be selected based on the image resolution multiple that needs to be increased, and values of a and b may be selected based on controllable precision of the brake.

In a possible implementation, n is not 2 and $n < f \times (n-1)$, and coordinates of any image capturing position in the plurality of image capturing positions are $(i \times s+W/2, j \times s+H/2)$ in a same coordinate system, where

$$f = \begin{cases} m, n > m \\ 2n - m, n < m \end{cases}$$

and m is a remainder of $a \times n+b$ divided by 2n; $0 \leq i \leq n-1$ and $0 \leq j \leq n-1$, and in any update of $(i \times s+W/2, j \times s+H/2)$, i and j do not change simultaneously, i and j both change monotonically, and i and j are integers; W is a quantity of sensing pixels in a width direction of the photosensitive element; and H is a quantity of sensing pixels in a height direction of the photosensitive element; and the photosensitive element senses spectrums in three wavelength ranges, where the spectrums in the three wavelength ranges correspond to three types of color information, and that pixels in the composite image are determined based on sub-pixels obtained through division in a process of superimposing the plurality of original images includes: the pixels in the composite image are determined based on first sub-pixels obtained through division in the process of superimposing the plurality of original images, where the first sub-pixel includes the three types of color information.

In this embodiment of this application, an image capturing position may be represented by coordinates of a center of the photosensitive element when the photosensitive element performs image capturing at the image capturing position. Coordinates of any one of the plurality of image capturing positions are $(i \times s + W/2, j \times s + H/2)$ in a same coordinate system, where s is the minimum distance of each movement of the photosensitive element, W is the quantity of sensing pixels in the width direction of the photosensitive element, and H is the quantity of sensing pixels in the height direction of the photosensitive element. When n is not 2 and $n < f \times (n-1)$, $0 \le i \le n-1$ and $0 \le j \le n-1$. In any update of $(i \times s + W/2, j \times s + H/2)$, i and j do not change simultaneously, and both i and j change monotonically (for example, monotonically increasing or monotonically decreasing), where i and j are integers. Therefore, the plurality of image capturing positions are 2n-1 image capturing positions in total. When n>m, f=m, and m is a remainder of $a \times n + b$ divided by 2n. When n<m, f=2n-m. In this way, one original image is obtained through sensing at each of the 2n-1 image capturing positions, so that a total of 2n-1 original images are obtained. The 2n-1 original images may be superimposed to obtain the composite image. In the superimposition process, one pixel in an original image is divided into $n \times n$ sub-pixels, so that the resolution of the composite image is greater than the resolution of the original image. In addition, because the photosensitive element senses the spectrums in the three wavelength ranges, that is, the photosensitive element senses spectrums of three colors, the original image includes pixels of three colors. In the process of superimposing the 2n-1 original images, the first sub-pixel superimposed with three colors may be obtained through division, that is, the first sub-pixel includes three types of color information. The first sub-pixel is used as a pixel in the composite image, so that any pixel in the composite image includes three types of color information.

In a possible implementation, n is 2 or $n > f \times (n-1)$, and coordinates of any image capturing position in the plurality of image capturing positions are $(i \times s + W/2, j \times s + H/2)$ in a same coordinate system, where

$$f = \begin{cases} m, & n > m \\ 2n - m, & n < m \end{cases}$$

and m is a remainder of $a \times n + b$ divided by 2n;
$0 \le i \le n$ and $0 \le j \le n$, and in any update of $(i \times s + W/2,$

$j \times s + H/2)$, i and j do not change simultaneously, i and j both change monotonically, and i and j are integers; W is a quantity of sensing pixels in a width direction of the photosensitive element; and H is a quantity of sensing pixels in a height direction of the photosensitive element; and the photosensitive element senses spectrums in three wavelength ranges, where the spectrums in the three wavelength ranges correspond to three types of color information, and that pixels in the composite image are determined based on sub-pixels obtained through division in a process of superimposing the plurality of original images includes: the pixels in the composite image are determined based on first sub-pixels obtained through division in the process of superimposing the plurality of original images, where the first sub-pixel includes the three types of color information.

In this embodiment of this application, an image capturing position may be represented by coordinates of a center of the photosensitive element when the photosensitive element performs image capturing at the image capturing position. Coordinates of any one of the plurality of image capturing positions are $(i \times s + W/2, j \times s + H/2)$ in a same coordinate system, where s is the minimum distance of each movement of the photosensitive element, W is the quantity of sensing pixels in the width direction of the photosensitive element, and H is the quantity of sensing pixels in the height direction of the photosensitive element. When n is 2, $0 \le i \le 2$ and $0 \le j \le 2$. In any update of $(i \times s + W/2, j \times s + H/2)$, i and j do not change simultaneously, both i and j change monotonically (for example, monotonically increasing or monotonically decreasing), and i and j are integers. Therefore, the plurality of image capturing positions are five image capturing positions in total. In this way, one original image is obtained through sensing at each of the foregoing five image capturing positions, so that a total of five original images are obtained. The foregoing five original images may be superimposed to obtain the composite image. In the superimposition process, one pixel in an original image is divided into $2 \times 2$ sub-pixels, so that the resolution of the composite image is greater than the resolution of the original image. In addition, because the photosensitive element senses the spectrums in the three wavelength ranges, that is, the photosensitive element senses spectrums of three colors, the original image includes pixels of three colors. In the process of superimposing the five original images, the first sub-pixel superimposed with the three colors may be obtained through division, that is, the first sub-pixel includes three types of color information. The first sub-pixel is used as a pixel in the composite image, so that any pixel in the composite image includes three types of color information. Alternatively, when $n > f \times (n-1)$, $0 \le i \le n$ and $0 \le j \le n$. In any update of $(i \times s + W/2, j \times s + H/2)$, i and j do not change simultaneously, both i and j change monotonically (for example, monotonically increasing or monotonically decreasing), and i and j are integers. Therefore, the plurality of image capturing positions are 2n+1 image capturing positions in total. When n>m, f=m, and m is a remainder of a×n+b divided by 2n. When n<m, f=2n-m. In this way, one original image is obtained through sensing at each of the foregoing 2n+1 image capturing positions, so that a total of 2n+1 original images are obtained. The foregoing 2n+1 original images may be superimposed to obtain the composite image. In the superimposition process, one pixel in an original image is divided into n×n sub-pixels, and each sub-pixel is superimposed with three types of color information, so that the resolution of the composite image is greater than the resolution of the original image. In addition, because the photosensitive element senses the spectrums in the three wavelength ranges, that is, the photosensitive element senses spectrums of three colors, the original image includes pixels of three colors. In the process of superimposing the 2n+1 original images, the first sub-pixel superimposed with the three colors may be obtained through division, that is, the first sub-pixel includes three types of color information. The first sub-pixel is used as a pixel in the composite image, so that any pixel in the composite image includes three types of color information.

In a possible implementation, that pixels in the composite image are determined based on sub-pixels obtained through division in a process of superimposing the plurality of original images further includes: the pixels in the composite image are determined based on second sub-pixels obtained through division in the process of superimposing the plurality of original images, where the second sub-pixel lacks one or two of the three types of color information; and any color information lacked by the second sub-pixel is determined based on the any color information of a third sub-pixel, where the third sub-pixel is a sub-pixel obtained through division in the process of superimposing the plurality of original images, and the third sub-pixel is a sub-pixel that is near the second sub-pixel and that includes the any color information.

In this embodiment of this application, in the process of superimposing the plurality of original images, not only the first sub-pixel including three types of color information may be obtained through division, but also the second sub-pixel including one or two types of color information may be obtained through division. Any color information lacked by the second sub-pixel may be obtained through estimation based on the any color information of a sub-pixel that is near the second sub-pixel and that includes the any color information. After the color information lacked by the second sub-pixel is estimated, the first sub-pixel and the second-sub-pixel may be used as pixels of the composite image. In this way, any pixel in the composite image may also include three types of color information.

In a possible implementation, n is 2 or n>f×(n-1), and coordinates of any image capturing position in the plurality of image capturing positions are (i×s+W/2, j×s+H/2) in a same coordinate system, where

$$f = \begin{cases} m, & n > m \\ 2n - m, & n < m \end{cases}$$

and m is a remainder of a×n+b divided by 2n;
0≤i≤n-1 and 0≤j≤n-1, and in any update of (ixs+W/2, j×s+H/2), i and j do not change simultaneously, i and j both change monotonically, and i and j are integers; W is a quantity of sensing pixels in a width direction of the photosensitive element; and H is a quantity of sensing pixels in a height direction of the photosensitive element; the photosensitive element senses spectrums in three wavelength ranges, where the spectrums in the three wavelength ranges correspond to three types of color information, and that pixels in the composite image are determined based on sub-pixels obtained through division in a process of superimposing the plurality of original images includes: the pixels in the composite image are determined based on first sub-pixels and second sub-pixels obtained through division in the process of superimposing the plurality of original images, where the first sub-pixel includes the three types of color information, and the second sub-pixel lacks one or two of the three types of color information; and any color information lacked by the second sub-pixel is determined based on the any color information of a third sub-pixel, where the third sub-pixel is a sub-pixel obtained through division in the process of superimposing the plurality of original images, and the third sub-pixel is a sub-pixel that is near the second sub-pixel and that includes the any color information.

In this embodiment of this application, an image capturing position may be represented by coordinates of a center of the photosensitive element when the photosensitive element performs image capturing at the image capturing position. Coordinates of any one of the plurality of image capturing positions are (i×s+W/2, j×s+H/2) in a same coordinate system, where s is the minimum distance of each movement of the photosensitive element, W is the quantity of sensing pixels in the width direction of the photosensitive element, and H is the quantity of sensing pixels in the height direction of the photosensitive element. When n is 2, 0≤i≤1 and 0≤j≤1. In any update of (i×s+W/2, j×s+H/2), i and j do not change simultaneously, both i and j change monotonically (for example, monotonically increasing or monotonically decreasing), and i and j are integers. Therefore, the plurality of image capturing positions are three image capturing positions in total. In this way, one original image is obtained through sensing at each of the three image capturing positions, so that a total of three original images are obtained. The three original images may be superimposed to obtain the composite image. In the superimposition process, one pixel in an original image is divided into 2×2 sub-pixels, but some sub-pixels are superimposed with three types of color information, and some sub-pixels are not superimposed with three types of color information. For the second sub-pixel not superimposed with three types of color information, any color information lacked by the second sub-pixel is estimated by using a sub-pixel near the second sub-pixel. Specifically, any color information lacked by the second sub-pixel is obtained through estimation based on the any color information of the third sub-pixel that is near the second sub-pixel and that includes the any color information. For example, the any color information of the third sub-pixel is directly used as the any color information of the second sub-pixel. If a plurality of third sub-pixels exist near the second sub-pixel, the any color information of the second sub-pixel may be estimated by using the any color information of the plurality of third sub-pixels, for example, an average value of the any color information of the plurality of third sub-pixels is used as the any color information of the second sub-pixel. It should be understood that, after color information estimation is performed on the sub-pixels that lack color information, all sub-pixels obtained through superimposition include three types of color information. In this way, the resolution of the composite image may be greater than the resolution of the original image, and any pixel in the composite image includes three types of color information. Alternatively, when n>f×(n-1), 0≤i≤n-1 and 0≤j≤n-1. In any update of (ixs+W/2, jxs+H/2), i and j do not change simultaneously, both i and j change monotonically (for example, monotonically increasing or monotonically decreasing), and i and j are integers. Therefore, the plurality of image capturing positions are 2n-1 image capturing positions in total. When n>m, f=m, where m is a remainder of a×n+b divided by 2n. When n<m, f=2n-m. In this way, one original image is obtained through sensing at each of the 2n-1 image capturing positions, so that a total of 2n-1 original images are obtained. The 2n-1 original images may be superimposed to obtain the composite image. In the superimposition process, one pixel in an original image is divided into 2×2 sub-pixels, but some sub-pixels are superimposed with three types of color information, and some sub-pixels are not superimposed with three types of color information. For the second sub-pixel not superimposed with three types of color information, any color information lacked by the second sub-pixel is estimated by using a sub-pixel near the second sub-pixel. Specifically, any color information lacked by the second sub-pixel is obtained through estimation based on the any color information of the third sub-pixel that is near the second sub-pixel and that includes the any color information. For example, the any color information of the third sub-pixel is directly used as the any color information of the second sub-pixel. If a plurality of third sub-pixels exist near the second sub-pixel, the any color information of the second sub-pixel may be estimated by using the any color information of the plurality of third sub-pixels, for example, an average value of the any color information of the plurality of third sub-pixels is used as the any color information of the second sub-pixel. It should be understood that, after color information estimation is performed on the sub-pixels that lack color information, all sub-pixels obtained through superimposition include three types of color information. In this way, the resolution of the composite image may be greater than the resolution of the original image, and any pixel in the composite image includes three types of color information.

In a possible implementation, the photosensitive element senses a spectrum in one wavelength range, and coordinates of any image capturing position in the plurality of image capturing positions are (i×s+W/2, j×s+H/2) in a same coordinate system, where 0≤i≤n-1 and 0≤j≤n-1, and in any update of (ixs+W/2, j×s+H/2), i and j do not change simultaneously, i and j both change monotonically, and i and j are integers; W is a quantity of sensing pixels in a width direction of the photosensitive element; and H is a quantity of sensing pixels in a height direction of the photosensitive element.

In this embodiment of this application, the photosensitive element senses the spectrum in one wavelength range, and an image capturing position may be represented by coordinates of a center of the photosensitive element when the photosensitive element performs image capturing at the image capturing position. Coordinates of any one of the plurality of image capturing positions are (i×s+W/2, j×s+H/2) in a same coordinate system, where s is the minimum distance of each movement of the photosensitive element, W is the quantity of sensing pixels in the width direction of the photosensitive element, and H is the quantity of sensing pixels in the height direction of the photosensitive element. 0≤i≤n-1 and 0≤j≤n-1, and in any update of (ixs+W/2, jxs+H/2), i and j do not change simultaneously, both i and j change monotonically (for example, monotonically increasing or monotonically decreasing), and i and j are integers. Therefore, the plurality of image capturing positions are 2n-1 image capturing positions in total. In this way, one original image is obtained through sensing at each of the 2n-1 image capturing positions, so that a total of 2n-1 original images are obtained. The 2n-1 original images may be superimposed to obtain the composite image. In the superimposition process, one pixel in an original image is divided into n×n sub-pixels, so that the resolution of the composite image is greater than the resolution of the original image.

In a possible implementation, n is 2, the plurality of image capturing positions are two image capturing positions, and coordinates of the two image capturing positions are respectively (W/2, H/2) and (s+W/2, s+H/2) in a same coordinate system; W is a quantity of sensing pixels in a width direction of the photosensitive element; and H is a quantity of sensing pixels in a height direction of the photosensitive element; the photosensitive element senses spectrums in three wavelength ranges, where the spectrums in the three wavelength ranges correspond to three types of color information, and that pixels in the composite image are determined based on sub-pixels obtained through division in a process of superimposing the plurality of original images includes: the pixels in the composite image are determined based on second sub-pixels obtained through division in the process of superimposing the plurality of original images, where the second sub-pixel lacks one or two of the three types of color information; and any color information lacked by the second sub-pixel is determined based on the any color information of a third sub-pixel, where the third sub-pixel is a sub-pixel obtained through division in the process of superimposing the plurality of original images, and the third sub-pixel is a sub-pixel that is near the second sub-pixel and that includes the any color information.

In this embodiment of this application, an image capturing position may be represented by coordinates of a center of the photosensitive element when the photosensitive element performs image capturing at the image capturing position. When n is 2, the plurality of image capturing positions may be two image capturing positions, and coordinates of the two image capturing positions are respectively (W/2, H/2) and (s+W/2, s+H/2) in a same coordinate system, where W is the quantity of sensing pixels in the width direction of the photosensitive element, and H is the quantity of sensing pixels in the height direction of the photosensitive element. In this way, one original image is obtained through sensing at each of the two image capturing positions, so that a total of two original images are obtained. The two original images may be superimposed to obtain the composite image. In the superimposition process, one pixel in an original image is divided into $2\times2$ sub-pixels, so that the resolution of the composite image is greater than the resolution of the original image. However, the sub-pixel is not superimposed with three types of color information, and any color information lacked by the second sub-pixel is estimated by using a sub-pixel near the second sub-pixel. Specifically, any color information lacked by the second sub-pixel is obtained through estimation based on the any color information of the third sub-pixel that is near the second sub-pixel and that includes the any color information. For example, the any color information of the third sub-pixel is directly used as the any color information of the second sub-pixel. If a plurality of third sub-pixels exist near the second sub-pixel, the any color information of the second sub-pixel may be estimated by using the any color information of the plurality of third sub-pixels, for example, an average value of the any color information of the plurality of third sub-pixels is used as the any color information of the second sub-pixel. It should be understood that, after color information estimation is performed on the sub-pixels that lack color information, all sub-pixels obtained through superimposition include three types of color information. Therefore, any pixel in the composite image includes three types of color information.

In a possible implementation, the photosensitive element senses a spectrum in one wavelength range, n is 2, the plurality of image capturing positions are two image capturing positions, and coordinates of the two image capturing positions are respectively (W/2, H/2) and (s+W/2, s+H/2) in a same coordinate system; W is a quantity of sensing pixels in a width direction of the photosensitive element; and H is a quantity of sensing pixels in a height direction of the photosensitive element.

In this embodiment of this application, the photosensitive element senses the spectrum in one wavelength range, and an image capturing position may be represented by coordinates of a center of the photosensitive element when the photosensitive element performs image capturing at the image capturing position. When n is 2, the plurality of image capturing positions may be two image capturing positions, and coordinates of the two image capturing positions are respectively (W/2, H/2) and (s+W/2, s+H/2) in a same coordinate system, where W is the quantity of sensing pixels in the width direction of the photosensitive element, and H is the quantity of sensing pixels in the height direction of the photosensitive element. In this way, one original image is obtained through sensing at each of the two image capturing positions, so that a total of two original images are obtained. The two original images may be superimposed to obtain the composite image. In the superimposition process, one pixel in an original image is divided into $2\times2$ sub-pixels, so that the resolution of the composite image is greater than the resolution of the original image.

According to a second aspect, an embodiment of this application discloses an image processing apparatus. For beneficial effects, refer to corresponding descriptions of the first aspect. The image processing apparatus includes: an obtaining unit, configured to obtain a plurality of original images, where the plurality of original images are images obtained by separately sensing at a plurality of image capturing positions by using a photosensitive element, and a distance between two image capturing positions with a minimum distance in the plurality of image capturing positions is greater than a distance between any two adjacent sensing pixels in the photosensitive element; and a superimposition unit, configured to superimpose the plurality of original images based on the plurality of image capturing positions, to obtain a composite image, where pixels in the composite image are determined based on sub-pixels obtained through division in a process of superimposing the plurality of original images, and a resolution of the composite image is greater than a resolution of any one of the plurality of original images.

In a possible implementation, the distance s between the two image capturing positions with the minimum distance in the plurality of image capturing positions is $[(a\times n+b)/n]\times d$; a is a positive integer; n is a prime number; $1\le b\le n-1$, and b is an integer; and d is the distance between any two adjacent sensing pixels in the photosensitive element.

In a possible implementation, n is not 2 and $n<f\times(n-1)$, and coordinates of any image capturing position in the plurality of image capturing positions are $(i\times s+W/2, j\times s+H/2)$ in a same coordinate system, where

$$f = \begin{cases} m, & n > m \\ 2n - m, & n < m \end{cases},$$

and m is a remainder of a×n+b divided by 2n; $0 \le i \le n-1$ and $0 \le j \le n-1$, and in any update of (ixs+W/2, j×s+H/2), i and j do not change simultaneously, i and j both change monotonically, and i and j are integers; W is a quantity of sensing pixels in a width direction of the photosensitive element; and H is a quantity of sensing pixels in a height direction of the photosensitive element; and the photosensitive element senses spectrums in three wavelength ranges, where the spectrums in the three wavelength ranges correspond to three types of color information, and that pixels in the composite image are determined based on sub-pixels obtained through division in a process of superimposing the plurality of original images includes: the pixels in the composite image are determined based on first sub-pixels obtained through division in the process of superimposing the plurality of original images, where the first sub-pixel includes the three types of color information.

In a possible implementation, n is 2 or n>f×(n-1), and coordinates of any image capturing position in the plurality of image capturing positions are (i×s+W/2, j×s+H/2) in a same coordinate system, where

$$f = \begin{cases} m, & n > m \\ 2n - m, & n < m \end{cases},$$

and m is a remainder of a×n+b divided by 2n; $0 \le i \le n$ and $0 \le j \le n$, and in any update of (i×s+W/2, j×s+H/2), i and j do not change simultaneously, i and j both change monotonically, and i and j are integers; W is a quantity of sensing pixels in a width direction of the photosensitive element; and H is a quantity of sensing pixels in a height direction of the photosensitive element; and the photosensitive element senses spectrums in three wavelength ranges, where the spectrums in the three wavelength ranges correspond to three types of color information, and that pixels in the composite image are determined based on sub-pixels obtained through division in a process of superimposing the plurality of original images includes: the pixels in the composite image are determined based on first sub-pixels obtained through division in the process of superimposing the plurality of original images, where the first sub-pixel includes the three types of color information.

In a possible implementation, that pixels in the composite image are determined based on sub-pixels obtained through division in a process of superimposing the plurality of original images further includes: the pixels in the composite image are determined based on second sub-pixels obtained through division in the process of superimposing the plurality of original images, where the second sub-pixel lacks one or two of the three types of color information; and any color information lacked by the second sub-pixel is determined based on the any color information of a third sub-pixel, where the third sub-pixel is a sub-pixel obtained through division in the process of superimposing the plurality of original images, and the third sub-pixel is a sub-pixel that is near the second sub-pixel and that includes the any color information.

In a possible implementation, n is 2 or n>f×(n-1), and coordinates of any image capturing position in the plurality of image capturing positions are (i×s+W/2, j×s+H/2) in a same coordinate system, where

$$f = \begin{cases} m, & n > m \\ 2n - m, & n < m \end{cases},$$

and m is a remainder of a×n+b divided by 2n; $0 \le i \le n-1$ and $0 \le j \le n-1$, and in any update of (i×s+W/2, j×s+H/2), i and j do not change simultaneously, i and j both change monotonically, and i and j are integers; W is a quantity of sensing pixels in a width direction of the photosensitive element; and H is a quantity of sensing pixels in a height direction of the photosensitive element; the photosensitive element senses spectrums in three wavelength ranges, where the spectrums in the three wavelength ranges correspond to three types of color information, and that pixels in the composite image are determined based on sub-pixels obtained through division in a process of superimposing the plurality of original images includes: the pixels in the composite image are determined based on first sub-pixels and second sub-pixels obtained through division in the process of superimposing the plurality of original images, where the first sub-pixel includes the three types of color information, and the second sub-pixel lacks one or two of the three types of color information; and any color information lacked by the second sub-pixel is determined based on the any color information of a third sub-pixel, where the third sub-pixel is a sub-pixel obtained through division in the process of superimposing the plurality of original images, and the third sub-pixel is a sub-pixel that is near the second sub-pixel and that includes the any color information.

In a possible implementation, the photosensitive element senses a spectrum in one wavelength range, and coordinates of any image capturing position in the plurality of image capturing positions are (i×s+W/2, j×s+H/2) in a same coordinate system, where $0 \le i \le n-1$ and $0 \le j \le n-1$, and in any update of (i×s+W/2, j×s+H/2), i and j do not change simultaneously, i and j both change monotonically, and i and j are integers; W is a quantity of sensing pixels in a width direction of the photosensitive element; and H is a quantity of sensing pixels in a height direction of the photosensitive element.

In a possible implementation, n is 2, the plurality of image capturing positions are two image capturing positions, and coordinates of the two image capturing positions are respectively (W/2, H/2) and (s+W/2, s+H/2) in a same coordinate system; W is a quantity of sensing pixels in a width direction of the photosensitive element; and H is a quantity of sensing pixels in a height direction of the photosensitive element; the photosensitive element senses spectrums in three wavelength ranges, where the spectrums in the three wavelength ranges correspond to three types of color information, and that pixels in the composite image are determined based on sub-pixels obtained through division in a process of superimposing the plurality of original images includes: the pixels in the composite image are determined based on second sub-pixels obtained through division in the process of superimposing the plurality of original images, where the second sub-pixel lacks one or two of the three types of color information; and any color information lacked by the second sub-pixel is determined based on the any color information of a third sub-pixel, where the third sub-pixel is a sub-pixel obtained through division in the process of superimposing the plurality of original images, and the third sub-pixel is a sub-pixel that is near the second sub-pixel and that includes the any color information.

In a possible implementation, the photosensitive element senses a spectrum in one wavelength range, n is 2, the plurality of image capturing positions are two image capturing positions, and coordinates of the two image capturing positions are respectively (W/2, H/2) and (s+W/2, s+H/2) in a same coordinate system; W is a quantity of sensing pixels in a width direction of the photosensitive element; and H is a quantity of sensing pixels in a height direction of the photosensitive element.

According to a third aspect, an embodiment of this application discloses an image processing apparatus, where the image processing apparatus includes a processor and a photosensitive element, where the processor is configured to: separately sense at a plurality of image capturing positions by using the photosensitive element, to obtain a plurality of original images, where a distance between two image capturing positions with a minimum distance in the plurality of image capturing positions is greater than a distance between any two adjacent sensing pixels in the photosensitive element; and superimpose the plurality of original images based on the plurality of image capturing positions, to obtain a composite image, where pixels in the composite image are determined based on sub-pixels obtained through division in a process of superimposing the plurality of original images, and a resolution of the composite image is greater than a resolution of any one of the plurality of original images.

According to a fourth aspect, an embodiment of this application provides an image processing apparatus, including a processor, a memory, a communication interface, and one or more programs, where the one or more programs are stored in the memory, and are configured to be executed by the processor, and the program includes instructions used to perform the steps in the method in any one of the implementations of the first aspect.

According to a fifth aspect, an embodiment of this application provides an electronic device, including a processor, a memory, a communication interface, and one or more programs, where the one or more programs are stored in the memory, and are configured to be executed by the processor, and the program includes instructions used to perform the steps in the method in any one of the implementations of the first aspect.

According to a sixth aspect, an embodiment of this application provides a chip, including a processor, configured to: invoke a computer program from a memory and run the computer program, so that a device in which the chip is mounted performs the method in any one of the implementations of the first aspect.

According to a seventh aspect, an embodiment of this application provides a computer-readable storage medium, where the computer-readable storage medium includes a computer program, and when the computer program is run on a computer or a processor, the computer or the processor is enabled to perform the method in any one of the implementations of the first aspect to the fourth aspect.

According to an eighth aspect, an embodiment of this application provides a computer program product, where the computer program product includes a computer program, and when the computer program is run on a computer or a processor, the computer or the processor is enabled to perform the method in any one of the implementations of the first aspect.

**BRIEF DESCRIPTION OF DRAWINGS**

The following describes the accompanying drawings used in embodiments of this application.

FIG. 1A is a schematic diagram of a structure of an electronic device according to an embodiment of this application;
FIG. 1B is a schematic diagram of a software structure of an electronic device according to an embodiment of this application;
FIG. 1C is a schematic diagram of a structure of a camera according to an embodiment of this application;
FIG. 2 is a schematic diagram of a photographing user interface according to an embodiment of this application;
FIG. 3 is a schematic diagram of image superimposition according to an embodiment of this application;
FIG. 4 is another schematic diagram of image superimposition according to an embodiment of this application;
FIG. 5 is a schematic diagram of a composite image according to an embodiment of this application;
FIG. 6 is a schematic diagram of a user interface of an album according to an embodiment of this application;
FIG. 7 is a schematic flowchart of an image processing method according to an embodiment of this application;

FIG. 8A to FIG. 8D are schematic diagrams of possible values of i and j according to an embodiment of this application;

FIG. 9 is a tree diagram of values of i and j when $n<f\times(n-1)$ and n is 3 according to an embodiment of this application;

FIG. 10 is a schematic diagram of a coordinate system according to an embodiment of this application;

FIG. 11 is a tree diagram of values of i and j when $n>f\times(n-1)$ and n is 3 according to an embodiment of this application;

FIG. 12 is a schematic diagram of another coordinate system according to an embodiment of this application;

FIG. 13 is a schematic diagram of a photosensitive element according to an embodiment of this application;

FIG. 14 is a schematic diagram of division of sensing sub-pixels in a photosensitive element according to an embodiment of this application;

FIG. 15 is a schematic diagram of dividing sub-pixels in a row direction of an image according to an embodiment of this application;

FIG. 16 is another schematic diagram of dividing sub-pixels in a row direction of an image according to an embodiment of this application;

FIG. 17 is a schematic diagram of dividing sub-pixels in a column direction of an image according to an embodiment of this application;

FIG. 18 is another schematic diagram of dividing sub-pixels in a column direction of an image according to an embodiment of this application;

FIG. 19 is a schematic diagram of image synthesis according to an embodiment of this application;

FIG. 20 is another schematic diagram of division of sensing sub-pixels in a photosensitive element according to an embodiment of this application;

FIG. 21 is still another schematic diagram of dividing sub-pixels in a row direction of an image according to an embodiment of this application;

FIG. 22 is yet another schematic diagram of dividing sub-pixels in a row direction of an image according to an embodiment of this application;

FIG. 23 is still another schematic diagram of division of sensing sub-pixels in a photosensitive element according to an embodiment of this application;

FIG. 24 is yet another schematic diagram of dividing sub-pixels in a row direction of an image according to an embodiment of this application;

FIG. 25 is yet another schematic diagram of dividing sub-pixels in a row direction of an image according to an embodiment of this application;

FIG. 26 is yet another schematic diagram of dividing sub-pixels in a row direction of an image according to an embodiment of this application;

FIG. 27 is yet another schematic diagram of dividing sub-pixels in a row direction of an image according to an embodiment of this application;

FIG. 28 is a schematic diagram of an original image according to an embodiment of this application;

FIG. 29 is a schematic diagram of another original image according to an embodiment of this application;

FIG. 30 is a schematic diagram of superimposition of original images according to an embodiment of this application;

FIG. 31 is another schematic diagram of image synthesis according to an embodiment of this application; and

FIG. 32 is a schematic diagram of a structure of an image processing apparatus according to an embodiment of this application.

## DESCRIPTION OF EMBODIMENTS

To enable a person skilled in the art to better understand solutions of this application, the following clearly and completely describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

The terms "include", "have", and any other variant thereof in this specification, claims, and the accompanying drawings of this application, are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

"Embodiment" mentioned in this specification means that a particular feature, structure, or feature described with reference to the embodiments may be included in at least one embodiment of this application. The phrase shown in various locations in this specification may not necessarily refer to a same embodiment, and is not an independent or optional embodiment exclusive from another embodiment. It is explicitly and implicitly understood by a person skilled in the art that embodiments described in this specification may be combined with another embodiment.

First, an example electronic device provided in the following embodiments of this application is described.

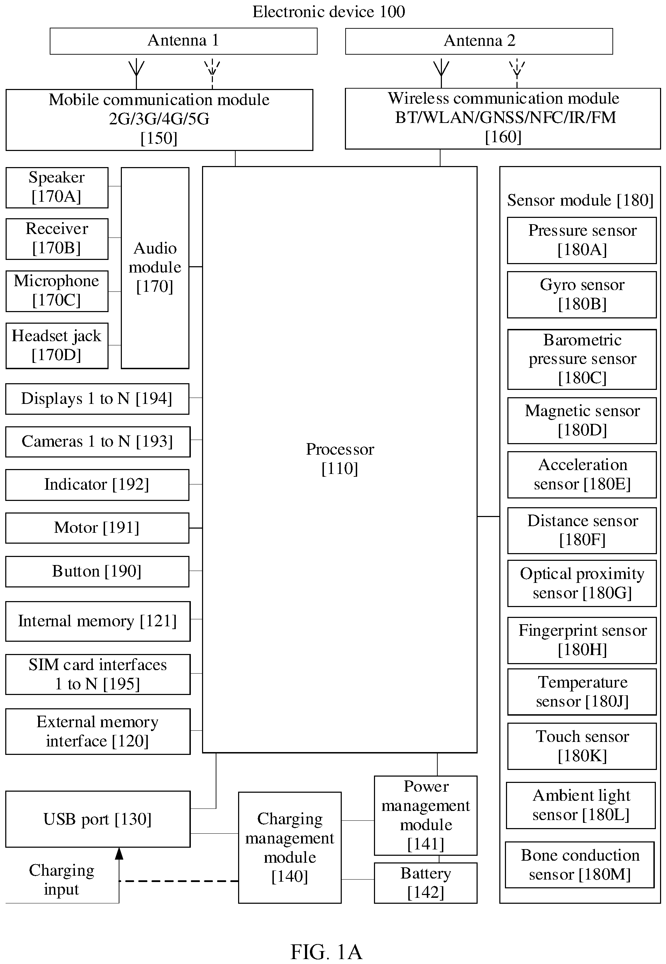

FIG. 1A is a schematic diagram of a structure of an electronic device 100 according to an embodiment of this application.

The electronic device 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the electronic device 100. In some other embodiments of this application, the electronic device 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU), and the like. Different processing units may be independent components, or may be integrated into one or more processors.

The controller may be a nerve center and a command center of the electronic device 100. The controller may generate an operation control signal based on instruction operation code and a timing signal, to control instruction fetching and instruction execution.

A memory may be further disposed in the processor 110, and is configured to store instructions and data. In some embodiments, the memory in the processor 110 is a cache. The memory may store instructions or data that has just been used or cyclically used by the processor 110. If the processor 110 needs to use the instructions or the data again, the processor may directly invoke the instructions or the data from the memory. This avoids repeated access, reduces waiting time of the processor 110, and therefore improves system efficiency.

In some embodiments, the processor 110 may include one or more interfaces. The interfaces may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

It may be understood that the interface connection relationship between the modules that is shown in this embodiment of the present invention is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from a charger. The charger may be a wireless charger or a wired charger. In some embodiments of wired charging, the charging management module 140 may receive a charging input from a wired charger by using the USB port 130. In some embodiments of wireless charging, the charging management module 140 may receive a wireless charging input by using a wireless charging coil of the electronic device 100. The charging management module 140 may further supply power to the electronic device by using the power management module 141 while charging the battery 142.

The power management module 141 is configured to connect to the battery 142, the charging management module 140, and the processor 110. The power management module 141 receives an input of the battery 142 and/or the charging management module 140, and supplies power to the processor 110, the internal memory 121, an external memory, the display 194, the camera 193, the wireless communication module 160, and the like. The power management module 141 may be further configured to monitor parameters such as a battery capacity, a quantity of battery cycles, and a battery health status (electric leakage and impedance). In some other embodiments, the power management module 141 may alternatively be disposed in the processor 110. In some other embodiments, the power management module 141 and the charging management module 140 may alternatively be disposed in a same component.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal.

Each antenna in the electronic device 100 may be configured to cover one or more communication frequency bands. Different antennas may be further multiplexed, to improve antenna utilization. For example, the antenna 1 may be multiplexed as a diversity antenna in a wireless local area network. In some other embodiments, an antenna may be used in combination with a tuning switch.

The mobile communication module 150 may provide a wireless communication solution that includes 2G/3G/4G/5G or the like and that is applied to the electronic device 100. The mobile communication module 150 may include at least one filter, a switch, a power amplifier, a low noise amplifier (low noise amplifier, LNA), and the like. The mobile communication module 150 may receive an electromagnetic wave by using the antenna 1, perform processing such as filtering and amplification on the received electromagnetic wave, and transmit the electromagnetic wave to the modem processor for demodulation. The mobile communication module 150 may further amplify a signal modulated by the modem processor, and convert the signal into an electromagnetic wave for radiation by using the antenna 1. In some embodiments, at least some functional modules in the mobile communication module 150 may be disposed in the processor 110. In some embodiments, at least some functional modules of the mobile communication module 150 may be disposed in a same component as at least some modules of the processor 110.

The modem processor may include a modulator and a demodulator. In some embodiments, the modem processor may be an independent component. In some other embodiments, the modem processor may be independent of the processor 110, and disposed in a same component as the mobile communication module 150 or another functional module.

The wireless communication module 160 may provide a solution applied to the electronic device 100 for wireless communication including wireless local area networks (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more components integrating at least one communication processing module. The wireless communication module 160 receives an electromagnetic wave by using the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the to-be-sent signal, and convert the signal into an electromagnetic wave for radiation by using the antenna 2.

In some embodiments, in the electronic device 100, the antenna 1 is coupled to the mobile communication module 150, and the antenna 2 is coupled to the wireless communication module 160, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, GNSS, WLAN, NFC, FM, and/or IR technologies, and the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or satellite based augmentation systems (satellite based augmentation systems, SBAS).

The electronic device 100 implements a display function by using the GPU, the display 194, the application processor, and the like. The GPU is a microprocessor for image processing, and is connected to the display 194 and the application processor. The GPU is configured to: perform mathematical and geometric calculation, and render an image. The processor 110 may include one or more GPUs that execute program instructions to generate or change display information.

The display 194 is configured to display an image, a video, or the like. The display 194 includes a display panel. The display panel may use a liquid crystal display (liquid crystal display, LCD), an organic light-emitting diode (organic light-emitting diode, OLED), an active-matrix organic light emitting diode or an active-matrix organic light emitting diode (active-matrix organic light emitting diode, AMOLED), a flex light-emitting diode (flex light-emitting diode, FLED), a MiniLED, a MicroLED, a Micro-OLED, a quantum dot light emitting diode (quantum dot light emitting diodes, QLED), or the like. In some embodiments, the electronic device 100 may include one or N displays 194, where N is a positive integer greater than 1.

The electronic device 100 may implement a shooting function by using the ISP, the camera 193, the video codec, the GPU, the display 194, the application processor, and the like.

The ISP is configured to process data fed back by the camera 193. For example, when photographing is performed, a shutter is opened, light is transmitted to a camera photosensitive element through a lens, an optical signal is converted into an electrical signal, and the camera photosensitive element transmits the electrical signal to the ISP for processing, and the electrical signal is converted into an image visible to naked eyes. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated by using the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts the optical signal into an electrical signal, and then transmits the electrical signal to the ISP for conversion into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 performs frequency selection, the digital signal processor is configured to perform Fourier transform and the like on frequency energy.

The video codec is configured to compress or decompress a digital video. The electronic device 100 may support one or more video codecs. In this way, the electronic device 100 may play or record videos in a plurality of encoding formats, for example, moving picture experts group (moving picture experts group, MPEG) 1, MPEG 2, MPEG 3, and MPEG 4.

The NPU is a neural-network (neural-network, NN) computing processor. By drawing on a structure of a biological neural network, for example, by drawing on a transmission mode between human brain neurons, the NPU quickly processes input information, and may further continuously perform self-learning. An application such as intelligent cognition, for example, image recognition, facial recognition, speech recognition, or text understanding of the electronic device 100 may be implemented by using the NPU.

The external memory interface 120 may be configured to connect to an external memory card, for example, a Micro SD card, to expand a storage capability of the electronic device 100. The external memory card communicates with the processor 110 by using the external memory interface 120, to implement a data storage function. For example, files such as music and a video are stored in the external memory card.

The internal memory 121 may be configured to store computer-executable program code. The executable program code includes instructions. The processor 110 implements various function applications and data processing of the electronic device 100 by running the instructions stored in the internal memory 121. The internal memory 121 may include a program storage area and a data storage area. The program storage area may store an operating system, an application used for at least one function (for example, a sound playing function or an image playing function), and the like. The data storage area may store data (such as audio data and an address book) and the like that are created during use of the electronic device 100. In addition, the internal memory 121 may include a high-speed random access memory, and may further include a non-volatile memory, for example, at least one disk storage device, a flash memory device, and a universal flash storage (universal flash storage, UFS).

The electronic device 100 may implement an audio function, for example, music playing and recording, by using the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to code and decode an audio signal. In some embodiments, the audio module 170 may be disposed in the processor 110, or some functional modules of the audio module 170 are disposed in the processor 110.

The speaker 170A, also referred to as a "loudspeaker", is configured to convert an audio electrical signal into a sound signal. The electronic device 100 may listen to music or answer a hands-free call by using the speaker 170A.

The receiver 170B, also referred to as an "earpiece", is configured to convert an electrical audio signal into a sound signal. When the electronic device 100 answers a call or receives voice information, the receiver 170B may be put close to a human ear to listen to voice.

The microphone 170C, also referred to as a "mike" or a "mic", is configured to convert a sound signal into an electrical signal. When making a call or sending voice information, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and further implement a noise reduction function. In some other embodiments, three, four, or more microphones 170C may alternatively be disposed in the electronic device 100, to collect a sound signal, implement noise reduction, and identify a sound source, to implement a directional recording function and the like.

The headset jack 170D is configured to connect to a wired headset. The headset jack 170D may be a USB port 130, or may be a 3.5 mm open mobile electronic device platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and may convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on a capacitance change. When a touch operation is performed on the display 194, the electronic device 100 detects intensity of the touch operation based on the pressure sensor 180A. The electronic device 100 may also calculate a touch position based on a detection signal of the pressure sensor 180A. In some embodiments, touch operations performed at a same touch position but having different touch operation intensity may correspond to different operation instructions. For example, when a touch operation whose touch operation intensity is less than a first pressure threshold is performed on an icon of the application Messages, an instruction for viewing an SMS message is executed. When a touch operation whose touch operation intensity is greater than or equal to the first pressure threshold is performed on the icon of the application Messages, an instruction for creating a new SMS message is executed.

The gyro sensor 180B may be configured to determine a motion posture of the electronic device 100.

The barometric pressure sensor 180C is configured to measure barometric pressure.

The magnetic sensor 180D includes a Hall sensor.

The acceleration sensor 180E may detect magnitudes of accelerations of the electronic device 100 in various directions (generally three axes). When the electronic device 100 is still, a magnitude and a direction of gravity may be detected. The acceleration sensor 180E may be further configured to recognize a posture of the electronic device, and is used in an application such as switching between a landscape mode and a portrait mode or a pedometer.

The distance sensor 180F is configured to measure a distance.

The optical proximity sensor 180G may include, for example, a light emitting diode (LED) and an optical detector, such as a photodiode.

The ambient light sensor 180L is configured to sense ambient luminance.

The fingerprint sensor 180H is configured to acquire a fingerprint. The electronic device 100 may implement, by using an acquired fingerprint characteristic, fingerprint unlocking, accessing an application lock, fingerprint photographing, answering an incoming call by using a fingerprint, and the like.

The temperature sensor 180J is configured to detect a temperature. In some embodiments, the electronic device 100 executes a temperature processing policy based on the temperature detected by the temperature sensor 180J.

The touch sensor 180K is also referred to as a "touch panel". The touch sensor 180K may be disposed on the display 194, and the touch sensor 180K and the display 194 form a touchscreen, also referred to as a "touch screen". The touch sensor 180K is configured to detect a touch operation performed on or near the touch sensor 180K. The touch sensor may transfer the detected touch operation to the application processor, to determine a type of a touch event. A visual output related to the touch operation may be provided by using the display 194. In some other embodiments, the touch sensor 180K may alternatively be disposed on a surface of the electronic device 100, and at a position different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a human pulse, and receive a blood pressure beating signal. In some embodiments, the bone conduction sensor 180M may alternatively be disposed in the headset, to constitute a bone conduction headset. The audio module 170 may parse out a voice signal based on the vibration signal that is of the vibration bone of the vocal-cord part and that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive a key input, and generate a key signal input related to user settings and function control of the electronic device 100.

The motor 191 may generate a vibration prompt. The motor 191 may be used for an incoming vibration prompt, or may be used for touch vibration feedback. For example, touch operations performed on different applications (for example, photographing and audio playing) may correspond to different vibration feedback effects. For touch operations performed on different regions of the display 194, the motor 191 may also correspond to different vibration feedback effects. Different application scenarios (for example, time reminding, information receiving, an alarm clock, and a game) may also correspond to different vibration feedback effects.

A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be simultaneously inserted into a same SIM card interface 195. The plurality of cards may be of a same type or of different types. The SIM card interface 195 is compatible with different types of SIM cards. The SIM card interface 195 is also compatible with an external memory card. The electronic device 100 interacts with a network by using the SIM card, to implement functions such as calling and data communication. In some embodiments, the electronic device 100 uses an eSIM, that is, an embedded SIM card. The eSIM card may be embedded into the electronic device 100, and cannot be separated from the electronic device 100.

A software system of the electronic device 100 may use a layered architecture, an event-driven architecture, a microkernel architecture, a microservice architecture, or a cloud architecture. In an embodiment of the present invention, a software structure of the electronic device 100 is described by using an Android system with a layered architecture as an example.

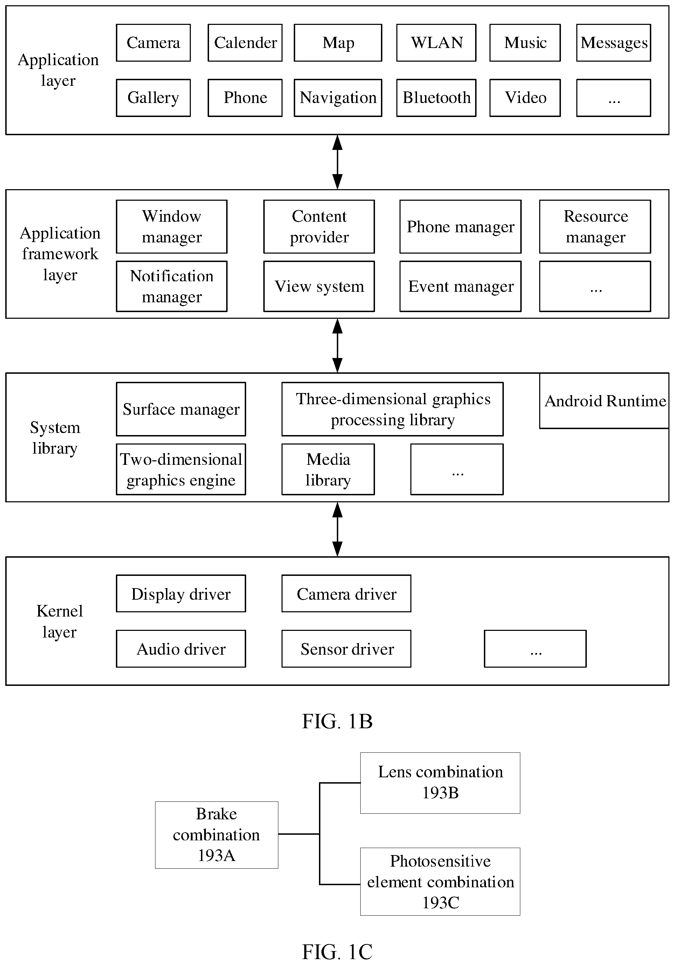

FIG. 1B is a schematic diagram of a software structure of an electronic device 100 according to an embodiment of this application.

In a layered architecture, software is divided into several layers, and each layer has a clear role and task. The layers communicate with each other by using a software interface. In some embodiments, the Android system is divided into four layers: an application layer, an application framework layer, an Android Runtime (Android Runtime) and system library, and a kernel layer from top to bottom.

The application layer may include a series of application packages.

As shown in FIG. 1B, the application packages may include applications such as Camera, Gallery, Calendar, Phone, Map, Navigation, WLAN, Bluetooth, Music, Video, and Messages.

The application framework layer provides an application programming interface (application programming interface, API) and a programming framework for an application of the application layer. The application framework layer includes some predefined functions.

As shown in FIG. 1B, the application framework layer may include a window manager, a content provider, a view system, a phone manager, a resource manager, a notification manager, an event manager, and the like.

The window manager is configured to manage a window program. The window manager may obtain a size of a display, determine whether there is a status bar, perform screen locking, take a screenshot, and the like.

The content provider is configured to: store and obtain data, and enable the data to be accessible by an application. The data may include a video, an image, audio, calls made and answered, a browse history and a bookmark, a personal address book, and the like.

The view system includes a visual control, for example, a control for displaying text or a control for displaying a picture. The view system may be configured to construct an application. A display interface may include one or more views. For example, a display interface including a notification icon of Messages may include a text display view and a picture display view.

The phone manager is configured to provide a communication function for the electronic device 100, for example, call status management (including call connection and disconnection, and the like).

The resource manager provides various resources for an application, such as a localized string, an icon, a picture, a layout file, and a video file.

The notification manager enables an application to display, in the status bar, notification information, which may be used for conveying a notification-type message that may automatically disappear after a short stay without user interaction. For example, the notification manager is configured to: notify download completion, provide a message prompt, and the like. The notification manager may alternatively be a notification that appears in a top status bar of the system in a form of a graph or scroll bar text, for example, a notification of an application running on the background or a notification that appears on the screen in a form of a dialog window. For example, text information is prompted in the status bar, a prompt tone is issued, an electronic device vibrates, or an indicator flashes.

The event manager may be configured to: when a first control mode is enabled, determine whether touch coordinates of a touch operation of a user are within a first region. If the touch coordinates of the touch operation of the user are within the first region, an event of the touch operation is reported to the application layer; or if the touch coordinates of the touch operation of the user are not within the first region, no processing is performed on the touch operation.

The Android Runtime includes a kernel library and a virtual machine. The Android Runtime is responsible for scheduling and management of the Android system.

The core library includes two parts: a function that needs to be invoked in java language and a core library of Android.

The application layer and the application framework layer run in the virtual machine. The virtual machine executes java files at the application layer and the application framework layer as binary files. The virtual machine is configured to execute functions such as object life cycle management, stack management, thread management, security and exception management, and garbage collection.

The system library may include a plurality of functional modules, for example, a surface manager (surface manager), a media library (media libraries), a three-dimensional graphics processing library (for example, an OpenGL ES), a 2D graphics engine (for example, an SGL), and the like.

The surface manager is configured to: manage a display subsystem, and provide a fusion of 2D and 3D layers for a plurality of applications.

The media library supports playback and recording of a plurality of common audio and video formats, a still image file, and the like. The media library may support a plurality of audio and video coding formats, for example, MPEG 4, H.264, MP3, AAC, AMR, JPG, and PNG.

The three-dimensional graphics processing library is configured to implement three-dimensional graphics drawing, image rendering and synthesis, layer processing, and the like.

The 2D graphics engine is a drawing engine for 2D drawing. The kernel layer is a layer between hardware and software. The kernel layer includes at least a display driver, a camera driver, an audio driver, and a sensor driver.

With reference to a captured photographing scenario, a working procedure of software and hardware of the electronic device 100 when the first control mode is enabled is described below as an example.

If the first control mode is enabled, when the touch sensor 180K receives a touch operation, corresponding hardware interruption is sent to the kernel layer. The kernel layer processes the touch operation into an original input event (including information such as touch coordinates and a timestamp of the touch operation). The original input event is stored at the kernel layer. The application framework layer obtains the original input event from the kernel layer, and the event manager determines whether the touch coordinates are in the first region. If the touch coordinates are in the first region, a control corresponding to the original input event is recognized. For example, the touch operation is a touch tapping operation, and a control corresponding to the tapping operation is a control of an icon of the application Camera. The application Camera invokes an interface of the application framework layer, and the application Camera is started, so that a camera driver is started by invoking the kernel layer, and a static image or a video is captured by using the camera 193. If the touch coordinates are not in the first region, no processing is performed on the original input event.

FIG. 1C is a schematic diagram of a structure of a camera according to an embodiment of this application. As shown in FIG. 1C, a camera 193 includes a brake combination 193A, a lens combination 193B, and a photosensitive element combination 193C.

The lens combination 193B includes at least one lens and at least one lens holder. An optical axis of the lens is perpendicular to a plane in which sensing pixels in the photosensitive element combination 193C are located, and is disposed in the lens holder. The lens holder is configured to: carry the lens and support movement of the lens relative to the photosensitive element combination 193C.

The brake combination 193A has a capability of moving a relative position between the photosensitive element combination 193C and the lens combination 193B in at least two directions in the plane perpendicular to the optical axis of the lens. The capability of the brake combination 193A to move the relative position between the photosensitive element combination 193C and the lens combination 193B in the at least two directions in the plane perpendicular to the optical axis includes a capability of moving in two directions orthogonal to each other at the same time and a capability of rotating around the optical axis in the plane perpendicular to the optical axis. When the brake combination 193A moves the relative position between the photosensitive element combination 193C and the lens combination 193B, a moving target of the brake combination 193A may be the photosensitive element combination 193C, or may be the lens combination 193B. When the brake combination 193A moves the relative position between the photosensitive element combination 193C and the lens combination 193B, a brake force generated by the brake combination 193A may be an electromagnetic force, an electrostatic force, a stress generated due to a temperature change of a brake material, or the like.

The photosensitive element combination 193C includes at least one photosensitive element and at least one chip holder. The photosensitive element is configured to sense light that penetrates through a lens and reaches the sensing pixels. The chip holder provides at least a structure for carrying the photosensitive element and a function of supporting the brake combination 193A in moving the relative position between the photosensitive element combination 193C and the lens combination 193B. The sensing pixels of the photosensitive element may be sensing pixels that sense a same spectrum. Alternatively, at any position of the photosensitive element, four adjacent $2\times2$ sensing pixels are used as one spectrum sensing unit, and adjacent and regularly repeatedly arranged spectrum sensing units form an integral photosensitive element. The four sensing pixels in the spectrum sensing unit may sense spectrums in three or four wavelength ranges.

A total quantity of times of movement of the brake combination 193A, a movement distance of each movement of the relative position, a dwell time after moving to a position, a movement time from one position to another position, and another related parameter of the brake combination 193A may be set based on a requirement.

After the brake combination 193A moves to a position, a quantity of times of image capturing of the photosensitive element, an exposure time of each time of image capturing, and another related parameter of the photosensitive element may be set based on a requirement.

Second, an application scenario that embodiments of this application may involve is described by using examples.

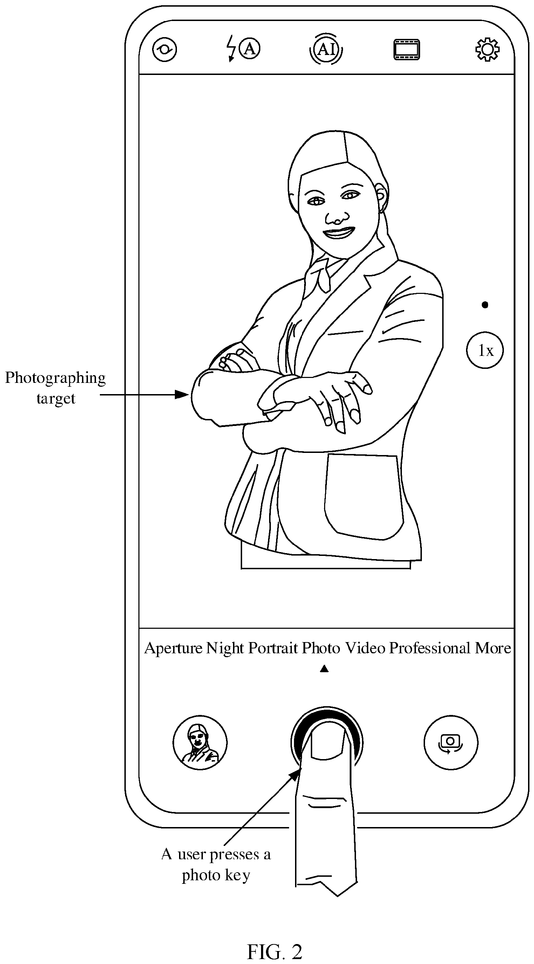

FIG. 2 is a schematic diagram of a photographing user interface (user interface, UI) according to an embodiment of this application. As shown in FIG. 2, a user acquires an image of a photographing target by using an electronic device. The user starts a photographing function of the electronic device, and the photographing interface is displayed on a screen of the electronic device. After a camera of the electronic device is aligned with the photographing target, when the user presses a photographing button of the photographing interface of the electronic device by using a finger, the electronic device acquires the image of the photographing target by using the camera. Manners in which the electronic device acquires the image of the photographing target by using the camera are as follows:

Example manner 1: First, before the brake combination controls the photosensitive element or the lens to move, the photosensitive element obtains at least one original image through sensing at an initial position. Then, the brake combination controls the photosensitive element or the lens to first move in one of the two directions that are orthogonal to each other in the plane perpendicular to the optical axis of the lens. When moving in the one of the directions, the brake stays at a specific position for a time period each time the brake moves to the specific position, and the photosensitive element senses at least one original image at the specific position until movement in the one direction ends. After the movement in the one direction ends, the brake starts to move in the other direction. When moving in the other direction, similarly, the brake stays at a specific position for a time period each time the brake moves to the specific position, and the photosensitive element senses at least one original image at the specific position until the movement in the other direction ends.

After image capturing in the two directions that are orthogonal to each other ends, the electronic device superimposes, in a same plane based on respective image capturing positions of the original images, all the original images obtained through image capturing. In the superimposition process, pixels in the original images are divided into sub-pixels, and the sub-pixels are used as pixels to obtain a composite image.

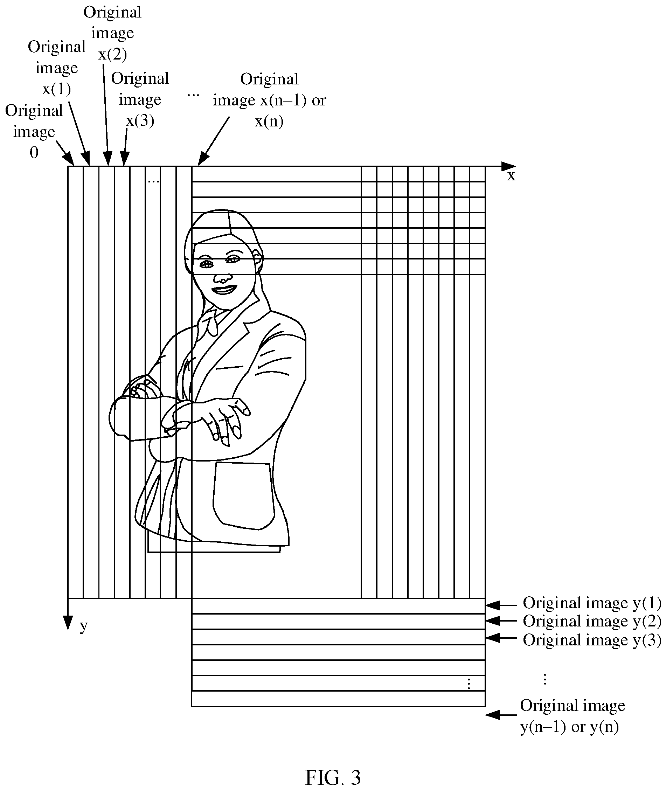

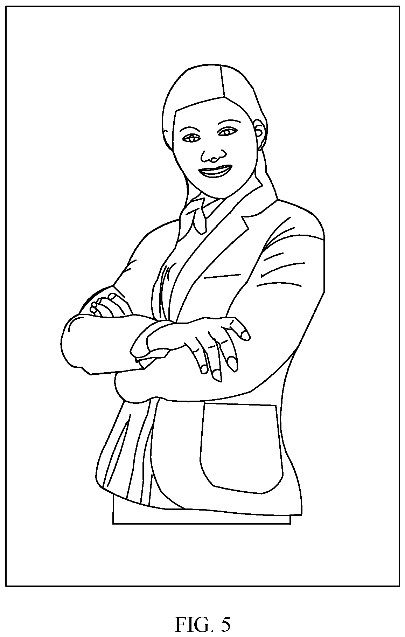

For example, as shown in FIG. 3, the two directions that are orthogonal to each other in the plane perpendicular to the optical axis of the lens are an x direction and a y direction. First, the photosensitive element obtains an original image 0 through sensing at the initial position. Then, the brake combination controls the photosensitive element or the lens to first move in the x direction. When moving in the x direction, the photosensitive element obtains an original image through sensing separately at n-1 or n positions, to obtain a total of n-1 or n original images during movement in the x direction. After the movement in the x direction ends, the brake combination controls the photosensitive element or the lens to move in the y direction. When moving in the y direction, the photosensitive element obtains an original image through sensing at n-1 or n positions, to obtain a total of n-1 or n original images during movement in the y direction. After a plurality of times of image capturing, 2n-1 or 2n+1 original images may be obtained. The electronic device superimposes the 2n-1 or 2n+1 original images in a same plane based on respective image capturing positions of the original images. In the superimposition process, pixels in the original images are divided into sub-pixels, and the sub-pixels are used as pixels to obtain a composite image. The composite image is shown in FIG. 5.

Example manner 2: First, before the brake combination controls the photosensitive element or the lens to move, the photosensitive element obtains at least one original image through sensing at the initial position. Then, the brake combination controls the photosensitive element or the lens to move at a same rate simultaneously in the two directions that are orthogonal to each other in the plane perpendicular to the optical axis of the lens. The photosensitive element senses at least one original image at a specific position each time the photosensitive element moves to the specific position, until the movement ends.

After image capturing ends, the electronic device superimposes, in a same plane based on respective image capturing positions of the original images, all the original images obtained through image capturing. In the superimposition process, pixels in the original images are divided into sub-pixels, and the sub-pixels are used as pixels to obtain a composite image.

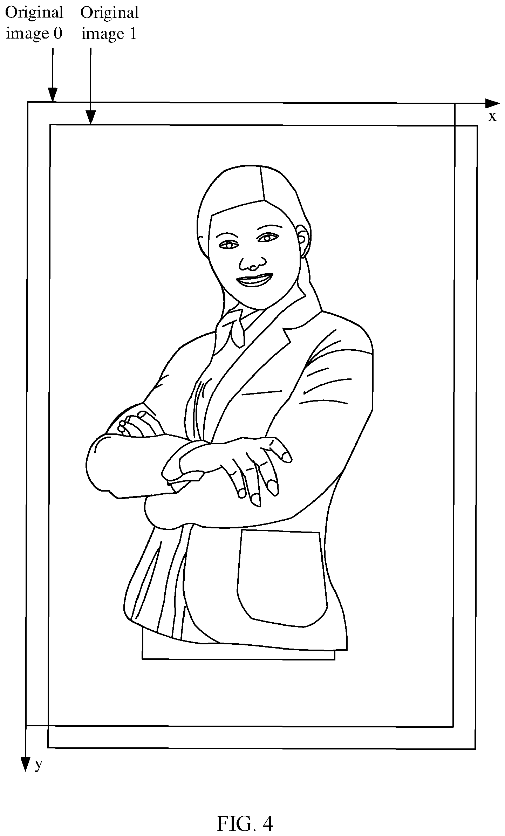

For example, as shown in FIG. 4, the two directions that are orthogonal to each other in the plane perpendicular to the optical axis of the lens are an x direction and a y direction. First, the photosensitive element obtains an original image 0 through sensing at the initial position. Then, the brake combination controls the photosensitive element or the lens to first move at a same rate simultaneously in the x direction and the y direction. When moving to a position, the photosensitive element obtains an original image 1 through sensing at the position. After two times of image capturing, two original images may be obtained. The electronic device superimposes the two original images in a same plane based on respective image capturing positions of the original images. In the superimposition process, pixels in the original images are divided into sub-pixels, and the sub-pixels are used as pixels to obtain a composite image. The composite image is shown in FIG. 5.

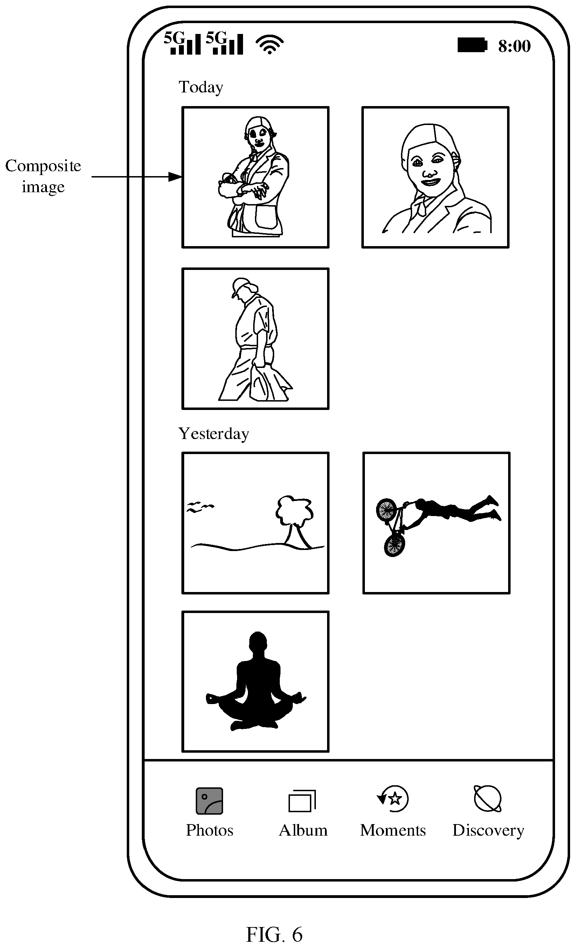

The foregoing composite image may be considered as an image that is of the photographing target and that is acquired by the camera. After acquiring the image of the photographing target in the foregoing example manners, the electronic device stores the composite image, and then the composite image exists in an album of the electronic device. As shown in FIG. 6, an image that is of the photographing target, that is acquired by the camera, and that is displayed on a user interface of the album is the composite image.

The following describes the technical solutions provided in this application with reference to specific implementations.

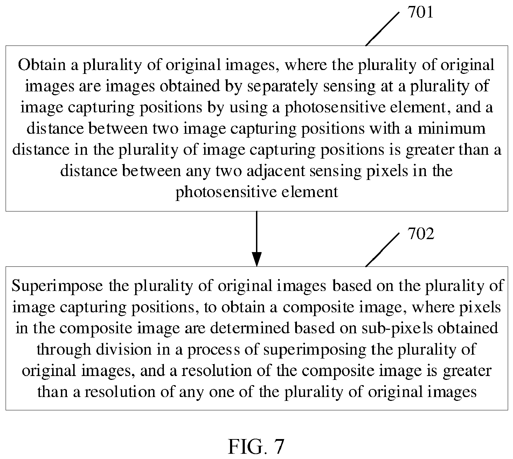

FIG. 7 is a schematic flowchart of an image processing method according to an embodiment of this application. The image processing method may be performed by an electronic device. The image processing method includes but is not limited to the following steps.

701: Obtain a plurality of original images, where the plurality of original images are images obtained by separately sensing at a plurality of image capturing positions by using a photosensitive element, and a distance between two image capturing positions with a minimum distance in the plurality of image capturing positions is greater than a distance between any two adjacent sensing pixels in the photosensitive element.

702: Superimpose the plurality of original images based on the plurality of image capturing positions, to obtain a composite image, where pixels in the composite image are determined based on sub-pixels obtained through division in a process of superimposing the plurality of original images, and a resolution of the composite image is greater than a resolution of any one of the plurality of original images.

In this embodiment of this application, sensing is separately performed at the plurality of image capturing positions by using the photosensitive element, and one original image is obtained through sensing at each image capturing position. In this way, the plurality of original images may be obtained through sensing at the plurality of image capturing positions, and the plurality of image capturing positions are in a one-to-one correspondence with the plurality of original images. Then, the plurality of original images are superimposed based on the plurality of image capturing positions during sensing, that is, the plurality of original images are superimposed in a same coordinate system (or plane) in a staggered manner, and when the plurality of original images are superimposed in a same coordinate system (or plane), any one of the plurality of original images is stacked at a corresponding image capturing position. In a process of superimposing the plurality of original images, one pixel in any original image is divided into a plurality of sub-pixels, and sub-pixels obtained through division in the superimposition process may be used as pixels to form the composite image. In this way, one pixel in the original image corresponds to a plurality of pixels in the composite image.

Therefore, the resolution of the composite image is greater than the resolution of any one of the plurality of original images. Because the distance between the two image capturing positions with the minimum distance in the plurality of image capturing positions is greater than the distance between any two adjacent sensing pixels in the photosensitive element, that is, a minimum distance of each movement of the photosensitive element during image capturing is greater than the distance between any two adjacent sensing pixels in the photosensitive element, a requirement on a precision level of a brake is not high. An existing brake moves to capture an image and then images are superimposed, so that an image resolution can be effectively improved. It should be noted that, a size of the composite image may be the same as a size of the original image, and the size of the composite image may alternatively be slightly less than the size of the original image. This is because the plurality of original images are superimposed in a staggered manner, and a non-overlapping region inevitably exists. For the non-overlapping region, pixels in the original image are not divided into sub-pixels, and the pixels in the original image may be directly used as pixels of the composite image. In this case, pixels in the composite image come from a non-overlapping region and the non-overlapping region, and the size of the composite image is the same as the size of the original image. In the composite image, a quantity of pixels of the original image that are directly used as pixels of the composite image is far less than a total quantity of pixels of the composite image. Therefore, impact on (application of) the composite image may be ignored. If the pixels in the composite image come only from the overlapping region, in this case, the size of the composite image is slightly less than the size of the original image. It should be further noted that, compared with the conventional technology in which the minimum distance of each movement of the photosensitive element is less than the distance between two adjacent pixels, in this embodiment of this application, the minimum distance of each movement of the photosensitive element is greater than the distance between two adjacent pixels. Therefore, in this embodiment of this application, an area of the non-overlapping region caused by superimposition of the original images in a staggered manner is greater than that in the conventional technology. To be specific, a quantity of pixels in the original image that are not divided into sub-pixels in this embodiment of this application is greater than that in the conventional technology. However, compared with the conventional technology, the quantity of the pixels in the added part that are not divided into sub-pixels is far less than the total quantity of pixels of the composite image. Even if the pixels in the added part that are not divided into sub-pixels are directly used as pixels of the composite image, impact brought by this on (application of) the composite image can still be ignored. It should be understood that, any sensing pixel in the photosensitive element can sense only a spectrum in one wavelength range, and the original image is an image obtained by the photosensitive element through direct sensing. Therefore, any pixel in the original image includes only one type of color information. When the photosensitive element senses only a spectrum in one wavelength range, that is, when all sensing pixels in the photosensitive element sense a spectrum in a same wavelength range, all pixels in the original image are of a same color. When the photosensitive element senses spectrums in three wavelength ranges, for example, four adjacent $2\times2$ sensing pixels are used as one spectrum sensing unit, and adjacent and regularly repeatedly arranged spectrum sensing units form an integral photosensitive element, the four sensing pixels in the spectrum sensing unit may sense spectrums in three wavelength ranges, that is, the four sensing pixels in the spectrum sensing unit may sense spectrums of three colors. Therefore, the original image includes pixels of three colors, and color arrangements of all pixels in the original image correspond to the arrangement of the spectrum sensing units in the photosensitive element. When the photosensitive element senses spectrums in three wavelength ranges, most pixels in the composite image are sub-pixels obtained through division in the superimposition process, and each sub-pixel is superimposed with three colors in the superimposition process. Therefore, most pixels in the composite image include three types of color information. In the composite image, the pixels of the original image that are directly used as pixels of the composite image include only one type of color information, and a quantity of pixels of this part is far less than the total quantity of pixels in the composite image, and may be ignored. Therefore, it may be considered that any pixel in the composite image includes three types of color information. For ease of description, it is considered in the following by default that any pixel in the composite image includes three types of color information. In conclusion, in this embodiment of this application, a spatial resolution and a color resolution of an image can be effectively improved.

In a possible implementation, the distance s between the two image capturing positions with the minimum distance in the plurality of image capturing positions is $[(a\times n+b)/n]\times d$; a is a positive integer; n is a prime number; $1\leq b\leq n-1$, and b is an integer; and d is the distance between any two adjacent sensing pixels in the photosensitive element.

Specifically, this embodiment of this application provides a solution for improving an image resolution. The solution may be implemented by using a brake whose moving precision is greater than the distance between two adjacent sensing pixels in the photosensitive element. It is assumed that the distance between two adjacent sensing pixels in the photosensitive element is d, that is, a size of one pixel (pixel size) is $d\times d$, and a total quantity of sensing pixels (pixel number) in the photosensitive element is $H\times W$, where H is a quantity of sensing pixels in a height direction of the photosensitive element, and W is a quantity of sensing pixels in a width direction of the photosensitive element. A minimum distance of each movement of the photosensitive element is s, where $s=[(a\times n+b)/n]\times d$. In the foregoing formula, n is a prime number far less than H or W, and n may be selected based on a multiple of a resolution that needs to be increased, for example, n may be 2, 3, 5, or 7; a is a positive integer; b is an integer greater than or equal to 1 and less than or equal to n-1; and values of a and b may be selected based on controllable precision of the brake.

In this embodiment of this application, the distance s between the two image capturing positions with the minimum distance in the plurality of image capturing positions is $[(a\times n+b)/n]\times d$, that is, the minimum distance s of each movement of the photosensitive element during image capturing is $(a+b/n)\times d$. Because $1\leq b\leq n-1$, b/n is a fraction; and a is a positive integer, and therefore, a+b/n is greater than 1 and a+b/n is not an integer. In this way, the minimum distance s of each movement of the photosensitive element during image capturing may be greater than the distance d between any two adjacent sensing pixels in the photosensitive element, and s is not an even-numbered multiple of d. In this embodiment of this application, the plurality of original images are superimposed in a staggered manner, a pixel in an original image needs to be divided into a plurality of sub-pixels, and during superimposition, pixels in different original images are required not to completely overlap. In this embodiment of this application, s is not an even-numbered multiple of d, so that pixels in different original images do not completely overlap during superimposition. This ensures that pixels in the original images can be divided into sub-pixels in the superimposition process, and helps ensure that the sub-pixels are superimposed with three types of color information. It should be noted that, n is a prime number, n may be selected based on the image resolution multiple that needs to be increased, and values of a and b may be selected based on controllable precision of the brake.

In a possible implementation, n is not 2 and $n<f\times(n-1)$, and coordinates of any image capturing position in the plurality of image capturing positions are $(i\times s+W/2, j\times s+H/2)$ in a same coordinate system, where

$$f = \begin{cases} m, n > m \\ 2n - m, n < m \end{cases},$$

and m is a remainder of $a\times n+b$ divided by 2n; $0\leq i\leq n-1$ and $0\leq j\leq n-1$, and in any update of $(ixs+W/2, j\times s+H/2)$, i and j do not change simultaneously, i and j both change monotonically, and i and j are integers; W is a quantity of sensing pixels in a width direction of the photosensitive element; and H is a quantity of sensing pixels in a height direction of the photosensitive element; and the photosensitive element senses spectrums in three wavelength ranges, where the spectrums in the three wavelength ranges correspond to three types of color information, and that pixels in the composite image are determined based on sub-pixels obtained through division in a process of superimposing the plurality of original images includes: the pixels in the composite image are determined based on first sub-pixels obtained through division in the process of superimposing the plurality of original images, where the first sub-pixel includes the three types of color information.

m is a modulus, m is a remainder of $a \times n + b$ divided by $2n$, and may be represented as $m = (a \times n + b) | (2 \times n)$, that is, a modulo division operation is performed on $(2 \times n)$ by using $(a \times n + b)$. The modulo division operation is performed on $(2 \times n)$ because pixels are arranged in rows/columns in a period of $2xn$.

It should be noted that, for the coordinates $(i \times s + W/2, j \times s + H/2)$ of the image capturing position, $0 \le i \le n-1$ and $0 \le j \le n-1$, i and j are integers, both i and j change monotonically, and in any update of $(i \times s + W/2, j \times s + H/2)$, i and j do not change simultaneously. That is, values of i and j monotonically increase or monotonically decrease, and only one of the values of i and j can change in any update of the coordinates $(i \times s + W/2, j \times s + H/2)$ of the image capturing position. In addition, when the values of i and j monotonically increase and when neither i nor j takes a maximum value n-1, any one of i and j may be selected to change. When one of i and j takes the maximum value n-1, only one that does not take the maximum value n-1 can change. When the values of i and j monotonically decrease and when neither i nor j takes a minimum value 0, any one of i and j may be selected to change. When one of i and j takes the minimum value 0, only one that does not take the minimum value 0 can change.

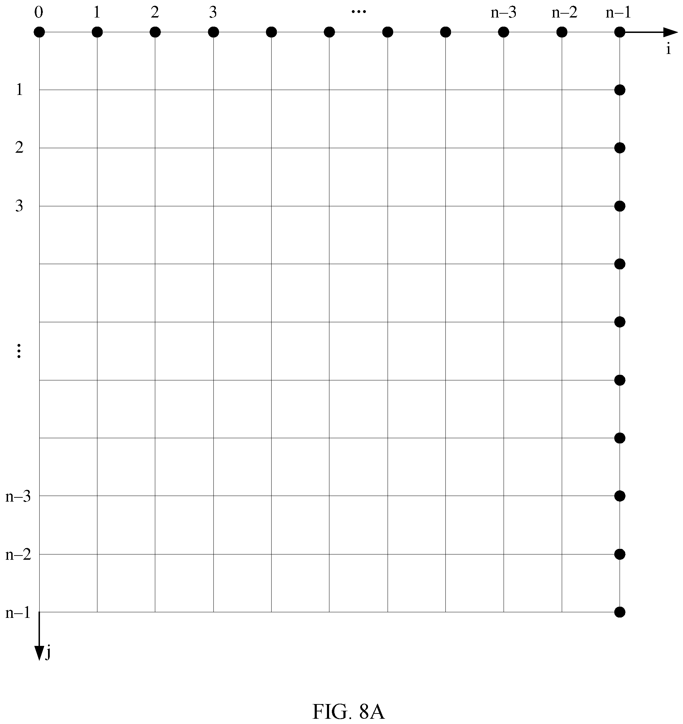

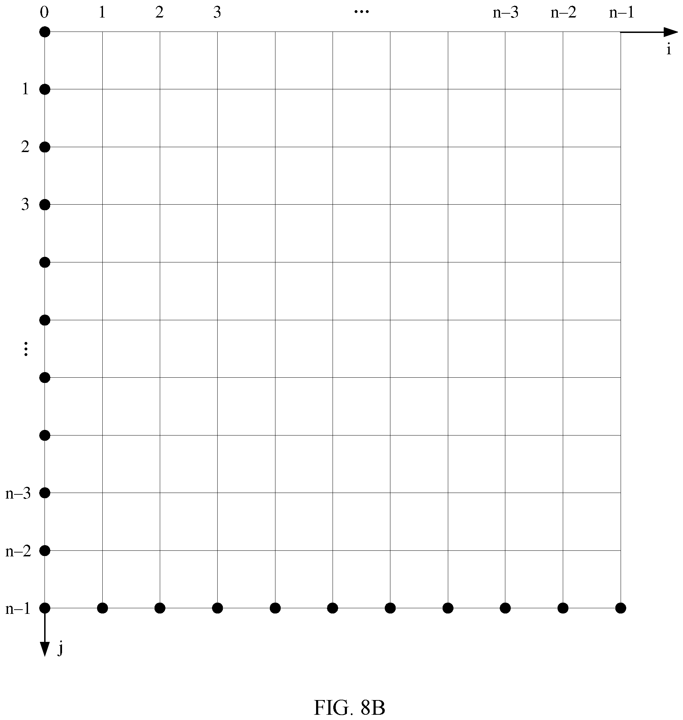

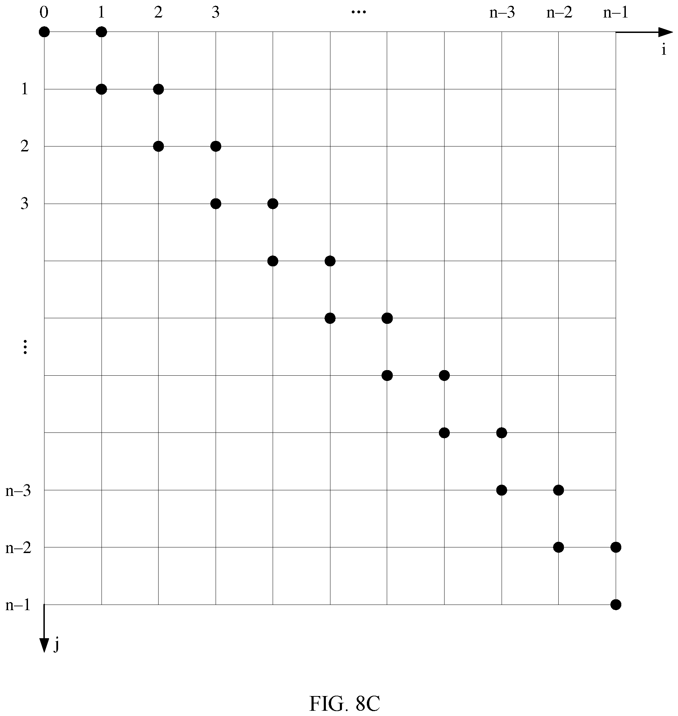

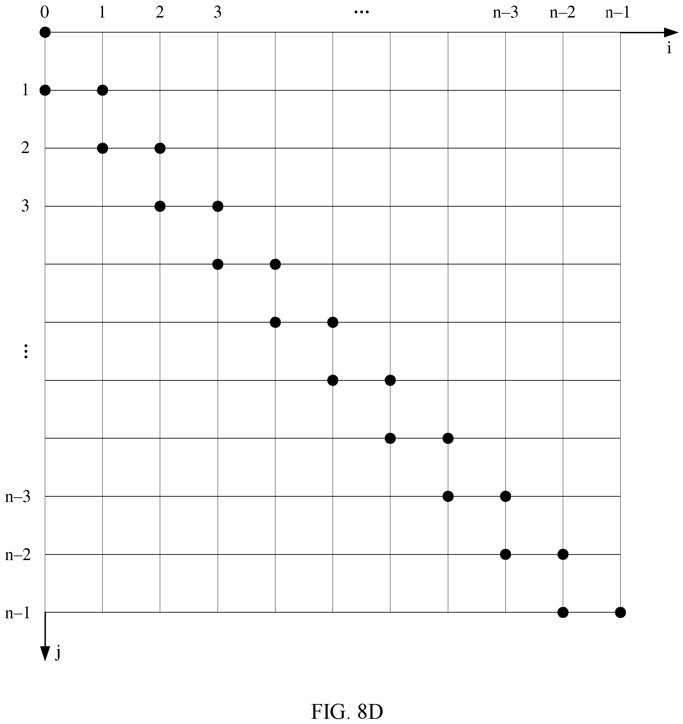

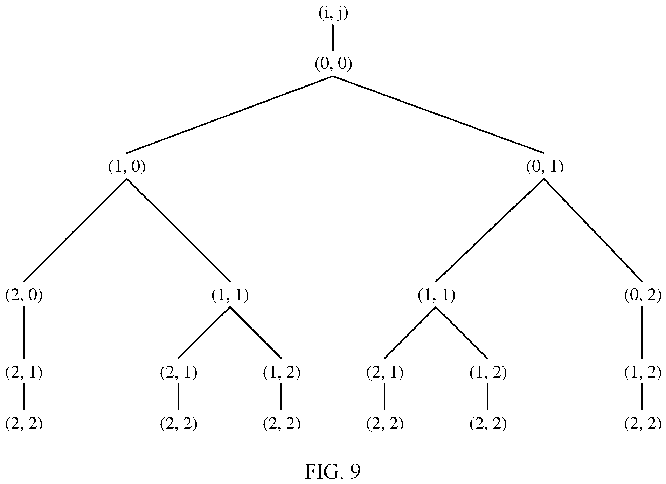

FIG. 8A, FIG. 8B, FIG. 8C, and FIG. 8D show several possible values of i and j. This application is not limited thereto. It should be understood that when value manners of i and j are different, coordinates of the image capturing position are also different. FIG. 9 is a tree diagram of values of i and j when $n < f \times (n-1)$ and n is 3.

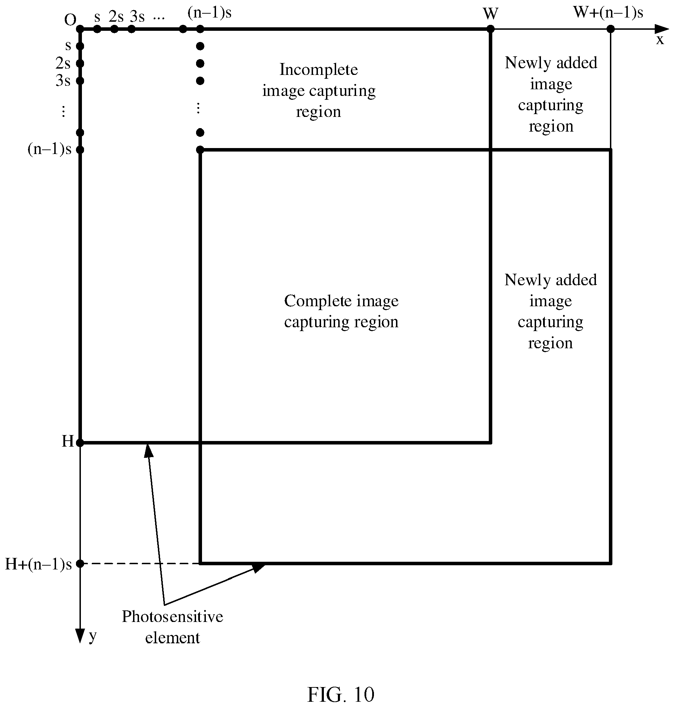

Any one of the plurality of image capturing positions in this embodiment of this application may be represented by using coordinates in a same coordinate system. FIG. 10 is a schematic diagram of a coordinate system according to an embodiment of this application. The coordinate system is a coordinate system established in a plane in which the photosensitive element is located. As shown in FIG. 10, when the photosensitive element is at an initial position (initial position), a coordinate system xOy is established by using an upper left vertex of the photosensitive element as an origin O (0, 0), by using the width direction of the photosensitive element as an x axis, and by using the height direction of the photosensitive element as a y axis. When the photosensitive element is at any image capturing position, coordinates of the upper left vertex of the photosensitive element may be represented as (i, j) in the coordinate system xOy, a horizontal coordinate i of the coordinates (i, j) represents a distance between the photosensitive element and the y axis at the any image capturing position, a vertical coordinate j of the coordinates (i, j) represents a distance between the photosensitive element and the x axis at the image capturing position, and a distance between the photosensitive element and the x axis or the y axis may be represented by a distance between a center of the photosensitive element and the x axis or the y axis. Therefore, the image capturing position of the photosensitive element may be determined by using the coordinates (i, j) of the upper left vertex of the photosensitive element, the quantity H of sensing pixels in the height direction of the photosensitive element, and the quantity W of sensing pixels in the width direction of the photosensitive element, that is, when the coordinates of the upper left vertex of the photosensitive element are (i, j), the image capturing position of the photosensitive element is represented as (i+W/2, j+H/2). It should be noted that, in FIG. 10, the coordinates of the image capturing position are determined by using the values of i and j shown in FIG. 8A. In an example, all coordinates described in this specification may be coordinates in the coordinate system described in FIG. 10.

For example, an image capturing process and a synthesis process in this implementation are described as follows. A moving target being a lens is equivalent to a moving target being a photosensitive element. The following provides description by using an example in which the photosensitive element moves.

1. Image capturing process.

In the coordinate system xOy, the photosensitive element captures images separately at image capturing positions (W/2, H/2), (s+W/2, H/2), (2s+W/2, H/2), (3s+W/2, H/2), ..., ((n-2)s+W/2, H/2), ((n-1)s+W/2, H/2), ((n-1)s+W/2, s+H/2), ((n-1)s+W/2, 2s+H/2), ((n-1)s+W/2, 3s+H/2), ..., ((n-1)s+W/2, (n-2)s+H/2), and ((n-1)s+W/2, (n-1)s+H/2), to obtain 2n-1 original images. For example, the photosensitive element moves in the following sequence: The photosensitive element first moves in one of the x direction and the y direction, and then moves in the other direction. For example, the photosensitive element first moves in the x direction, and then moves in the y direction after the movement in the x direction ends. The movement described in this application means translation, and a quantity of times of movement is 2n-2, including n-1 times of movement in the x direction and n-1 times of movement in the y direction. A total quantity of times of image capturing is 2n-1, including one time of image capturing at the initial position, n-1 times of movement and image capturing in the x direction, and n-1 times of movement and image capturing in the y direction. A specific movement process is as follows:

(1) Capture an image at the initial position.
At a moment t(0), the photosensitive element captures an image at the initial position, that is, the photosensitive element captures an image at an image capturing position (W/2, H/2), to obtain an original image 0.

(2) Move and capture an image in the x direction.

In a time period from t(0) to t(1)_x, the photosensitive element moves by a distance s in the x direction, that is, moves from the image capturing position (W/2, H/2) to an image capturing position (s+W/2, H/2). The photosensitive element captures an image at a position at a moment t(1)_x, that is, the photosensitive element captures an image at the position (s+W/2, H/2), to obtain an original image x(1).

In a time period from t(1)_x to t(2)_x, the photosensitive element moves by the distance s in the x direction, that is, moves from the image capturing position (s+W/2, H/2) to an image capturing position (2s+W/2, H/2). The photosensitive element captures an image at a position at a moment t(2)_x, that is, the photosensitive element captures an image at the position (2s+W/2, H/2), to obtain an original image x(2).

In a time period from t(2)_x to t(3)_x, the photosensitive element moves by the distance s in the x direction, that is, moves from the image capturing position (2s+W/2, H/2) to an image capturing position (3s+W/2, H/2). The photosensitive element captures an image at a position at a moment t(3)_x, that is, the photosensitive element captures an image at the position (3 s+W/2, H/2), to obtain an original image x(3).

...

In a time period from t(n-3)_x to t(n-2)_x, the photosensitive element moves by the distance s in the x direction, that is, moves from an image capturing position ((n-3)s+W/2, H/2) to an image capturing position ((n-2)s+W/2, H/2). The photosensitive element captures an image at a position at a moment t(n-2)_x, that is, the photosensitive element captures an image at the position ((n-2)s+W/2, H/2), to obtain an original image x(n-2).

In a time period from t(n-2)_x to t(n-1)_x, the photosensitive element moves by the distance s in the x direction, that is, moves from the image capturing position ((n-2)s+W/2, H/2) to an image capturing position ((n-1)s+W/2, H/2). The photosensitive element captures an image at a position at a moment t(n-1) _x, that is, the photosensitive element captures an image at the position ((n-1)s+W/2, H/2), to obtain an original image x(n-1).

So far, movement and image capturing by the photosensitive element in the x direction have ended, and then the photosensitive element starts to move and perform image capturing in the y direction.

(3) Move and capture an image in the y direction.

In a time period from t(n-1)_x to t(1)_y, the photosensitive element moves by the distance s in the y direction, that is, moves from the image capturing position ((n-1)s+W/2, H/2) to an image capturing position ((n-1)s+W/2, s+H/2). The photosensitive element captures an image at a position at a moment t(1)_y, that is, the photosensitive element captures an image at the position ((n-1)s+W/2, s+H/2), to obtain an original image y(1).

In a time period from t(1)_y to t(2)_y, the photosensitive element moves by the distance s in the y direction, that is, moves from the image capturing position ((n-1)s+W/2, s+H/2) to an image capturing position ((n-1)s+W/2, 2s+H/2). The photosensitive element captures an image at a position at a moment t(2)_y, that is, the photosensitive element captures an image at the position ((n-1)s+W/2, 2s+H/2), to obtain an original image y(2).

In a time period from t(2)_y to t(3)_y, the photosensitive element moves by the distance s in the y direction, that is, moves from the image capturing position ((n-1)s+W/2, 2s+H/2) to an image capturing position ((n-1)s+W/2, 3s+H/2). The photosensitive element captures an image at a position at a moment t(3)_y, that is, the photosensitive element captures an image at the position ((n-1)s+W/2, 3s+H/2), to obtain an original image y(3).

...

In a time period from t(n-3)_y to t(n-2)_y, the photosensitive element moves by the distance s in the y direction, that is, moves from an image capturing position ((n-1)s+W/2, (n-3)s+H/2) to an image capturing position ((n-1)s+W/2, (n-2)s+H/2). The photosensitive element captures an image at a position at a moment t(n-2)_y, that is, the photosensitive element captures an image at the position ((n-1)s+W/2, (n-2)s+H/2), to obtain an original image y(n-2).

In a time period from t(n-2)_y to t(n-1)_y, the photosensitive element moves by the distance s in the y direction, that is, moves from the image capturing position ((n-1)s+W/2, (n-2)s+H/2) to an image capturing position ((n-1)s+W/2, (n-1)s+H/2). The photosensitive element captures an image at a position at a moment t(n-1)_y, that is, the photosensitive element captures an image at the position ((n-1)s+W/2, (n-1)s+H/2), to obtain an original image y(n-1).

So far, movement by the photosensitive element in the x direction and the y direction and image capturing have both ended.

It should be noted that, the moving sequence of the photosensitive element described in this application is merely an example. A moving sequence that can achieve an equivalent effect falls within the protection scope of this application, provided that image capturing at each image capturing position described in this application can be implemented. Possible moving sequences of the photosensitive element are not listed one by one in this application, and the moving sequence of the photosensitive element is not specifically limited in this application.

2. Synthesis process.

It should be understood that, an image resolution includes a spatial resolution and a color resolution of the image. The following separately describes processes of improving the spatial resolution of the image and the color resolution of the image in this embodiment of this application.

(1) Improvement of the spatial resolution.

All original images (for example, 2n-1 original images) obtained through image capturing are projected onto the coordinate system xOy based on image capturing positions, and it may be found that an overlapping region exists between the original images. Specifically, the moving distance s=[(a×n+b)/n]×d, and the photosensitive element performs movement and image capturing for a plurality of times, and then projects, based on the image capturing positions, all the original images obtained through image capturing onto the coordinate system xOy for superimposition. One pixel (except a pixel not overlapping with another pixel) in an original image may be divided into n×n sub-pixels (sub-pixel) in the superimposition process, where a size of each sub-pixel is d/n×d/n, that is, one pixel in the original image is divided into n rows and n columns of sub-pixels. Therefore, in a process of integrating all the original images to obtain the composite image, each pixel of each original image in all the original images may be divided into n×n sub-pixels. This is equivalent to that one sensing pixel in the photosensitive element corresponds to n×n sub-pixels in an original image, or that one sensing pixel in the photosensitive element corresponds to n×n pixels in the composite image. A total quantity of sensing pixels in the photosensitive element is H×W, and therefore, a total quantity of pixels of each original image is also H×W, so that each original image has a total of H×W×n×n sub-pixels. Each sub-pixel is used as one pixel in the composite image, so that the composite image has H×W×n×n pixels. It may be understood that, compared with an original image, the total quantity of pixels in the composite image is n×n times that of the original image; and a size of the composite image remains unchanged, and an image capturing spacing is 1/n of the original, that is, a spatial resolution of the composite image is n×n times that of the original image.

(2) Improvement of the color resolution.

There are three types of sub-pixels obtained through division in the process of superimposing all the original images. It is assumed that an image is in an ACCD format, and A, C, and D respectively represent different colors, that is, it is detected that colors corresponding to the spectrums in three wavelength ranges are respectively a color A, a color C, and a color D. The following uses an RGGB format or an RYYB format as an example for description. Specific descriptions are as follows:

Sub-pixels of a first type: superimposed with three colors. When the original image is in the RGGB format or the RYYB format, R, G, B, and Y respectively represent red, green, blue, and yellow. For example, R and G/Y may be obtained during movement in the x direction, and G/Y and B may be obtained during movement in the y direction, or G/Y and B may be obtained during movement in the x direction, and R and G/Y may be obtained during movement in the y direction, and so on.

Sub-pixels of a second type: superimposed with two colors. For example, R and G/Y can be obtained only during movement in the x direction, or G/Y and B can be obtained only during movement in the x direction, or R and G/Y can be obtained only during movement in the y direction, or G/Y and B can be obtained only during movement in the y direction, and so on.

Sub-pixels of a third type: superimposed with only one color. For example, only one color of R, G, B, and Y can be obtained during movement in both the x direction and the y direction.

It should be noted that, it can be seen from FIG. 10 that, all image capturing position points are connected to form a fold line with a fold angle of 90°, and on the whole, an image capturing position first moves in the x direction and then moves in the y direction. Therefore, regions framed by solid lines in FIG. 10 are all image capturing regions of 2n-1 times of image capturing, and all the image capturing regions may be divided into an original image capturing region (that is, an image capturing region of the original image 0) and newly added image capturing regions. The original image capturing region is the image capturing region of the original image 0, that is, a region in which 0≤x≤W and 0≤y≤H, and all image capturing information of the output composite image comes from image capturing information obtained through image capturing in the original image capturing region. In the original image capturing region, a region that can be captured by the photosensitive element during each time of image capturing (a region that can be covered during each time of image capturing by the photosensitive element), that is, a region in which (n-1)s≤x≤W and (n-1)s≤y≤H, is set to a complete image capturing region. Other regions in the original image capturing region except the complete image capturing region, that is, a region in which 0≤x≤(n-1)s and 0≤y≤H and a region in which (n-1)s≤x≤W and 0≤y≤(n-1)s, are set to incomplete image capturing regions. The newly added image capturing regions are image capturing regions that are added compared with the original image capturing region due to movement of the photosensitive element, that is, a region in which W≤x≤W+(n-1)s and 0≤y≤H and a region in which (n-1)s≤x≤W+(n-1)s and H≤y≤H+(n-1)s. Therefore, the sub-pixels of the first type are mainly distributed in the complete image capturing region, and the sub-pixels of the second type and the sub-pixels of the first type are distributed in the incomplete image capturing regions and the newly added image capturing regions.

It should be further noted that, an area of the complete image capturing region is far greater than areas of the incomplete image capturing regions, and the area of the complete image capturing region is close to an area of the original image capturing region. Therefore, the incomplete image capturing regions may be ignored, and it is approximately considered that the complete image capturing region is the original image capturing region, and it is approximately considered that all the image capturing information of the composite image comes from image capturing information obtained through image capturing in the complete image capturing region.

It is learned from the foregoing that all the image capturing information of the composite image comes from the image capturing information obtained through image capturing in the original image capturing region, that is, all the image capturing information of the composite image comes from image capturing information obtained through image capturing in the complete image capturing region and the incomplete image capturing regions. When n is not 2 and n<f×(n-1), for the complete image capturing region, one pixel in an original image is divided into n×n sub-pixels, where a size of each sub-pixel is d/n×d/n, each sub-pixel may obtain three types of color information, and a sub-pixel that obtains the three types of color information is denoted as a first sub-pixel. For the incomplete image capturing regions, each sub-pixel may not necessarily obtain three types of color information, and may obtain one or two types of color information. A sub-pixel that obtains one or two types of color information is denoted as a second sub-pixel. In addition, in the incomplete image capturing regions, the original image still has a pixel that is not divided into sub-pixels, and color information lacked by the second sub-pixel needs to be estimated and supplemented. For example, for a missing color of a sub-pixel lacking a color (that is, a sub-pixel that cannot cover three colors during color sampling), information about the missing color of the sub-pixel lacking the color may be estimated with reference to image capturing information of a sub-pixel that is closest to the sub-pixel lacking the color and that has the missing color. For example, for a sub-pixel lacking the color R, information about the color R is obtained from another sub-pixel closest to the sub-pixel, and is used as information about the color R of the sub-pixel. Therefore, there may be a plurality of manners of selecting pixels in the composite image, and the following provides descriptions by using examples.

Example 1: Only sub-pixels in the complete image capturing region are used as pixels in the composite image.

In this case, because all sub-pixels in the complete image capturing region are first sub-pixels and include three types of color information, any pixel in the composite image includes three types of color information.

Example 2: Sub-pixels in the complete image capturing region and sub-pixels in the incomplete image capturing regions are used as pixels in the composite image.

In this case, all sub-pixels in the complete image capturing region are first sub-pixels, and all include three types of color information; and sub-pixels in the incomplete image capturing regions include second sub-pixels, the second sub-pixels lack one or two of the three types of color information, and color information lacked by the second sub-pixels needs to be estimated and supplemented. That is, any color information lacked by the second sub-pixel is determined based on the any color information of a third sub-pixel, the third sub-pixel is a sub-pixel obtained through division in the process of superimposing the plurality of original images, and the third sub-pixel is a sub-pixel that is near the second sub-pixel and that includes the any color information. In this way, any sub-pixel in the sub-pixels in the complete image capturing region and any sub-pixel in the sub-pixels in the incomplete image capturing regions both include three types of color information, and therefore, any pixel in the composite image includes three types of color information.

Alternatively, for second sub-pixels that lack color information in the incomplete image capturing regions, the color information lacked by the second sub-pixels is not estimated and supplemented, and the second sub-pixels and the first sub-pixels are jointly used as pixels of the composite image directly. In this case, for the incomplete image capturing regions, each sub-pixel cannot obtain three colors, and image capturing information of an upper edge region and a left edge region of the composite image comes from image capturing information obtained through image capturing in the incomplete image capturing regions. Therefore, pixels in the upper edge region and the left edge region of the composite image lack colors. For the complete image capturing region, each sub-pixel may obtain three colors, and image capturing information of most regions other than the upper edge region and the left edge region in the composite image comes from image capturing information obtained through image capturing in the complete image capturing region. Therefore, pixels of most regions of the composite image may obtain color information of three colors. However, because the upper edge region and the left edge region of the composite image occupy an extremely small part of the area of the composite image, impact of lack of colors by pixels of the upper edge region and the left edge region of the composite image on (application of) the composite image may be ignored. Therefore, a color resolution of the composite image is also improved compared with that of the original image.

Example 3: Sub-pixels in the complete image capturing region, sub-pixels in the incomplete image capturing regions, and pixels that are not divided into sub-pixels in the incomplete image capturing regions are used as pixels in the composite image.

In this case, all sub-pixels in the complete image capturing region are first sub-pixels, and all include three types of color information; color information lacked by second sub-pixels in the incomplete image capturing regions may be selectively estimated and supplemented; and pixels that are not divided into sub-pixels in the incomplete image capturing regions include only one type of color information, and the other two types of color information lacked by the pixels may be ignored.

It should be noted that, for the size of the composite image, the size of the composite image obtained in Example 1 is less than the size of the composite image obtained in Example 2, the size of the composite image obtained in Example 2 is less than the size of the composite image obtained in Example 3, and the size of the composite image obtained in Example 3 is the same as the size of the original image. The size of the composite image obtained in Example 1 and the size of the composite image obtained in Example 2 are also approximately equal to the size of the original image. In addition, a quantity of first sub-pixels that include three types of color information simultaneously accounts for a majority of the total quantity of pixels of the composite image. Therefore, regardless of any one of the foregoing examples, it may be considered that all pixels of the composite image include three types of color information. In the following description, provided that color sampling of sub-pixels corresponding to pixels in most regions of the composite image can cover three colors, it is considered that all pixels of the composite image include three types of color information.

In this embodiment of this application, an image capturing position may be represented by coordinates of a center of the photosensitive element when the photosensitive element performs image capturing at the image capturing position. Coordinates of any one of the plurality of image capturing positions are (i×s+W/2, j×s+H/2) in a same coordinate system, where s is the minimum distance of each movement of the photosensitive element, W is the quantity of sensing pixels in the width direction of the photosensitive element, and H is the quantity of sensing pixels in the height direction of the photosensitive element. When n is not 2 and n<f×(n-1), 0≤i≤n-1 and 0≤j≤n-1. In any update of (i×s+W/2, j×s+H/2), i and j do not change simultaneously, and both i and j change monotonically (for example, monotonically increasing or monotonically decreasing), where i and j are integers. Therefore, the plurality of image capturing positions are 2n-1 image capturing positions in total. When n>m, f=m, and m is a remainder of a×n+b divided by 2n. When n<m, f=2n-m. In this way, one original image is obtained through sensing at each of the 2n-1 image capturing positions, so that a total of 2n-1 original images are obtained. The 2n-1 original images may be superimposed to obtain the composite image. In the superimposition process, one pixel in an original image is divided into n×n sub-pixels, so that a resolution of the composite image is greater than a resolution of the original image. In addition, because the photosensitive element senses the spectrums in the three wavelength ranges, that is, the photosensitive element senses spectrums of three colors, the original image includes pixels of three colors. In the process of superimposing the 2n-1 original images, the first sub-pixel superimposed with three colors may be obtained through division, that is, the first sub-pixel includes three types of color information. The first sub-pixel is used as a pixel in the composite image, so that any pixel in the composite image includes three types of color information.

In a possible implementation, n is 2 or n>f×(n-1), and coordinates of any image capturing position in the plurality of image capturing positions are (i×s+W/2, j×s+H/2) in a same coordinate system, where

$$f = \begin{cases} m, n > m \\ 2n - m, n < m \end{cases},$$

and m is a remainder of a×n+b divided by 2n; 0≤i≤n and 0≤j≤n, and in any update of (i×s+W/2, j×s+H/2), i and j do not change simultaneously, i and j both change monotonically, and i and j are integers; W is a quantity of sensing pixels in a width direction of the photosensitive element; and H is a quantity of sensing pixels in a height direction of the photosensitive element; and the photosensitive element senses spectrums in three wavelength ranges, where the spectrums in the three wavelength ranges correspond to three types of color information, and that pixels in the composite image are determined based on sub-pixels obtained through division in a process of superimposing the plurality of original images includes: the pixels in the composite image are determined based on first sub-pixels obtained through division in the process of superimposing the plurality of original images, where the first sub-pixel includes the three types of color information. In this case, a×n+b is an odd number.

It should be noted that, when n is 2, a value of b can only be 1, and s=(a+1/2)×d, for example, s is 3d/2, 5d/2, 7d/2, or 9d/2. If the photosensitive element moves once in the x direction and moves once in the y direction, for example, performs image capturing in the foregoing implementation, a total of three original images are obtained through image capturing. In this case, the three original images are superimposed. For a complete image capturing region, one pixel in an original image is divided into 2×2 sub-pixels, where a size of each sub-pixel is d/2xd/2. A sub-pixel that cannot cover three colors through color sampling exists in the complete image capturing region. Specifically, the following law exists in both the row direction and the column direction: Starting from an (a+3/2)$^{th}$ sub-pixel, sub-pixels that can cover three colors through color sampling and sub-pixels that cannot cover three colors through color sampling alternate between each other, until an (a+3/2)$^{th}$ sub-pixel from the bottom, and the sub-pixels that cannot cover three colors through color sampling can cover only one color and lack two colors, where color sampling of the (a+3/2)$^{th}$ sub-pixel from the bottom can cover three colors.

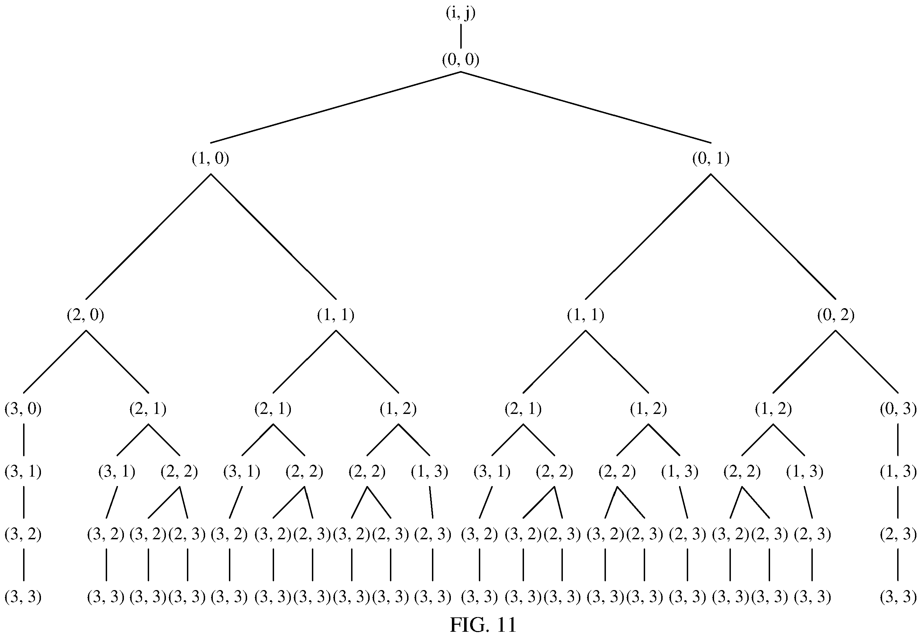

Alternatively, when n>f×(n-1), for example, s is 4d/3, 7d/5, or 11d/5, if the photosensitive element moves for n-1 times in the x direction and moves for n-1 times in the y direction, for example, performs image capturing in the foregoing implementation, a total of 2n-1 original images are obtained through image capturing. In this case, the 2n-1 original images are superimposed. For a complete image capturing region, one pixel in an original image is divided into n×n sub-pixels, where a size of each sub-pixel is d/n×d/n. A sub-pixel that cannot cover three colors through color sampling exists in the complete image capturing region. FIG. 11 is a tree diagram of values of i and j when n>f×(n-1) and n is 3.

To enable all pixels in the composite image to include three types of color information, all sub-pixels in the complete image capturing region need to be enabled to include three types of color information. This may be implemented by adding one more movement in the x direction and one more movement in the y direction. A specific moving process of the photosensitive element is described as follows:

1. When n is 2.

(1) Capture an image at the initial position.
At a moment t(0), the photosensitive element captures an image at the initial position (W/2, H/2), to obtain an original image 0.
(2) Move and capture an image in the x direction.

In a time period from t(0) to t(1)_x, the photosensitive element moves by a distance s in the x direction. The photosensitive element captures an image at a position at a moment t(1)_x, that is, the photosensitive element captures an image at a position (s+W/2, H/2), to obtain an original image x(1).

In a time period from t(1)_x to t(2)_x, the photosensitive element moves by the distance s in the x direction. The photosensitive element captures an image at a position at a moment t(2)_x, that is, the photosensitive element captures an image at a position (2s+W/2, H/2), to obtain an original image x(2).

(3) Move and capture an image in the y direction.

In a time period from t(n)_x to t(1)_y, the photosensitive element moves by the distance s in the y direction. The photosensitive element captures an image at a position at a moment t(1)_y, that is, the photosensitive element captures an image at a position (2s+W/2, s+H/2), to obtain an original image y(1).

In a time period from t(1)_y to t(2)_y, the photosensitive element moves by the distance s in the y direction. The photosensitive element captures an image at a position at a moment t(2)_y, that is, the photosensitive element captures an image at a position (2s+W/2, 2s+H/2), to obtain an original image y(2).

It can be learned from the foregoing that, after five times of image capturing, five original images are obtained; and one pixel in an original image may be divided into 2×2 sub-pixels by superimposing the five original images, and all sub-pixels in the complete image capturing region include three types of color information.

2. When n>f×(n-1)

(1) Capture an image at the initial position.
At a moment t(0), the photosensitive element captures an image at the initial position (W/2, H/2), to obtain an original image 0.
(2) Move and capture an image in the x direction.

In a time period from t(0) to t(1)_x, the photosensitive element moves by a distance s in the x direction. The photosensitive element captures an image at a position at a moment t(1)_x, that is, the photosensitive element captures an image at a position (s+W/2, H/2), to obtain an original image x(1).

In a time period from t(1)_x to t(2)_x, the photosensitive element moves by the distance s in the x direction. The photosensitive element captures an image at a position at a moment t(2)_x, that is, the photosensitive element captures an image at a position (2s+W/2, H/2), to obtain an original image x(2).

In a time period from t(2)_x to t(3)_x, the photosensitive element moves by the distance s in the x direction. The photosensitive element captures an image at a position at a moment t(3)_x, that is, the photosensitive element captures an image at a position (3s+W/2, H/2), to obtain an original image x(3).

...

In a time period from t(n-3)_x to t(n-2)_x, the photosensitive element moves by the distance s in the x direction. The photosensitive element captures an image at a position at a moment t(n-2)_x, that is, the photosensitive element captures an image at a position ((n-2)s+W/2, H/2), to obtain an original image x(n-2).

In a time period from t(n-2)_x to t(n-1)_x, the photosensitive element moves by the distance s in the x direction. The photosensitive element captures an image at a position at a moment t(n-1)_x, that is, the photosensitive element captures an image at a position ((n-1)s+W/2, H/2), to obtain an original image x(n-1).

In a time period from t(n-1)_x to t(n)_x, the photosensitive element moves by the distance s in the x direction. The photosensitive element captures an image at a position at a moment t(n)_x, that is, the photosensitive element captures an image at a position (n×s+W/2, H/2), to obtain an original image x(n).

(3) Move and capture an image in the y direction.

In a time period from t(n)_x to t(1)_y, the photosensitive element moves by the distance s in the y direction. The photosensitive element captures an image at a position at a moment t(1)_y, that is, the photosensitive element captures an image at a position (n×s+W/2, s+H/2), to obtain an original image y(1).

In a time period from t(1)_y to t(2)_y, the photosensitive element moves by the distance s in the y direction. The photosensitive element captures an image at a position at a moment t(2)_y, that is, the photosensitive element captures an image at a position (n×s+W/2, 2s+H/2), to obtain an original image y(2).

In a time period from t(2)_y to t(3)_y, the photosensitive element moves by the distance s in the y direction. The photosensitive element captures an image at a position at a moment t(3)_y, that is, the photosensitive element captures an image at a position (n×s+W/2, 3s+H/2), to obtain an original image y(3).

...

In a time period from t(n-3)_y to t(n-2)_y, the photosensitive element moves by the distance s in the y direction. The photosensitive element captures an image at a position at a moment t(n-2)_y, that is, the photosensitive element captures an image at a position (n×s+W/2, (n-2)s+H/2), to obtain an original image y(n-2).

In a time period from t(n-2)_y to t(n-1)_y, the photosensitive element moves by the distance s in the y direction. The photosensitive element captures an image at a position at a moment t(n-1)_y, that is, the photosensitive element captures an image at a position (n×s+W/2, (n-1)s+H/2), to obtain an original image y(n-1).

In a time period from t(n-1)_y to t(n)_y, the photosensitive element moves by the distance s in the y direction. The photosensitive element captures an image at a position at a moment t(n)_y, that is, the photosensitive element captures an image at a position (n×s+W/2, n×s+H/2), to obtain an original image y(n).

It can be learned from the foregoing that, after 2n+1 times of image capturing, 2n+1 original images are obtained; and one pixel in an original image may be divided into n×n sub-pixels by superimposing the 2n+1 original images, and all sub-pixels in the complete image capturing region include three types of color information.

It should be understood that, in this implementation, for a manner of selecting pixels in the composite image, refer to the descriptions shown in the foregoing Example 1 to Example 3.

In this embodiment of this application, an image capturing position may be represented by coordinates of a center of the photosensitive element when the photosensitive element performs image capturing at the image capturing position. Coordinates of any one of the plurality of image capturing positions are (i×s+W/2, j×s+H/2) in a same coordinate system, where s is the minimum distance of each movement of the photosensitive element, W is the quantity of sensing pixels in the width direction of the photosensitive element, and H is the quantity of sensing pixels in the height direction of the photosensitive element. When n is 2, $0 \leq i \leq 2$ and $0 \leq j \leq 2$. In any update of (i×s+W/2, j×s+H/2), i and j do not change simultaneously, both i and j change monotonically (for example, monotonically increasing or monotonically decreasing), and i and j are integers. Therefore, the plurality of image capturing positions are five image capturing positions in total. In this way, one original image is obtained through sensing at each of the foregoing five image capturing positions, so that a total of five original images are obtained.

The foregoing five original images may be superimposed to obtain the composite image. In the superimposition process, one pixel in an original image is divided into 2×2 sub-pixels, so that the resolution of the composite image is greater than the resolution of the original image. In addition, because the photosensitive element senses the spectrums in the three wavelength ranges, that is, the photosensitive element senses spectrums of three colors, the original image includes pixels of three colors. In the process of superimposing the five original images, the first sub-pixel superimposed with the three colors may be obtained through division, that is, the first sub-pixel includes three types of color information. The first sub-pixel is used as a pixel in the composite image, so that any pixel in the composite image includes three types of color information. Alternatively, when n>f×(n-1), $0 \leq i \leq n$ and $0 \leq j \leq n$. In any update of (ixs+W/2, j×s+H/2), i and j do not change simultaneously, both i and j change monotonically (for example, monotonically increasing or monotonically decreasing), and i and j are integers. Therefore, the plurality of image capturing positions are 2n+1 image capturing positions in total. When n>m, f=m, and m is a remainder of a×n+b divided by 2n. When n<m, f=2n-m. In this way, one original image is obtained through sensing at each of the foregoing 2n+1 image capturing positions, so that a total of 2n+1 original images are obtained. The foregoing 2n+1 original images may be superimposed to obtain the composite image. In the superimposition process, one pixel in an original image is divided into n×n sub-pixels, and each sub-pixel is superimposed with three types of color information, so that the resolution of the composite image is greater than the resolution of the original image. In addition, because the photosensitive element senses the spectrums in the three wavelength ranges, that is, the photosensitive element senses spectrums of three colors, the original image includes pixels of three colors. In the process of superimposing the 2n+1 original images, the first sub-pixel superimposed with the three colors may be obtained through division, that is, the first sub-pixel includes three types of color information. The first sub-pixel is used as a pixel in the composite image, so that any pixel in the composite image includes three types of color information.

In a possible implementation, that pixels in the composite image are determined based on sub-pixels obtained through division in a process of superimposing the plurality of original images further includes: the pixels in the composite image are determined based on second sub-pixels obtained through division in the process of superimposing the plurality of original images, where the second sub-pixel lacks one or two of the three types of color information; and any color information lacked by the second sub-pixel is determined based on the any color information of a third sub-pixel, where the third sub-pixel is a sub-pixel obtained through division in the process of superimposing the plurality of original images, and the third sub-pixel is a sub-pixel that is near the second sub-pixel and that includes the any color information.

It should be understood that, for sub-pixels obtained in the process of superimposing the plurality of original images, provided that a sub-pixel lacks any one or two of the three types of color information, color estimation and supplementation may be performed, so that the sub-pixel includes the three types of color information.

In this embodiment of this application, in the process of superimposing the plurality of original images, not only the first sub-pixel including three types of color information may be obtained through division, but also the second sub-pixel including one or two types of color information may be obtained through division. Any color information lacked by the second sub-pixel may be obtained through estimation based on the any color information of a sub-pixel that is near the second sub-pixel and that includes the any color information. After the color information lacked by the second sub-pixel is estimated, the first sub-pixel and the second-sub-pixel may be used as pixels of the composite image. In this way, any pixel in the composite image may also include three types of color information.

In a possible implementation, n is 2 or $n>f\times(n-1)$, and coordinates of any image capturing position in the plurality of image capturing positions are ($i\times s+W/2$, $j\times s+H/2$) in a same coordinate system, where

$$f = \begin{cases} m, n > m \\ 2n - m, n < m \end{cases},$$

and m is a remainder of $a\times n+b$ divided by 2n;
$0\le i\le n-1$ and $0\le j\le n-1$, and in any update of ($i\times s+W/2$, $j\times s+H/2$), i and j do not change simultaneously, i and j both change monotonically, and i and j are integers; W is a quantity of sensing pixels in a width direction of the photosensitive element; and H is a quantity of sensing pixels in a height direction of the photosensitive element; the photosensitive element senses spectrums in three wavelength ranges, where the spectrums in the three wavelength ranges correspond to three types of color information, and that pixels in the composite image are determined based on sub-pixels obtained through division in a process of superimposing the plurality of original images includes: the pixels in the composite image are determined based on first sub-pixels and second sub-pixels obtained through division in the process of superimposing the plurality of original images, where the first sub-pixel includes the three types of color information, and the second sub-pixel lacks one or two of the three types of color information; and any color information lacked by the second sub-pixel is determined based on the any color information of a third sub-pixel, where the third sub-pixel is a sub-pixel obtained through division in the process of superimposing the plurality of original images, and the third sub-pixel is a sub-pixel that is near the second sub-pixel and that includes the any color information.

formation. In this case, $a\times n+b$ is an odd number.

It should be noted that, when n is 2, a value of b can only be 1, and $s=(a+1/2)\times d$, for example, s is 3d/2, 5d/2, 7d/2, or 9d/2. If the photosensitive element moves once in the x direction and moves once in the y direction, for example, performs image capturing in the foregoing implementation, a total of three original images are obtained through image capturing. In this case, the three original images are superimposed. For a complete image capturing region, one pixel in an original image is divided into 2×2 sub-pixels, where a size of each sub-pixel is d/2×d/2. A sub-pixel that cannot cover three colors through color sampling exists in the complete image capturing region. Specifically, the following law exists in both the row direction and the column direction: Starting from an $(a+3/2)^{th}$ sub-pixel, sub-pixels that can cover three colors through color sampling and sub-pixels that cannot cover three colors through color sampling alternate between each other, until an $(a+3/2)^{th}$ sub-pixel from the bottom, and the sub-pixels that cannot cover three colors through color sampling can cover only one color and lack two colors, where color sampling of the $(a+3/2)^{th}$ sub-pixel from the bottom can cover three colors. For example, when s is 3d/2, color sampling of the fourth sub-pixel can cover three colors, color sampling of the fifth sub-pixel cannot cover three colors, color sampling of the sixth sub-pixel can cover three colors, color sampling of the seventh sub-pixel cannot cover three colors, color sampling of the eighth sub-pixel can cover three colors, color sampling of the ninth sub-pixel cannot cover three colors, ..., and so on, until the $(a+3/2)^{th}$ sub-pixel from the bottom, where color sampling of the $(a+3/2)^{th}$ sub-pixel from the bottom can cover three colors.

Alternatively, when $n>f\times(n-1)$, for example, s is 4d/3, 7d/5, or 11d/5, if the photosensitive element moves for n-1 times in the x direction and moves for n-1 times in the y direction, for example, performs image capturing in the foregoing implementation, a total of 2n-1 original images are obtained through image capturing. In this case, the 2n-1 original images are superimposed. For a complete image capturing region, one pixel in an original image is divided into n×n sub-pixels, where a size of each sub-pixel is d/n×d/n. A sub-pixel that cannot cover three colors through color sampling exists in the complete image capturing region.

To enable all pixels in the composite image to include three types of color information, color information estimation and supplementation need to be performed on sub-pixels that lack color information in the complete image capturing region. For example, for a missing color of a sub-pixel lacking a color (that is, a sub-pixel that cannot cover three colors during color sampling), color information of the missing color of the sub-pixel lacking the color may be estimated with reference to image capturing information of a sub-pixel that is closest to the sub-pixel lacking the color and that has the missing color. For example, for a sub-pixel lacking the color R, information about the color R is obtained from another sub-pixel closest to the sub-pixel, and is used as information about the color R of the sub-pixel.

It should be understood that, after color information estimation and supplementation are performed on sub-pixels that lack color information in the complete image capturing region, any sub-pixel in the complete image capturing region includes three types of color information. In this implementation, for a manner of selecting pixels in the composite image, refer to the descriptions shown in the foregoing Example 1 to Example 3.

In this embodiment of this application, an image capturing position may be represented by coordinates of a center of the photosensitive element when the photosensitive element performs image capturing at the image capturing position. Coordinates of any one of the plurality of image capturing positions are $(i \times s + W/2, j \times s + H/2)$ in a same coordinate system, where s is the minimum distance of each movement of the photosensitive element, W is the quantity of sensing pixels in the width direction of the photosensitive element, and H is the quantity of sensing pixels in the height direction of the photosensitive element. When n is 2, $0 \leq i \leq 1$ and $0 \leq j \leq 1$. In any update of $(i \times s + W/2, j \times s + H/2)$, i and j do not change simultaneously, both i and j change monotonically (for example, monotonically increasing or monotonically decreasing), and i and j are integers. Therefore, the plurality of image capturing positions are three image capturing positions in total. In this way, one original image is obtained through sensing at each of the three image capturing positions, so that a total of three original images are obtained. The three original images may be superimposed to obtain the composite image. In the superimposition process, one pixel in an original image is divided into $2 \times 2$ sub-pixels, but some sub-pixels are superimposed with three types of color information, and some sub-pixels are not superimposed with three types of color information. For the second sub-pixel not superimposed with three types of color information, any color information lacked by the second sub-pixel is estimated by using a sub-pixel near the second sub-pixel. Specifically, any color information lacked by the second sub-pixel is obtained through estimation based on the any color information of the third sub-pixel that is near the second sub-pixel and that includes the any color information. For example, the any color information of the third sub-pixel is directly used as the any color information of the second sub-pixel. If a plurality of third sub-pixels exist near the second sub-pixel, the any color information of the second sub-pixel may be estimated by using the any color information of the plurality of third sub-pixels, for example, an average value of the any color information of the plurality of third sub-pixels is used as the any color information of the second sub-pixel. It should be understood that, after color information estimation is performed on the sub-pixels that lack color information, all sub-pixels obtained through superimposition include three types of color information. In this way, the resolution of the composite image may be greater than the resolution of the original image, and any pixel in the composite image includes three types of color information. Alternatively, when $n > f \times (n-1)$, $0 \leq i \leq n-1$ and $0 \leq j \leq n-1$. In any update of $(i \times s + W/2, j \times s + H/2)$, i and j do not change simultaneously, both i and j change monotonically (for example, monotonically increasing or monotonically decreasing), and i and j are integers. Therefore, the plurality of image capturing positions are 2n-1 image capturing positions in total. When $n > m$, $f = m$, where m is a remainder of $a \times n + b$ divided by 2n. When $n < m$, $f = 2n - m$. In this way, one original image is obtained through sensing at each of the 2n-1 image capturing positions, so that a total of 2n-1 original images are obtained. The 2n-1 original images may be superimposed to obtain the composite image. In the superimposition process, one pixel in an original image is divided into $2 \times 2$ sub-pixels, but some sub-pixels are superimposed with three types of color information, and some sub-pixels are not superimposed with three types of color information. For the second sub-pixel not superimposed with three types of color information, any color information lacked by the second sub-pixel is estimated by using a sub-pixel near the second sub-pixel. Specifically, any color information lacked by the second sub-pixel is obtained through estimation based on the any color information of the third sub-pixel that is near the second sub-pixel and that includes the any color information. For example, the any color information of the third sub-pixel is directly used as the any color information of the second sub-pixel. If a plurality of third sub-pixels exist near the second sub-pixel, the any color information of the second sub-pixel may be estimated by using the any color information of the plurality of third sub-pixels, for example, an average value of the any color information of the plurality of third sub-pixels is used as the any color information of the second sub-pixel. It should be understood that, after color information estimation is performed on the sub-pixels that lack color information, all sub-pixels obtained through superimposition include three types of color information. In this way, the resolution of the composite image may be greater than the resolution of the original image, and any pixel in the composite image includes three types of color information.

It can be learned based on the foregoing that, when n is 2 or $n > f \times (n-1)$, two manners may be used to enable the sub-pixels in the complete image capturing region to include three types of color information. The first manner is to add an image capturing position, that is, increase a quantity of times of movement of the photosensitive element; and the other manner is to estimate and supplement by using color information. It should be noted that, for the first manner, adding an image capturing position increases a quantity of times of movement of the photosensitive element, and increases an image capturing cost. However, all color information of sub-pixels in the complete image capturing region comes from actual image capturing. Therefore, authenticity of the composite image is ensured. For the second manner, the photosensitive element moves for a relatively small quantity of times, and captures images for a relatively small quantity of times, and information about some sub-pixels needs to be obtained through estimation by using information about surrounding sub-pixels, affecting authenticity of the composite image. However, a relatively small quantity of times of movement may reduce an image capturing time and reduce the image capturing cost. An implementer may adopt a balanced solution between an effect of reducing the quantity of times of movement on (application of) the composite image and a cost of implementing movement.

In a possible implementation, the photosensitive element senses a spectrum in one wavelength range, and coordinates of any image capturing position in the plurality of image capturing positions are $(i \times s+W/2, j \times s+H/2)$ in a same coordinate system, where $0 \leq i \leq n-1$ and $0 \leq j \leq n-1$, and in any update of $(i \times s+W/2, j \times s+H/2)$, i and j do not change simultaneously, i and j both change monotonically, and i and j are integers; W is a quantity of sensing pixels in a width direction of the photosensitive element; and H is a quantity of sensing pixels in a height direction of the photosensitive element.

For the complete image capturing region, one pixel in an original image is divided into $n \times n$ sub-pixels, where a size of each sub-pixel is $d/n \times d/n$. When the sensing element senses only the spectrum in one wavelength range, the original image and the composite image may be grayscale images.

In this embodiment of this application, the photosensitive element senses the spectrum in one wavelength range, that is, any sensing pixel in the sensing element senses a spectrum in a same wavelength range or a spectrum of a same color, and an image capturing position may be represented by coordinates of a center of the photosensitive element when the photosensitive element performs image capturing at the image capturing position. Coordinates of any one of the plurality of image capturing positions are $(i \times s+W/2, j \times s+H/2)$ in a same coordinate system, where s is the minimum distance of each movement of the photosensitive element, W is the quantity of sensing pixels in the width direction of the photosensitive element, and H is the quantity of sensing pixels in the height direction of the photosensitive element. $0 \leq i \leq n-1$ and $0 \leq i \leq n-1$, and in any update of $(i \times s+W/2, j \times s+H/2)$, i and j do not change simultaneously, both i and j change monotonically (for example, monotonically increasing or monotonically decreasing), and i and j are integers. Therefore, the plurality of image capturing positions are 2n-1 image capturing positions in total. In this way, one original image is obtained through sensing at each of the 2n-1 image capturing positions, so that a total of 2n-1 original images are obtained. The 2n-1 original images may be superimposed to obtain the composite image. In the superimposition process, one pixel in an original image is divided into $n \times n$ sub-pixels, so that the resolution of the composite image is greater than the resolution of the original image.

In a possible implementation, n is 2, the plurality of image capturing positions are two image capturing positions, and coordinates of the two image capturing positions are respectively (W/2, H/2) and (s+W/2, s+H/2) in a same coordinate system; W is a quantity of sensing pixels in a width direction of the photosensitive element; and H is a quantity of sensing pixels in a height direction of the photosensitive element; the photosensitive element senses spectrums in three wavelength ranges, where the spectrums in the three wavelength ranges correspond to three types of color information, and that pixels in the composite image are determined based on sub-pixels obtained through division in a process of superimposing the plurality of original images includes: the pixels in the composite image are determined based on second sub-pixels obtained through division in the process of superimposing the plurality of original images, where the second sub-pixel lacks one or two of the three types of color information; and any color information lacked by the second sub-pixel is determined based on the any color information of a third sub-pixel, where the third sub-pixel is a sub-pixel obtained through division in the process of superimposing the plurality of original images, and the third sub-pixel is a sub-pixel that is near the second sub-pixel and that includes the any color information.

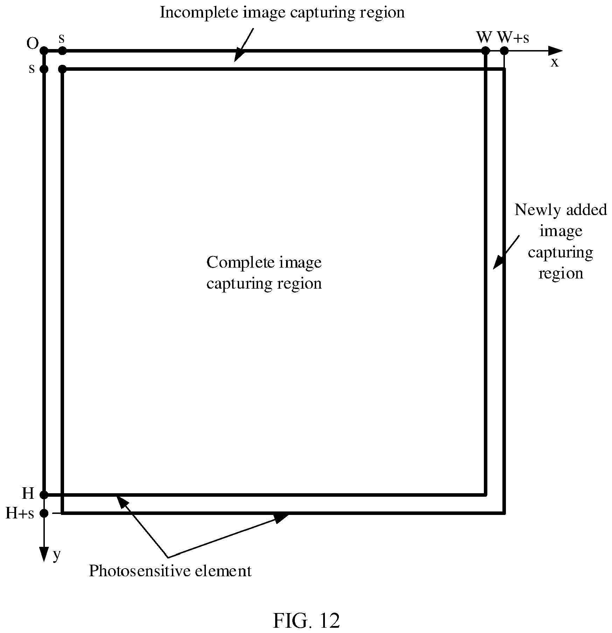

When n is 2, a value of b can only be 1, and the photosensitive element moves simultaneously in both the x direction and the y direction by $s=(a+1/2) \times d$, that is, a moving distance along a diagonal direction of an included angle formed by the x axis and the y axis is $\sqrt{2}s$. As shown in FIG. 12, in this case, a region in which $s \leq x \leq W$ and $s \leq y \leq H$ is a complete image capturing region, and a region in which $0 \leq x \leq s$ and $0 \leq y \leq H$ and a region in which $s \leq x \leq W$ and $0 \leq y \leq s$ are incomplete image capturing regions, that is, a region in which $W \leq x \leq W+s$ and $0 \leq y \leq H$ and a region in which $s \leq x \leq W+s$ and $H \leq y \leq H+s$ are newly added image capturing regions. A specific moving process of the photosensitive element is described as follows:

   (1) Capture an image at the initial position.
   At a moment t(0), the photosensitive element captures an image at the initial position (W/2, H/2), to obtain an original image 0.
   (2) Move by a distance $s=(a+1/2) \times d$ simultaneously in the x and y directions, and then capture an image.

In a time period from t(0) to t(1), the photosensitive element moves from the initial position (W/2, H/2) to an image capturing position (s+W/2, s+W/2). At a moment t(1), the photosensitive element captures an image at the position (s+W/2, s+W/2), to obtain an original image 1.

For the complete image capturing region, the original image 0 and the original image 1 are superimposed based on image capturing positions. One pixel in the original image 0 and the original image 1 may be divided into $2 \times 2$ sub-pixels, and a size of the sub-pixel is $d/2 \times d/2$. Any sub-pixel may cover two colors or one color. For a sub-pixel that can cover two colors, one color of the two colors is from the original image 0, and the other color is from the original image 1. For a sub-pixel that can cover one color, the color covered by the sub-pixel comes from the original image 0 and the original image 1. That is, for sub-pixels in this case, the color of the original image 0 is the same as the color of the original image 1.

In a synthesis process, any color information lacked by any sub-pixel may be obtained through estimation based on a sub-pixel near the sub-pixel. For example, if the color lacked by the sub-pixel is R, R color information of the sub-pixel is estimated by using the R color information of a sub-pixel that is closest to the sub-pixel and whose color is R. If there are a plurality of sub-pixels that are closest to the sub-pixel and whose color is R, an average value of R color information of the plurality of sub-pixels is calculated, and the average value of the R color information of the plurality of sub-pixels is used as the R color information of the sub-pixel.

It should be understood that, in this implementation, for a manner of selecting pixels in the composite image, refer to the descriptions shown in the foregoing Example 1 to Example 3.

In this embodiment of this application, an image capturing position may be represented by coordinates of a center of the photosensitive element when the photosensitive element performs image capturing at the image capturing position. When n is 2, the plurality of image capturing positions may be two image capturing positions, and coordinates of the two image capturing positions are respectively (W/2, H/2) and (s+W/2, s+H/2) in a same coordinate system, where W is the quantity of sensing pixels in the width direction of the photosensitive element, and H is the quantity of sensing pixels in the height direction of the photosensitive element. In this way, one original image is obtained through sensing at each of the two image capturing positions, so that a total of two original images are obtained. The two original images may be superimposed to obtain the composite image. In the superimposition process, one pixel in an original image is divided into 2×2 sub-pixels, so that the resolution of the composite image is greater than the resolution of the original image. However, the sub-pixel is not superimposed with three types of color information, and any color information lacked by the sub-pixel is estimated by using a sub-pixel near the sub-pixel. Specifically, any color information lacked by the second sub-pixel is obtained through estimation based on the any color information of the third sub-pixel that is near the second sub-pixel and that includes the any color information. For example, the any color information of the third sub-pixel is directly used as the any color information of the second sub-pixel. If a plurality of third sub-pixels exist near the second sub-pixel, the any color information of the second sub-pixel may be estimated by using the any color information of the plurality of third sub-pixels, for example, an average value of the any color information of the plurality of third sub-pixels is used as the any color information of the second sub-pixel. It should be understood that, after color information estimation is performed on the sub-pixels that lack color information, all sub-pixels obtained through superimposition include three types of color information. Therefore, any pixel in the composite image includes three types of color information.

In a possible implementation, the photosensitive element senses a spectrum in one wavelength range, n is 2, the plurality of image capturing positions are two image capturing positions, and coordinates of the two image capturing positions are respectively (W/2, H/2) and (s+W/2, s+H/2) in a same coordinate system; W is a quantity of sensing pixels in a width direction of the photosensitive element; and H is a quantity of sensing pixels in a height direction of the photosensitive element.

When n is 2, a value of b can only be 1, and the photosensitive element moves simultaneously in both the x direction and the y direction by s=(a+1/2)×d, that is, a moving distance along a diagonal direction of an included angle formed by the x axis and the y axis is $\sqrt{2}s$. A specific moving process of the photosensitive element is described as follows:

(1) Capture an image at the initial position.
At a moment t(0), the photosensitive element captures an image at the initial position (W/2, H/2), to obtain an original image 0.
(2) Move by a distance s=(a+1/2)×d simultaneously in the x and y directions, and then capture an image.

In a time period from t(0) to t(1), the photosensitive element moves from the initial position (W/2, H/2) to an image capturing position (s+W/2, s+W/2). At a moment t(1), the photosensitive element captures an image at the position (s+W/2, s+W/2), to obtain an original image 1.

For a pixel of an original image in a complete image capturing region, the pixel may be divided into 2×2 sub-pixels by superimposing the original image 0 and the original image 1. When the sensing element senses only the spectrum in one wavelength range, each sub-pixel includes same color information, and the original image and the composite image may be grayscale images.

In this embodiment of this application, the photosensitive element senses the spectrum in one wavelength range, and an image capturing position may be represented by coordinates of a center of the photosensitive element when the photosensitive element performs image capturing at the image capturing position. When n is 2, the plurality of image capturing positions may be two image capturing positions, and coordinates of the two image capturing positions are respectively (W/2, H/2) and (s+W/2, s+H/2) in a same coordinate system, where W is the quantity of sensing pixels in the width direction of the photosensitive element, and H is the quantity of sensing pixels in the height direction of the photosensitive element. In this way, one original image is obtained through sensing at each of the two image capturing positions, so that a total of two original images are obtained. The two original images may be superimposed to obtain the composite image. In the superimposition process, one pixel in an original image is divided into $2\times2$ sub-pixels, so that the resolution of the composite image is greater than the resolution of the original image.

The following describes in detail the technical solutions provided in embodiments of this application with reference to specific examples

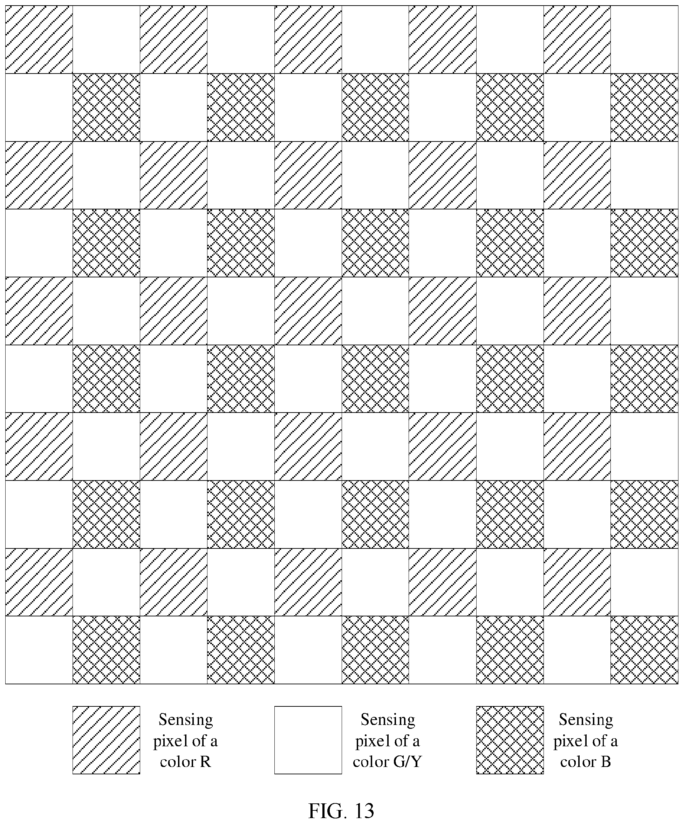

FIG. 13 is a schematic diagram of a photosensitive element according to an embodiment of this application. Colors in the photosensitive element may be RGB (three spectrums or colors) or RYYB (three spectrums or colors), and a total quantity of sensing pixels of the photosensitive element is $10\times10$, that is, H=10, and W=10.

Example 1: The technical solution provided in this embodiment of this application is described by using the photosensitive element shown in FIG. 13 by using an example in which n=3, a=1, b=1, and s=4d/3. Specifically:

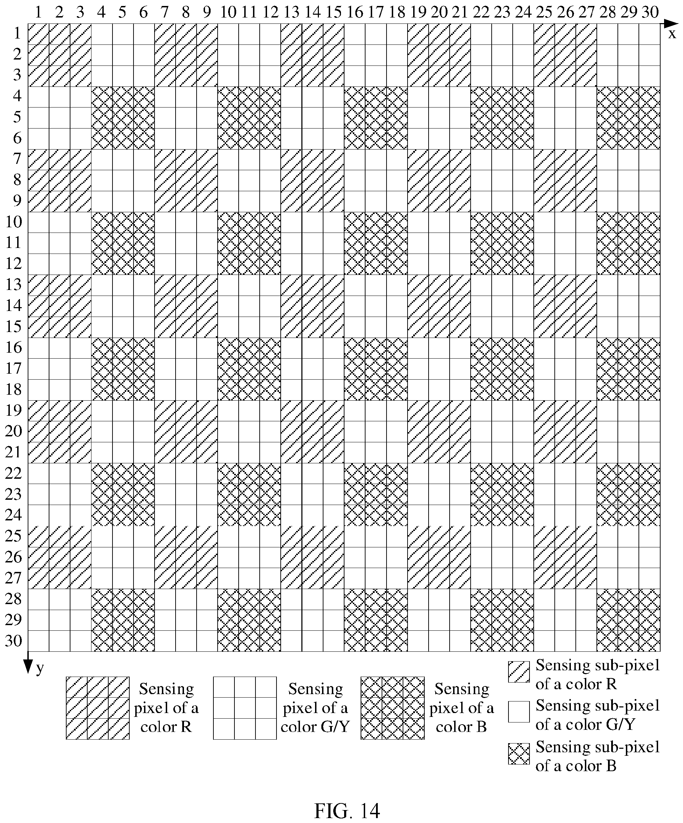

In this case, each sensing pixel in the photosensitive element is divided into $3\times3$ sensing sub-pixels, where a size of each sensing sub-pixel is d/3×d/3, as shown in FIG. 14. m=(a×n+b)|(2×n)=(1×3+1)|(2×3)=4, and therefore n<m; and f=2n-m=2×3-4=2, and f×(n-1)=2×(3-1)=4, and therefore n<f×(n-1). Movement needs to be performed twice in the x direction, and movement needs to be performed twice in the y direction, so that all sub-pixels in the complete image capturing region include three types of color information.

1. Image capturing process

In the coordinate system xOy, images are captured separately at positions (W/2, H/2), (4d/3+W/2, H/2), (8d/3+W/2, H/2), (8d/3+W/2, 4d/3+H/2), and (8d/3+W/2, 8d/3+H/2), to obtain five original images. The photosensitive element first moves in the x direction, and then moves in the y direction after the movement in the x direction ends. A specific moving process is as follows:

(1) Capture an image at the initial position.
At a moment t(0), the photosensitive element captures an image at the initial position (W/2, H/2), to obtain an original image 0.
(2) Move and capture an image in the x direction.

In a time period from t(0) to t(1)_x, the photosensitive element moves by a distance 4d/3 in the x direction. The photosensitive element captures an image at a position at a moment t(1)_x, that is, the photosensitive element captures an image at a position (4d/3+W/2, H/2), to obtain an original image x(1).

In a time period from t(1)_x to t(2)_x, the photosensitive element moves by the distance 4d/3 in the x direction. The photosensitive element captures an image at a position at a moment t(2)_x, that is, the photosensitive element captures an image at a position (8d/3+W/2, H/2), to obtain an original image x(2).

(3) Move and capture an image in the y direction.

In a time period from t(2)_x to t(1)_y, the photosensitive element moves by the distance 4d/3 in the y direction. The photosensitive element captures an image at a position at a moment t(1)_y, that is, the photosensitive element captures an image at a position (8d/3+W/2, 4d/3+H/2), to obtain an original image y(1).

In a time period from t(1)_y to t(2)_y, the photosensitive element moves by the distance 4d/3 in the y direction. The photosensitive element captures an image at a position at a moment t(2)_y, that is, the photosensitive element captures an image at a position (8d/3+W/2, 8d/3+H/2), to obtain an original image y(2).

2. Synthesis process

Because n=3, and a moving distance of each movement is 4d/3, it may be considered that one pixel in an original image is divided into $3\times3$ sub-pixels in the superimposition process, where a size of each sub-pixel is d/3×d/3; or in other words, it may be considered that each sensing pixel in the photosensitive element is divided into $3\times3$ sensing sub-pixels, where a size of each sensing sub-pixel is d/3×d/3, as shown in FIG. 14. For any row of sensing sub-pixels (with a same y coordinate value) in the photosensitive element, a color of the first sensing sub-pixel (with a smallest x coordinate value) in the row may be R or G/Y For any column of sensing sub-pixels (with a same x coordinate value) in the photosensitive element, a color of the first sensing sub-pixel (with a smallest x coordinate value) in the column may be R or G/Y.

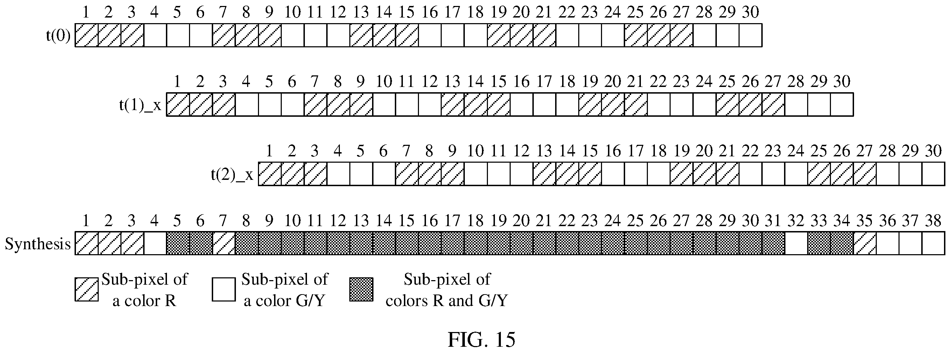

(1) A process of movement and image capturing, and superimposition in the x direction of any row of sensing sub-pixels in which the first sensing sub-pixel has a color R is shown in FIG. 15. For any row of sub-pixels collected by this row of sensing sub-pixels, there are a total of 30 sub-pixels, which are numbered from 1 to 30 in sequence. Three rows of sub-pixels collected by this row of sensing sub-pixels are superimposed based on positions of the sub-pixels in the coordinate system xOy, where the three rows of sub-pixels are respectively in the original image 0, the original image x(1), and the original image x(2), so that one row of sub-pixels obtained through superimposition has a total of 38 sub-pixels, which are numbered from 1 to 38 in sequence. For this row of sub-pixels, sub-pixels numbered from 8 to 31 can obtain two colors (R and G/Y), sub-pixels numbered 5, 6, 33, and 34 can also obtain two colors, and sub-pixels numbered from 1 to 4, 7, 32, and 35 to 38 can obtain only one color.

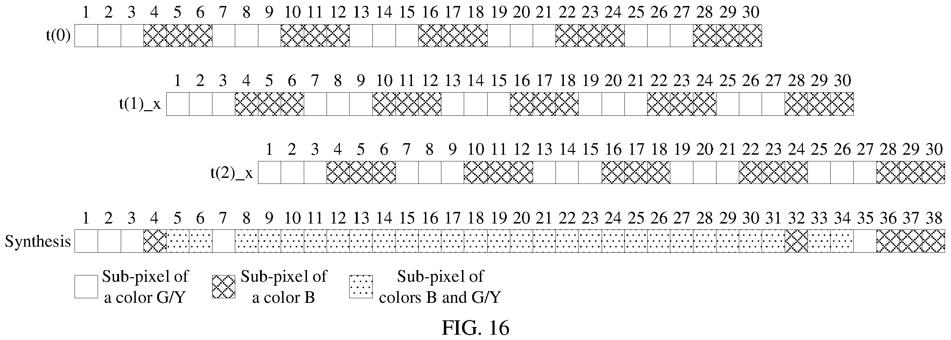

(2) A process of movement and image capturing, and superimposition in the x direction of any row of sensing sub-pixels in which the first sensing sub-pixel has a color G/Y is shown in FIG. 16. Compared with the case of any row of sensing sub-pixels in which the first sensing sub-pixel has the color R, in this case, laws of movement and image capturing, and superimposition are the same, except that only color types that can be obtained by sub-pixels are different. Sub-pixels numbered from 8 to 31 may obtain two colors (G/Y and B). For details, refer to the description in FIG. 15. Details are not described herein again.

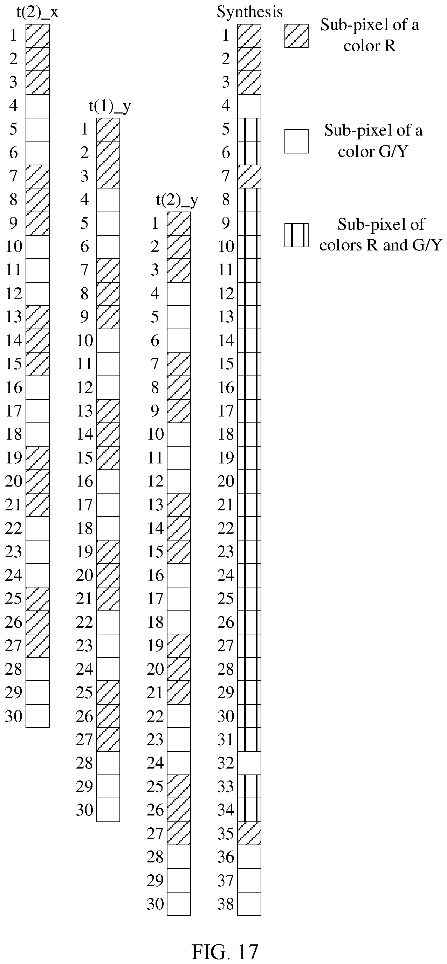

(3) A process of movement and image capturing in the y direction of any column of sensing sub-pixels in which the first sensing sub-pixel has a color R is shown in FIG. 17. For any column of sub-pixels collected by this column of sensing sub-pixels, there are a total of 30 sub-pixels, which are numbered from 1 to 30 in sequence. Three columns of sub-pixels collected by this column of sensing sub-pixels are superimposed based on positions of the sub-pixels in the coordinate system xOy, where the three columns of sub-pixels are respectively in the original image x(2), the original image y(1), and the original image y(2), so that one column of sub-pixels obtained through superimposition has a total of 38 sub-pixels, which are numbered from 1 to 38 in sequence. For this column of sub-pixels, sub-pixels numbered from 8 to 31 can obtain two colors (R and G/Y), sub-pixels numbered 5, 6, 33, and 34 can also obtain two colors, and sub-pixels numbered from 1 to 4, 7, 32, and 35 to 38 can obtain only one color.

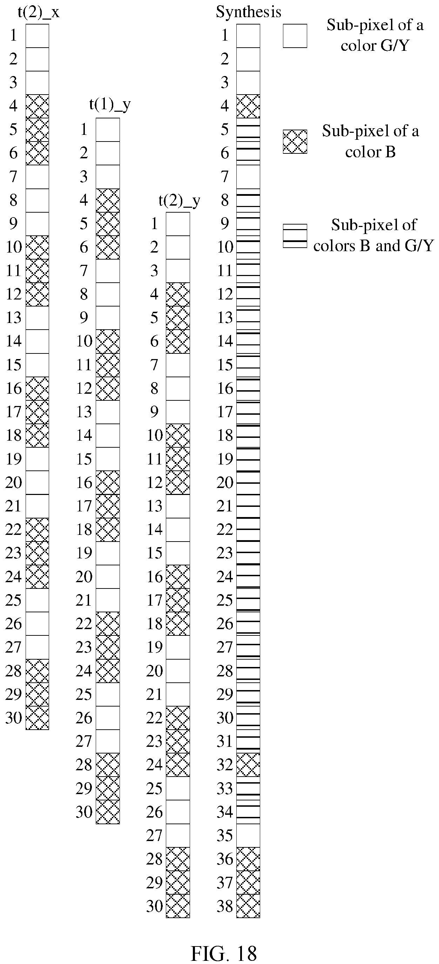

(4) A process of movement and image capturing, and superimposition in the y direction of any column of sensing sub-pixels in which the first sensing sub-pixel has a color G/Y is shown in FIG. 18. Compared with the case of any column of sensing sub-pixels in which the first sensing sub-pixel has the color R, in this case, laws of movement and image capturing, and superimposition are the same, except that only color types that can be obtained by sub-pixels are different. Sub-pixels numbered from 8 to 31 may obtain two colors (G/Y and B). For details, refer to the description in FIG. 17. Details are not described herein again.

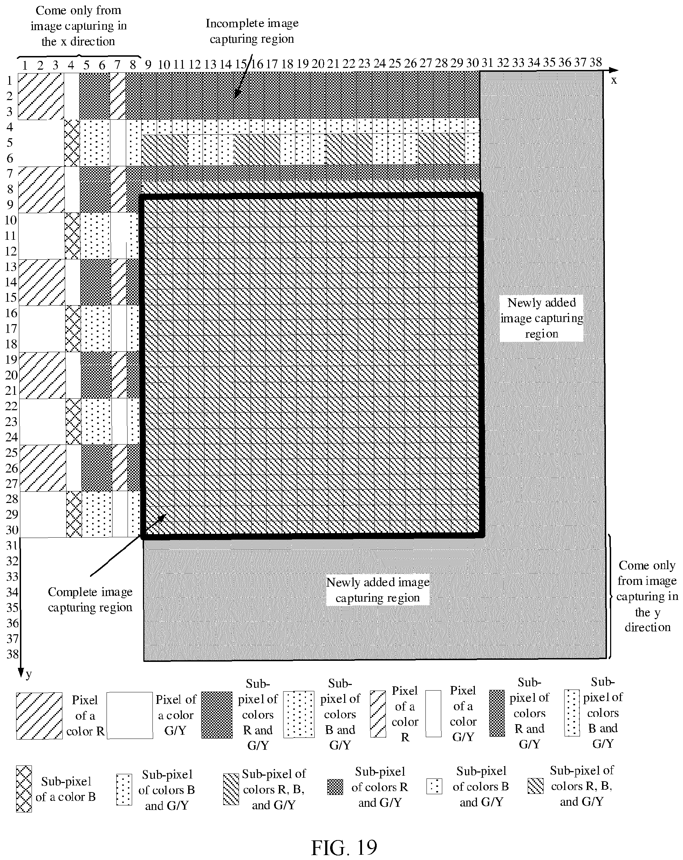

FIG. 19 shows a result obtained after the original image 0, the original image x(1), the original image x(2), the original image y(1), and the original image y(2) are superimposed based on image capturing positions. As shown in FIG. 19, a size of a sub-pixel in the complete image capturing region is d/3×d/3, and sub-pixels in the complete image capturing region may be used as pixels in the composite image. There are sub-pixels of a plurality of sizes in the incomplete image capturing regions, for example, d/3×d/3, d/3×2d/3, d/3×d, and 2d/3×d, and the sub-pixels in the complete image capturing region

and the sub-pixels in the incomplete image capturing regions may be used as pixels in the composite image. There are also pixels that are not divided into sub-pixels in the incomplete image capturing regions, and the sub-pixels in the complete image capturing region, the sub-pixels that are in the incomplete image capturing regions and that are used as pixels in the composite image, and the pixels that are not divided into sub-pixels in the incomplete image capturing regions may be used as pixels in the composite image. In the incomplete image capturing regions, a sub-pixel whose size is d/3×2d/3 may be considered as 1×2 sub-pixels whose size is d/3×d/3, a sub-pixel whose size is d/3×d may be considered as 1×3 sub-pixels whose size is d/3×d/3, a sub-pixel whose size is 2d/3×d may be considered as 2×3 sub-pixels whose size is d/3×d/3, and a pixel that is not divided into sub-pixels may be considered as 3×3 sub-pixels whose size is d/3×d/3. Therefore, the pixels in the composite image come from sub-pixels whose row numbers are 1 to 30 and whose column numbers are 1 to 30. It can be found that, in the movement and image capturing process, movement in the y direction starts after movement in the x direction by eight sub-pixels. Therefore, in the synthesis process, pixels in the first column to the eighth column cannot be superimposed with image capturing information in the y direction, and pixel information of the pixels in the first column to the eighth column comes only from image capturing in the x direction. Similarly, pixels in the 31st row to the 38th row come from image capturing in the y direction. Any sub-pixel in pixels whose row numbers are 9 to 30 and whose column numbers are 9 to 30 may obtain three colors, which are specifically R and G/Y obtained through image capturing in the x direction and G/Y and B obtained through image capturing in the y direction, or G/Y and B obtained through image capturing in the x direction and R and G/Y obtained through image capturing in the y direction. Sub-pixels whose row numbers are 31 to 38 and whose column numbers are 31 to 38 are sub-pixels in the newly added image capturing regions.

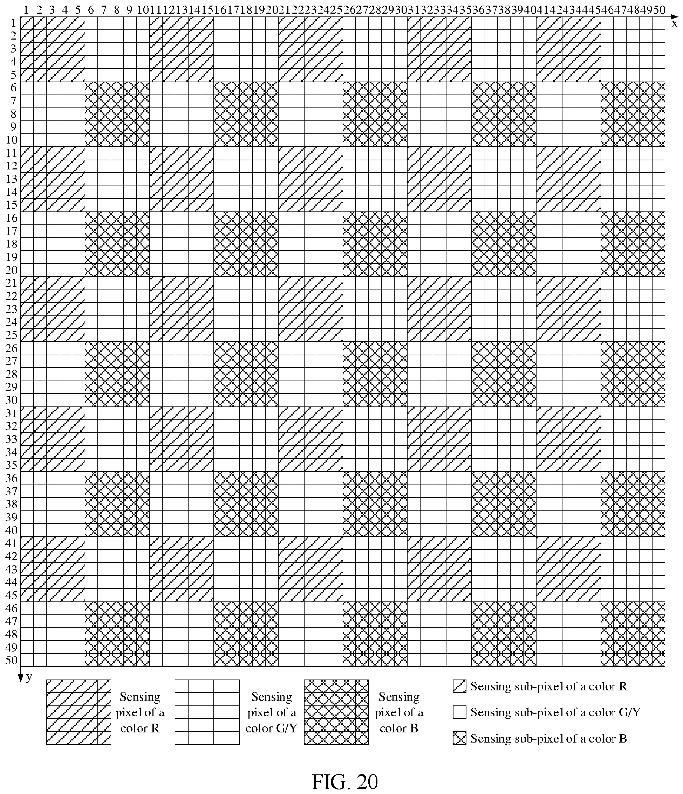

Example 2: The technical solution provided in this embodiment of this application is described by using the photosensitive element shown in FIG. 13 by using an example in which n=5, a=1, b=1, and s=6d/5. Specifically: In this case, each sensing pixel in the photosensitive element is divided into 5×5 sensing sub-pixels, where a size of each sensing sub-pixel is d/5×d/5, as shown in FIG. 20. $m=(a\times n+b)|(2\times n)=(1\times 5+1)|(2\times 5)=6$, and therefore n<m; and $f=2n-m=2\times 5-6=4$, and $f\times(n-1)=4\times(5-1)=16$, and therefore $n<f\times(n-1)$. Movement needs to be performed for four times in the x direction, and movement needs to be performed for four times in the y direction, so that all sub-pixels in the complete image capturing region include three types of color information.

1. Image capturing process

In the coordinate system xOy, images are captured separately at positions (W/2, H/2), (6d/5+W/2, H/2), (12d/5+W/2, H/2), (18d/5+W/2, H/2), (24d/5+W/2, H/2), (24d/5+W/2, 6d/5+H/2), (24d/5+W/2, 12d/5+H/2), (24d/5+W/2, 18d/5+H/2), and (24d/5+W/2, 24d/5+H/2), to obtain nine original images. The photosensitive element first moves in the x direction, and then moves in the y direction after the movement in the x direction ends. A specific moving process is as follows:

(1) Capture an image at the initial position.
At a moment t(0), the photosensitive element captures an image at the initial position (W/2, H/2), to obtain an original image 0.
(2) Move and capture an image in the x direction.

In a time period from t(0) to t(1)_x, the photosensitive element moves by a distance 6d/5 in the x direction. The photosensitive element captures an image at a position at a moment t(1)_x, that is, the photosensitive element captures an image at a position (6d/5+W/2, H/2), to obtain an original image x(1).

In a time period from t(1)_x to t(2)_x, the photosensitive element moves by the distance 6d/5 in the x direction. The photosensitive element captures an image at a position at a moment t(2)_x, that is, the photosensitive element captures an image at a position (12d/5+W/2, H/2), to obtain an original image x(2).

In a time period from t(2)_x to t(3)_x, the photosensitive element moves by the distance 6d/5 in the x direction. The photosensitive element captures an image at a position at a moment t(3)_x, that is, the photosensitive element captures an image at a position (18d/5+W/2, H/2), to obtain an original image x(3).

In a time period from t(3)_x to t(4)_x, the photosensitive element moves by the distance 6d/5 in the x direction. The photosensitive element captures an image at a position at a moment t(4)_x, that is, the photosensitive element captures an image at a position (24d/5+W/2, H/2), to obtain an original image x(4).

(3) Move and capture an image in the y direction.

In a time period from t(4)_x to t(1)_y, the photosensitive element moves by the distance 6d/5 in the y direction. The photosensitive element captures an image at a position at a moment t(1)_y, that is, the photosensitive element captures an image at a position (24d/5+W/2, 6d/5+H/2), to obtain an original image y(1).

In a time period from t(1)_y to t(2)_y, the photosensitive element moves by the distance 6d/5 in the y direction. The photosensitive element captures an image at a position at a moment t(2)_y, that is, the photosensitive element captures an image at a position (24d/5+W/2, 12d/5+H/2), to obtain an original image y(2).

In a time period from t(2)_y to t(3)_y, the photosensitive element moves by the distance 6d/5 in the y direction. The photosensitive element captures an image at a position at a moment t(3)_y, that is, the photosensitive element captures an image at a position (24d/5+W/2, 18d/5+H/2), to obtain an original image y(3).

In a time period from t(3)_y to t(4)_y, the photosensitive element moves by the distance 6d/5 in the y direction. The photosensitive element captures an image at a position at a moment t(4)_y, that is, the photosensitive element captures an image at a position (24d/5+W/2, 24d/5+H/2), to obtain an original image y(4).

2. Synthesis process

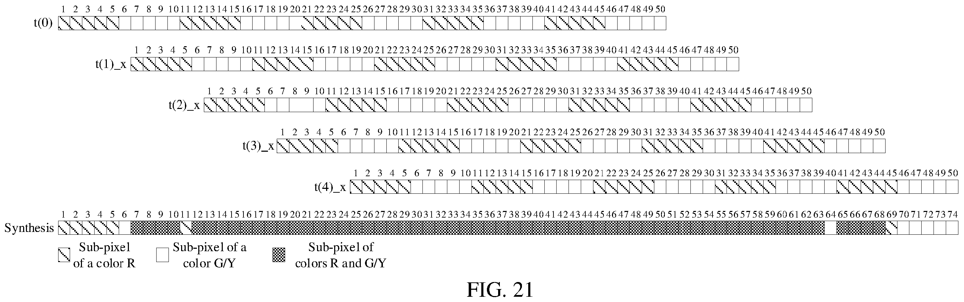

A process of movement and image capturing, and superimposition in the x direction of any row of sensing sub-pixels in which the first sensing sub-pixel has a color R is shown in FIG. 21. For any row of sub-pixels collected by this row of sensing sub-pixels, there are a total of 50 sub-pixels, which are numbered from 1 to 50 in sequence. After movement is performed for four times in the x direction, five rows of sub-pixels collected by this row of sensing sub-pixels are superimposed based on positions of the sub-pixels in the coordinate system xOy, where the five rows of sub-pixels are respectively in the original image 0, the original image x(1), the original image x(2), the original image x(3), and the original image x(4), so that one row of sub-pixels obtained through superimposition has a total of 74 sub-pixels, which are numbered from 1 to 74 in sequence. A segment of consecutive sub-pixels that all can obtain two types of color information, that is, sub-pixels numbered from 12 to 63, exists in this row of sub-pixels, and therefore, a requirement for obtaining the composite image is met.

Similarly, a process of movement and image capturing, and superimposition in the x direction of any row of sensing sub-pixels in which the first sensing sub-pixel has a color G/Y, a process of movement and image capturing in the y direction of any column of sensing sub-pixels in which the first sensing sub-pixel has a color R, and a process of movement and image capturing, and superimposition in the y direction of any column of sensing sub-pixels in which the first sensing sub-pixel has a color G/Y are all the same as the process of movement and image capturing, and superimposition in the x direction of any row of sensing sub-pixels in which the first sensing sub-pixel has a color R in terms of principles or laws. Refer to the description shown in FIG. 21, and details are not listed herein again.

It should be understood that, in this case, a principle or a law of a process of obtaining the composite image based on sub-pixels is the same as the principle or the law described in FIG. 19. For details, refer to the description shown in FIG. 19. Details are not described herein again.

Example 3: The technical solution provided in this embodiment of this application is described by using the photosensitive element shown in FIG. 13 by using an example in which n=5, a=1, b=2, and s=7d/5. Specifically:

In this case, each sensing pixel in the photosensitive element is divided into 5×5 sensing sub-pixels, where a size of each sensing sub-pixel is d/5×d/5, as shown in FIG. 20. m=(a×n+b)|(2×n)=(1×5+2)|(2×5)=7, and therefore n<m; and f=2n-m=2×5-7=3, and f×(n-1)=3×(5-1)=12, and therefore n<f×(n-1). Movement needs to be performed for four times in the x direction, and movement needs to be performed for four times in the y direction, so that all sub-pixels in the complete image capturing region include three types of color information.

1. Image capturing process

In the coordinate system xOy, images are captured separately at positions (W/2, H/2), (7d/5+W/2, H/2), (14d/5+W/2, H/2), (21d/5+W/2, H/2), (28d/5+W/2, H/2), (28d/5+W/2, 7d/5+H/2), (28d/5+W/2, 14d/5+H/2), (28d/5+W/2, 21d/5+H/2), and (28d/5+W/2, 28d/5+H/2), to obtain nine original images. The photosensitive element first moves in the x direction, and then moves in the y direction after the movement in the x direction ends. A specific moving process is as follows:

> (1) Capture an image at the initial position.
> At a moment t(0), the photosensitive element captures an image at the initial position (W/2, H/2), to obtain an original image 0.
> (2) Move and capture an image in the x direction.

In a time period from t(0) to t(1)_x, the photosensitive element moves by a distance 7d/5 in the x direction. The photosensitive element captures an image at a position at a moment t(1)_x, that is, the photosensitive element captures an image at a position (7d/5+W/2, H/2), to obtain an original image x(1).

In a time period from t(1)_x to t(2)_x, the photosensitive element moves by the distance 7d/5 in the x direction. The photosensitive element captures an image at a position at a moment t(2)_x, that is, the photosensitive element captures an image at a position (14d/5+W/2, H/2), to obtain an original image x(2).

In a time period from t(2)_x to t(3)_x, the photosensitive element moves by the distance 7d/5 in the x direction. The photosensitive element captures an image at a position at a moment t(3)_x, that is, the photosensitive element captures an image at a position (21d/5+W/2, H/2), to obtain an original image x(3).

In a time period from t(3)_x to t(4)_x, the photosensitive element moves by the distance 7d/5 in the x direction. The photosensitive element captures an image at a position at a moment t(4)_x, that is, the photosensitive element captures an image at a position (28d/5+W/2, H/2), to obtain an original image x(4).

(3) Move and capture an image in the y direction.

In a time period from t(4)_x to t(1)_y, the photosensitive element moves by the distance 7d/5 in the y direction. The photosensitive element captures an image at a position at a moment t(1)_y, that is, the photosensitive element captures an image at a position (28d/5+W/2, 7d/5+H/2), to obtain an original image y(1).

In a time period from t(1)_y to t(2)_y, the photosensitive element moves by the distance 7d/5 in the y direction. The photosensitive element captures an image at a position at a moment t(2)_y, that is, the photosensitive element captures an image at a position (28d/5+W/2, 14d/5+H/2), to obtain an original image y(2).

In a time period from t(2)_y to t(3)_y, the photosensitive element moves by the distance 7d/5 in the y direction. The photosensitive element captures an image at a position at a moment t(3)_y, that is, the photosensitive element captures an image at a position (28d/5+W/2, 21d/5+H/2), to obtain an original image y(3).

In a time period from t(3)_y to t(4)_y, the photosensitive element moves by the distance 7d/5 in the y direction. The photosensitive element captures an image at a position at a moment t(4)_y, that is, the photosensitive element captures an image at a position (28d/5+W/2, 28d/5+H/2), to obtain an original image y(4).

2. Synthesis process

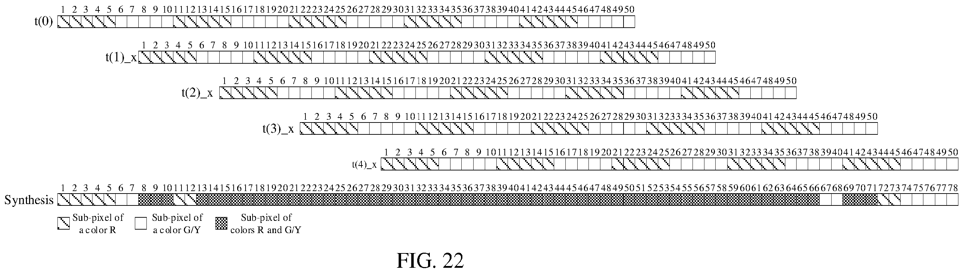

A process of movement and image capturing, and superimposition in the x direction of any row of sensing sub-pixels in which the first sensing sub-pixel has a color R is shown in FIG. 22. For any row of sub-pixels collected by this row of sensing sub-pixels, there are a total of 50 sub-pixels, which are numbered from 1 to 50 in sequence. After movement is performed for four times in the x direction, five rows of sub-pixels collected by this row of sensing sub-pixels are superimposed based on positions of the sub-pixels in the coordinate system xOy, where the five rows of sub-pixels are respectively in the original image 0, the original image x(1), the original image x(2), the original image x(3), and the original image x(4), so that one row of sub-pixels obtained through superimposition has a total of 78 sub-pixels, which are numbered from 1 to 78 in sequence. A segment of consecutive sub-pixels that all can obtain two types of color information, that is, sub-pixels numbered from 13 to 66, exists in this row of sub-pixels, and therefore, a requirement for obtaining the composite image is met.

Similarly, a process of movement and image capturing, and superimposition in the x direction of any row of sensing sub-pixels in which the first sensing sub-pixel has a color G/Y, a process of movement and image capturing in the y direction of any column of sensing sub-pixels in which the first sensing sub-pixel has a color R, and a process of movement and image capturing, and superimposition in the y direction of any column of sensing sub-pixels in which the first sensing sub-pixel has a color G/Y are all the same as the process of movement and image capturing, and superimposition in the x direction of any row of sensing sub-pixels in which the first sensing sub-pixel has a color R in terms of principles or laws. Refer to the description shown in FIG. 22, and details are not listed herein again.

It should be understood that, in this case, a principle or a law of a process of obtaining the composite image based on sub-pixels is the same as the principle or the law described in FIG. 19. For details, refer to the description shown in FIG. 19. Details are not described herein again.

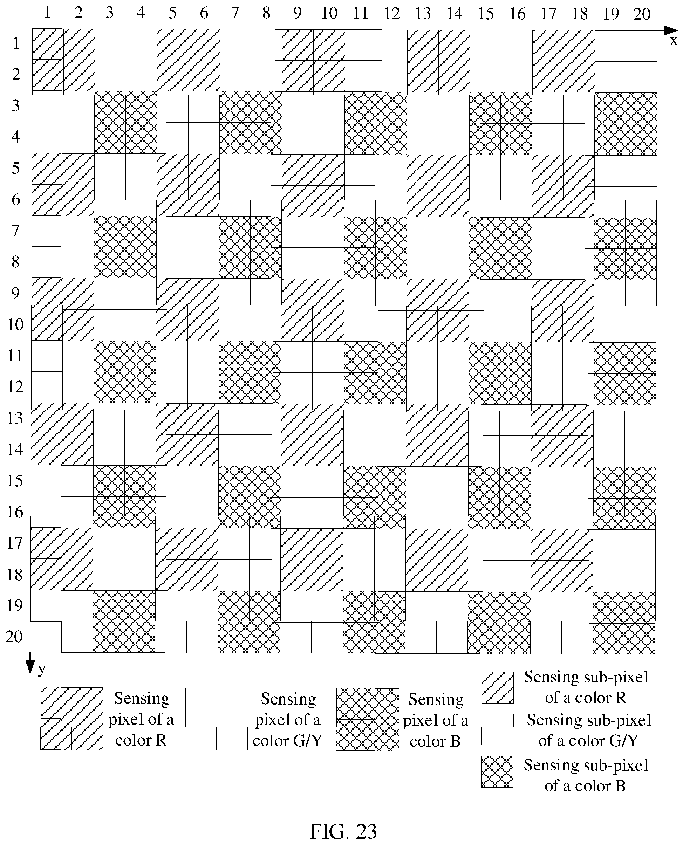

Example 4: The technical solution provided in this embodiment of this application is described by using the photosensitive element shown in FIG. 13 by using an example in which n=2, a=1, b=1, and s=3d/2. Specifically: In this case, each sensing pixel in the photosensitive element is divided into 2×2 sensing sub-pixels, where a size of each sensing sub-pixel is d/2×d/2, as shown in FIG. 23. If movement needs to be performed once in the x direction, and movement needs to be performed once in the y direction, the sub-pixels in the complete image capturing region cannot all include three types of color information. In order to enable all the sub-pixels in the complete image capturing region to include three types of color information, in this example, movement needs to be performed twice in the x direction, and movement needs to be performed twice in the y direction.

1. Image capturing process

(1) Capture an image at the initial position.
At a moment t(0), the photosensitive element captures an image at the initial position (W/2, H/2), to obtain an original image 0.
(2) Move and capture an image in the x direction.

In a time period from t(0) to t(1)_x, the photosensitive element moves by a distance s in the x direction. The photosensitive element captures an image at a position at a moment t(1)_x, that is, the photosensitive element captures an image at a position (3d/2+W/2, H/2), to obtain an original image x(1).

In a time period from t(1)_x to t(2)_x, the photosensitive element moves by the distance s in the x direction. The photosensitive element captures an image at a position at a moment t(2)_x, that is, the photosensitive element captures an image at a position (3d+W/2, H/2), to obtain an original image x(2).

(3) Move and capture an image in the y direction.

In a time period from t(n)_x to t(1)_y, the photosensitive element moves by the distance s in the y direction. The photosensitive element captures an image at a position at a moment t(1)_y, that is, the photosensitive element captures an image at a position (3d+W/2, 3d/2+H/2), to obtain an original image y(1).

In a time period from t(1)_y to t(2)_y, the photosensitive element moves by the distance s in the y direction. The photosensitive element captures an image at a position at a moment t(2)_y, that is, the photosensitive element captures an image at a position (3d+W/2, 3d+H/2), to obtain an original image y(2).

2. Synthesis process

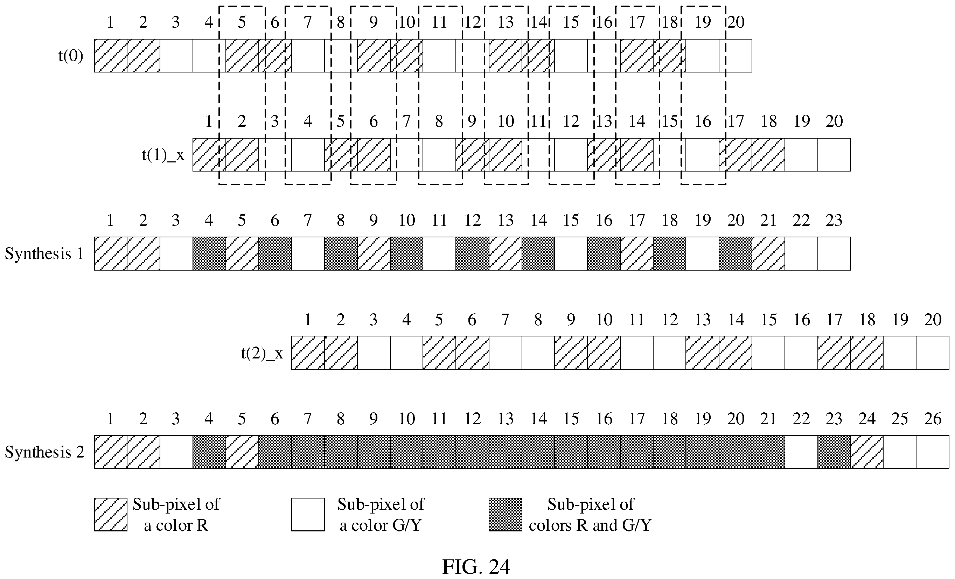

A process of movement and image capturing, and superimposition in the x direction of any row of sensing sub-pixels in which the first sensing sub-pixel has a color R is shown in FIG. 24. For any row of sub-pixels collected by this row of sensing sub-pixels, there are a total of 20 sub-pixels, which are numbered from 1 to 20 in sequence. If movement is performed only once in the x direction, two rows of sub-pixels collected by this row of sensing sub-pixels are superimposed based on positions of the sub-pixels in the coordinate system xOy, where the two rows of sub-pixels are respectively in the original image 0 and the original image x(1). Sub-pixels of only a same color are superimposed in the superimposition process, for example, sub-pixels framed by the dashed line box in FIG. 24 are superimposed with only one color. For example, a sub-pixel whose row number is 5 in the original image 0 and a sub-pixel whose row number is 2 in the original image x(1) are superimposed with only one color, and a sub-pixel whose row number is 7 in the original image 0 and a sub-pixel whose row number is 4 in the original image x(1) are superimposed with only one color, and so on. In this way, sub-pixels that can obtain only one type of color information exist intermittently in one row of sub-pixels obtained through superimposition, and a segment of consecutive sub-pixels that can obtain two colors cannot exist. As shown in Synthesis 1 in FIG. 24, a row of sub-pixels obtained through superimposition has a total of 23 sub-pixels, which are numbered from 1 to 23 in sequence. Sub-pixels that can obtain only one type of color information exist intermittently in this row of sub-pixels, and a segment of consecutive sub-pixels that can obtain two colors cannot exist.

In the superimposition process, each sub-pixel needs to obtain three colors. Specifically, two colors need to be obtained in the x direction and two colors need to be obtained in the y direction, that is, R and G/Y/W obtained through image capturing in the x direction and G/Y/W and B obtained through image capturing in the y direction, or G/Y and B obtained through image capturing in the x direction and R and G/Y obtained through image capturing in the y direction. Therefore, in this case, movement and image capturing need to be added once in the x direction, to obtain the original image x(2). After movement is performed twice in the x direction, three rows of sub-pixels collected by this row of sensing sub-pixels are superimposed based on positions of the sub-pixels in the coordinate system xOy, where the three rows of sub-pixels are respectively in the original image 0, the original image x(1), and the original image x(2). In this way, existing sub-pixels superimposed with only one color only when the original image 0 and the original image x(1) are superimposed and sub-pixels of another color of the original image x(2) are superimposed. For example, the sub-pixel whose row number is 7 in the original image 0 and the sub-pixel whose row number is 4 in the original image x(1) are superimposed with only one color, and a sub-pixel whose row number is 1 in the original image x(2) is of another color; and when the sub-pixel whose row number is 7 in the original image 0, the sub-pixel whose row number is 4 in the original image x(1), and the sub-pixel whose row number is 1 in the original image x(2) are superimposed, the sub-pixels are superimposed with two colors. In this way, a row of sub-pixels obtained through superimposition separately from three rows of sub-pixels in the original image 0, the original image x(1), and the original image x(2) has a total of 26 sub-pixels (for example, Synthesis 2 in FIG. 24), which are numbered from 1 to 26 in sequence. A segment of consecutive sub-pixels that all can obtain two types of color information, that is, sub-pixels numbered from 6 to 21, exists in this row of sub-pixels, and therefore, a requirement for obtaining the composite image is met.

Similarly, a process of movement and image capturing, and superimposition in the x direction of any row of sensing sub-pixels in which the first sensing sub-pixel has a color G/Y, a process of movement and image capturing in the y direction of any column of sensing sub-pixels in which the first sensing sub-pixel has a color R, and a process of movement and image capturing, and superimposition in the y direction of any column of sensing sub-pixels in which the first sensing sub-pixel has a color G/Y are all the same as the process of movement and image capturing, and superimposition in the x direction of any row of sensing sub-pixels in which the first sensing sub-pixel has a color R in terms of principles or laws. Refer to the description shown in FIG. 24, and details are not listed herein again.

It should be understood that, in this case, a principle or a law of a process of obtaining the composite image based on sub-pixels is the same as the principle or the law described in FIG. 19. For details, refer to the description shown in FIG. 19. Details are not described herein again.

Example 5: The technical solution provided in this embodiment of this application is described by using the photosensitive element shown in FIG. 13 by using an example in which n=3, a=1, b=2, and s=5d/3. Specifically: In this case, each sensing pixel in the photosensitive element is divided into $3 \times 3$ sensing sub-pixels, where a size of each sensing sub-pixel is $d/3 \times d/3$, as shown in FIG. 14. m=(a×n+b)|(2×n)=(1×3+2)|(2×3)=5, and therefore n<m; and f=2n-m=2×3-5=1, and f×(n-1)=1×(3-1)=2, and therefore n>f×(n-1). If movement needs to be performed twice in the x direction, and movement needs to be performed twice in the y direction, the sub-pixels in the complete image capturing region cannot all include three types of color information. In order to enable all the sub-pixels in the complete image capturing region to include three types of color information, in this example, movement needs to be performed for three times in the x direction, and movement needs to be performed for three times in the y direction.

1. Image capturing process

In the coordinate system xOy, images are captured separately at positions (W/2, H/2), (5d/3+W/2, H/2), (10d/3+W/2, H/2), (5d+W/2, H/2), (5d+W/2, 5d/3+H/2), (5d+W/2, 10d/3+H/2), and (5d+W/2, 5d+H/2), to obtain seven original images. The photosensitive element first moves in the x direction, and then moves in the y direction after the movement in the x direction ends. A specific moving process is as follows:

> (1) Capture an image at the initial position.
> At a moment t(0), the photosensitive element captures an image at the initial position (W/2, H/2), to obtain an original image 0.
> (2) Move and capture an image in the x direction.

In a time period from t(0) to t(1)_x, the photosensitive element moves by a distance 5d/3 in the x direction. The photosensitive element captures an image at a position at a moment t(1)_x, that is, the photosensitive element captures an image at a position (5d/3+W/2, H/2), to obtain an original image x(1).

In a time period from t(1)_x to t(2)_x, the photosensitive element moves by the distance 5d/3 in the x direction. The photosensitive element captures an image at a position at a moment t(2)_x, that is, the photosensitive element captures an image at a position (10d/3+W/2, H/2), to obtain an original image x(2).

In a time period from t(2)_x to t(3)_x, the photosensitive element moves by the distance 5d/3 in the x direction. The photosensitive element captures an image at a position at a moment t(3)_x, that is, the photosensitive element captures an image at a position (5d/3+W/2, H/2), to obtain an original image x(3).

(3) Move and capture an image in the y direction.

In a time period from t(3)_x to t(1)_y, the photosensitive element moves by the distance 5d/3 in the y direction. The photosensitive element captures an image at a position at a moment t(1)_y, that is, the photosensitive element captures an image at a position (5d+W/2, 5d/3+H/2), to obtain an original image y(1).

In a time period from t(1)_y to t(2)_y, the photosensitive element moves by the distance 5d/3 in the y direction. The photosensitive element captures an image at a position at a moment t(2)_y, that is, the photosensitive element captures an image at a position (5d+W/2, 10d/3+H/2), to obtain an original image y(2).

In a time period from t(2)_y to t(3)_y, the photosensitive element moves by the distance 5d/3 in the y direction. The photosensitive element captures an image at a position at a moment t(3)_y, that is, the photosensitive element captures an image at a position (5d+W/2, 5d+H/2), to obtain an original image y(3).

2. Synthesis process

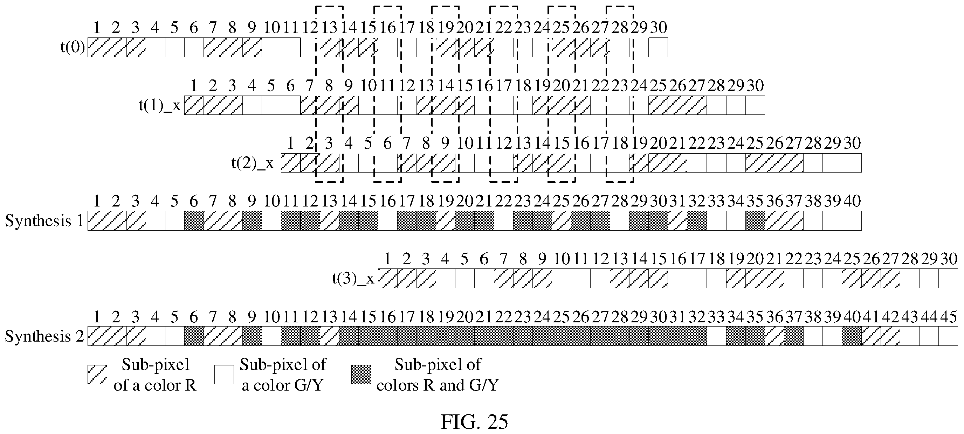

A process of movement and image capturing, and superimposition in the x direction of any row of sensing sub-pixels in which the first sensing sub-pixel has a color R is shown in FIG. 25. For any row of sub-pixels collected by this row of sensing sub-pixels, there are a total of 30 sub-pixels, which are numbered from 1 to 30 in sequence. If movement is performed only twice in the x direction, three rows of sub-pixels collected by this row of sensing sub-pixels are superimposed based on positions of the sub-pixels in the coordinate system xOy, where the three rows of sub-pixels are respectively in the original image 0, the original image x(1), and the original image x(2). Sub-pixels of only a same color are superimposed in the superimposition process, for example, sub-pixels framed by the dashed line box in FIG. 25 are superimposed with only one color. For example, a sub-pixel whose row number is 13 in the original image 0, a sub-pixel whose row number is 8 in the original image x(1), and a sub-pixel whose row number is 3 in the original image x(2) are superimposed with only one color, and a sub-pixel whose row number is 16 in the original image 0, a sub-pixel whose row number is 11 in the original image x(1), and a sub-pixel whose row number is 6 in the original image x(2) are superimposed with only one color, and so on. In this way, sub-pixels that can obtain only one type of color information exist intermittently in one row of sub-pixels obtained through superimposition, and a segment of consecutive sub-pixels that can obtain two colors cannot exist. As shown in Synthesis 1 in FIG. 25, a row of sub-pixels obtained through superimposition has a total of 40 sub-pixels, which are numbered from 1 to 40 in sequence. Sub-pixels that can obtain only one type of color information exist intermittently in this row of sub-pixels, and a segment of consecutive sub-pixels that can obtain two colors cannot exist.

In the superimposition process, each sub-pixel needs to obtain three colors. Specifically, two colors need to be obtained in the x direction and two colors need to be obtained in the y direction, that is, R and GATAV obtained through image capturing in the x direction and G/Y/W and B obtained through image capturing in the y direction, or G/Y and B obtained through image capturing in the x direction and R and G/Y obtained through image capturing in the y direction. Therefore, in this case, movement and image capturing need to be added once in the x direction, to obtain the original image x(3). After movement is performed for three times in the x direction, four rows of sub-pixels collected by this row of sensing sub-pixels are superimposed based on positions of the sub-pixels in the coordinate system xOy, where the four rows of sub-pixels are respectively in the original image 0, the original image x(1), the original image x(2), and the original image x(3). In this way, existing sub-pixels superimposed with only one color only when the original image 0, the original image x(1), and the original image x(2) are superimposed and sub-pixels of another color of the original image x(3) are superimposed. For example, the sub-pixel whose row number is 16 in the original image 0, the sub-pixel whose row number is 11 in the original image x(1), and the sub-pixel whose row number is 6 in the original image x(2) are superimposed with only one color, and a sub-pixel whose row number is 1 in the original image x(3) is of another color; and when the sub-pixel whose row number is 16 in the original image 0, the sub-pixel whose row number is 11 in the original image x(1), the sub-pixel whose row number is 6 in the original image x(2), and the sub-pixel whose row number is 1 in the original image x(3) are superimposed, the sub-pixels are superimposed with two colors. Therefore, the superimposed row of sub-pixels has 45 sub-pixels (for example, synthesis 2 in FIG. 25), which are numbered from 1 to 45 in sequence. In this row of sub-pixels, there is a continuous segment of sub-pixels that can obtain two types of color information, that is, sub-pixels numbered from 14 to 32, and therefore, a requirement for obtaining a composite image is met.

Similarly, a process of movement and image capturing, and superimposition in the x direction of any row of sensing sub-pixels in which the first sensing sub-pixel has a color G/Y, a process of movement and image capturing in the y direction of any column of sensing sub-pixels in which the first sensing sub-pixel has a color R, and a process of movement and image capturing, and superimposition in the y direction of any column of sensing sub-pixels in which the first sensing sub-pixel has a color G/Y are all the same as the process of movement and image capturing, and superimposition in the x direction of any row of sensing sub-pixels in which the first sensing sub-pixel has a color R in terms of principles or laws. Refer to the description shown in FIG. 25, and details are not listed herein again.

It should be understood that, in this case, a principle or a law of a process of obtaining the composite image based on sub-pixels is the same as the principle or the law described in FIG. 19. For details, refer to the description shown in FIG. 19. Details are not described herein again.

Example 6: The technical solution provided in this embodiment of this application is described by using an example in which movement and image capturing are performed by using the photosensitive element shown in FIG. 13 when n=5, a=1, b=4, and s=9d/5. Specifically:

In this case, each sensing pixel in the photosensitive element is divided into 5×5 sensing sub-pixels, where a size of each sensing sub-pixel is d/5×d/5, as shown in FIG. 20. m=(a×n+b)|(2×n)=(1×5+4)|(2×5)=9, and therefore n<m; and f=2n-m=2×5-9=1, and f×(n-1)=1×(5-1)=4, and therefore n>f×(n-1). If movement needs to be performed for four times in the x direction, and movement needs to be performed for four times in the y direction, the sub-pixels in the complete image capturing region cannot all include three types of color information. In order to enable all the sub-pixels in the complete image capturing region to include three types of color information, in this example, movement needs to be performed for five times in the x direction, and movement needs to be performed for five times in the y direction.

1. Image capturing process

In the coordinate system xOy, images are captured separately at positions (W/2, H/2), (9d/5+W/2, H/2), (18d/5+W/2, H/2), (27d/5+W/2, H/2), (36d/5+W/2, H/2), (9d+W/2, H/2), (9d+W/2, 9d/5+H/2), (9d+W/2, 18d/5+H/2), (9d+W/2, 27d/5+H/2), (9d+W/2, 36d/5+H/2), and (9d+W/2, 9d+H/2), to obtain 11 original images. The photosensitive element first moves in the x direction, and then moves in the y direction after the movement in the x direction ends. A specific moving process is as follows:

(1) Capture an image at the initial position.
At a moment t(0), the photosensitive element captures an image at the initial position (W/2, H/2), to obtain an original image 0.
(2) Move and capture an image in the x direction.

In a time period from t(0) to t(1)_x, the photosensitive element moves by a distance 9d/5 in the x direction. The photosensitive element captures an image at a position at a moment t(1)_x, that is, the photosensitive element captures an image at a position (9d/5+W/2, H/2), to obtain an original image x(1).

In a time period from t(1)_x to t(2)_x, the photosensitive element moves by the distance 9d/5 in the x direction. The photosensitive element captures an image at a position at a moment t(2)_x, that is, the photosensitive element captures an image at a position (18d/5+W/2, H/2), to obtain an original image x(2).

In a time period from t(2)_x to t(3)_x, the photosensitive element moves by the distance 9d/5 in the x direction. The photosensitive element captures an image at a position at a moment t(3)_x, that is, the photosensitive element captures an image at a position (27d/5+W/2, H/2), to obtain an original image x(3).

In a time period from t(3)_x to t(4)_x, the photosensitive element moves by the distance 9d/5 in the x direction. The photosensitive element captures an image at a position at a moment t(4)_x, that is, the photosensitive element captures an image at a position (36d/5+W/2, H/2), to obtain an original image x(4).

In a time period from t(4)_x to t(5)_x, the photosensitive element moves by the distance 9d/5 in the x direction. The photosensitive element captures an image at a position at a moment t(5)_x, that is, the photosensitive element captures an image at a position (9d+W/2, H/2), to obtain an original image x(5).

(3) Move and capture an image in the y direction.

In a time period from t(4)_x to t(1)_y, the photosensitive element moves by the distance 9d/5 in the y direction. The photosensitive element captures an image at a position at a moment t(1)_y, that is, the photosensitive element captures an image at a position (9d+W/2, 9d/5+H/2), to obtain an original image y(1).

In a time period from t(1)_y to t(2)_y, the photosensitive element moves by the distance 9d/5 in the y direction. The photosensitive element captures an image at a position at a moment t(2)_y, that is, the photosensitive element captures an image at a position (9d+W/2, 18d/5+H/2), to obtain an original image y(2).

In a time period from t(2)_y to t(3)_y, the photosensitive element moves by the distance 9d/5 in the y direction. The photosensitive element captures an image at a position at a moment t(3)_y, that is, the photosensitive element captures an image at a position (9d+W/2, 27d/5+H/2), to obtain an original image y(3).

In a time period from t(3)_y to t(4)_y, the photosensitive element moves by the distance 9d/5 in the y direction. The photosensitive element captures an image at a position at a moment t(4)_y, that is, the photosensitive element captures an image at a position (9d+W/2, 36d/5+H/2), to obtain an original image y(4).

In a time period from t(4)_y to t(5)_y, the photosensitive element moves by the distance 9d/5 in the y direction. The photosensitive element captures an image at a position at a moment t(5)_y, that is, the photosensitive element captures an image at a position (9d+W/2, 9d+H/2), to obtain an original image y(5).

2. Synthesis process

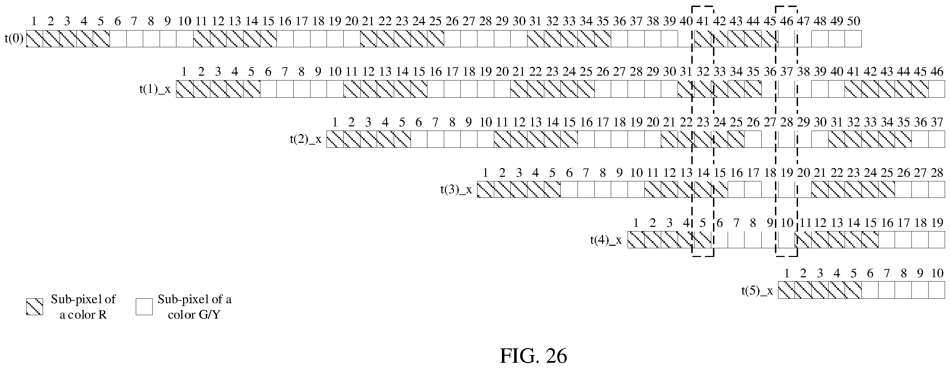

A process of movement and image capturing, and superimposition in the x direction of any row of sensing sub-pixels in which the first sensing sub-pixel has a color R is shown in FIG. 26. For any row of sub-pixels collected by this row of sensing sub-pixels, there are a total of 50 sub-pixels, which are numbered from 1 to 50 in sequence. After movement is performed for four times in the x direction, five rows of sub-pixels collected by this row of sensing sub-pixels are superimposed based on positions of the sub-pixels in the coordinate system xOy, where the five rows of sub-pixels are respectively in the original image 0, the original image x(1), the original image x(2), the original image x(3), and the original image x(4). Sub-pixels of only a same color are superimposed in the superimposition process, for example, sub-pixels framed by the dashed line box in FIG. 26 are superimposed with only one color. For example, a sub-pixel whose row number is 41 in the original image 0, a sub-pixel whose row number is 32 in the original image x(1), a sub-pixel whose row number is 23 in the original image x(2), a sub-pixel whose row number is 14 in the original image x(3), and a sub-pixel whose row number is 5 in the original image x(4) are superimposed with only one color, and a sub-pixel whose row number is 46 in the original image 0, a sub-pixel whose row number is 37 in the original image x(1), a sub-pixel whose row number is 28 in the original image x(2), a sub-pixel whose row number is 19 in the original image x(3), and a sub-pixel whose row number is 10 in the original image x(4) are superimposed with only one color, and so on. In this way, sub-pixels that can obtain only one type of color information exist intermittently in one row of sub-pixels obtained through superimposition, and a segment of consecutive sub-pixels that can obtain two colors cannot exist.

In the superimposition process, each sub-pixel needs to obtain three colors. Specifically, two colors need to be obtained in the x direction and two colors need to be obtained in the y direction, that is, R and GATAV obtained through image capturing in the x direction and G/Y/W and B obtained through image capturing in the y direction, or G/Y and B obtained through image capturing in the x direction and R and G/Y obtained through image capturing in the y direction. Therefore, in this case, movement and image capturing need to be added once in the x direction, to obtain the original image x(5). After movement is performed for five times in the x direction, six rows of sub-pixels collected by this row of sensing sub-pixels are superimposed based on positions of the sub-pixels in the coordinate system xOy, where the six rows of sub-pixels are respectively in the original image 0, the original image x(1), the original image x(2), the original image x(3), the original image x(4), and the original image x(5). In this way, existing sub-pixels superimposed with only one color only when the original image 0, the original image x(1), the original image x(2), the original image x(3), and the original image x(4) are superimposed and sub-pixels of another color of the original image x(5) are superimposed. For example, the sub-pixel whose row number is 46 in the original image 0, the sub-pixel whose row number is 37 in the original image x(1), the sub-pixel whose row number is 28 in the original image x(2), the sub-pixel whose row number is 19 in the original image x(3), and the sub-pixel whose row number is 10 in the original image x(4) are superimposed with only one color, and a sub-pixel whose row number is 1 in the original image x(5) is of another color; and when the sub-pixel whose row number is 46 in the original image 0, the sub-pixel whose row number is 37 in the original image x(1), the sub-pixel whose row number is 28 in the original image x(2), the sub-pixel whose row number is 19 in the original image x(3), the sub-pixel whose row number is 10 in the original image x(4), and the sub-pixel whose row number is 1 in the original image x(5) are superimposed, the sub-pixels are superimposed with two colors. In this way, a segment of consecutive sub-pixels that all can obtain two types of color information exists in a row of sub-pixels obtained through superimposition, and therefore, a requirement for obtaining the composite image is met. It should be noted that, because there is an excessive quantity of sub-pixels, the sub-pixels cannot be listed one by one in FIG. 26, and FIG. 26 shows superimposition of only some sub-pixels.

Similarly, a process of movement and image capturing, and superimposition in the x direction of any row of sensing sub-pixels in which the first sensing sub-pixel has a color G/Y, a process of movement and image capturing in the y direction of any column of sensing sub-pixels in which the first sensing sub-pixel has a color R, and a process of movement and image capturing, and superimposition in the y direction of any column of sensing sub-pixels in which the first sensing sub-pixel has a color G/Y are all the same as the process of movement and image capturing, and superimposition in the x direction of any row of sensing sub-pixels in which the first sensing sub-pixel has a color R in terms of principles or laws. Refer to the description shown in FIG. 26, and details are not listed herein again.

It should be understood that, in this case, a principle or a law of a process of obtaining the composite image based on sub-pixels is the same as the principle or the law described in FIG. 19. For details, refer to the description shown in FIG. 19. Details are not described herein again.

Example 7: The technical solution provided in this embodiment of this application is described by using an example in which movement and image capturing are performed when n=5, a=2, b=1, and s=11d/5. Specifically:

In this case, each sensing pixel in the photosensitive element is divided into $5 \times 5$ sensing sub-pixels, where a size of each sensing sub-pixel is $d/5 \times d/5$. $m=(a \times n+b)|(2 \times n)=(2 \times 5+1)|(2 \times 5)=1$, and therefore n>m; and f=m=1, and $f \times (n-1)=1 \times (5-1)=4$, and therefore $n>f \times (n-1)$. If movement needs to be performed for four times in the x direction, and movement needs to be performed for four times in the y direction, the sub-pixels in the complete image capturing region cannot all include three types of color information. In order to enable all the sub-pixels in the complete image capturing region to include three types of color information, in this example, movement needs to be performed for five times in the x direction, and movement needs to be performed for five times in the y direction.

1. Image capturing process

In the coordinate system xOy, images are captured separately at positions (W/2, H/2), (11d/5+W/2, H/2), (22d/5+W/2, H/2), (33d/5+W/2, H/2), (44d/5+W/2, H/2), (11d+W/2, H/2), (11d+W/2, 11d/5+H/2), (11d+W/2, 22d/5+H/2), (11d+W/2, 33d/5+H/2), (11d+W/2, 44d/5+H/2), and (11d+W/2, 11d+H/2), to obtain 11 original images. The photosensitive element first moves in the x direction, and then moves in the y direction after the movement in the x direction ends. A specific moving process is as follows:

(1) Capture an image at the initial position.
At a moment t(0), the photosensitive element captures an image at the initial position (W/2, H/2), to obtain an original image 0.

(2) Move and capture an image in the x direction.

In a time period from t(0) to t(1)_x, the photosensitive element moves by a distance 11d/5 in the x direction. The photosensitive element captures an image at a position at a moment t(1)_x, that is, the photosensitive element captures an image at a position (11d/5+W/2, H/2), to obtain an original image x(1).

In a time period from t(1)_x to t(2)_x, the photosensitive element moves by the distance 11d/5 in the x direction. The photosensitive element captures an image at a position at a moment t(2)_x, that is, the photosensitive element captures an image at a position (22d/5+W/2, H/2), to obtain an original image x(2).

In a time period from t(2)_x to t(3)_x, the photosensitive element moves by the distance 11d/5 in the x direction. The photosensitive element captures an image at a position at a moment t(3)_x, that is, the photosensitive element captures an image at a position (33d/5+W/2, H/2), to obtain an original image x(3).

In a time period from t(3)_x to t(4)_x, the photosensitive element moves by the distance 11d/5 in the x direction. The photosensitive element captures an image at a position at a moment t(4)_x, that is, the photosensitive element captures an image at a position (44d/5+W/2, H/2), to obtain an original image x(4).

In a time period from t(4)_x to t(5)_x, the photosensitive element moves by the distance 11d/5 in the x direction. The photosensitive element captures an image at a position at a moment t(5)_x, that is, the photosensitive element captures an image at a position (11d+W/2, H/2), to obtain an original image x(5).

(3) Move and capture an image in the y direction.

In a time period from t(4)_x to t(1)_y, the photosensitive element moves by the distance 11d/5 in the y direction. The photosensitive element captures an image at a position at a moment t(1)_y, that is, the photosensitive element captures an image at a position (11d+W/2, 11d/5+H/2), to obtain an original image y(1).

In a time period from t(1)_y to t(2)_y, the photosensitive element moves by the distance 11d/5 in the y direction. The photosensitive element captures an image at a position at a moment t(2)_y, that is, the photosensitive element captures an image at a position (11d+W/2, 22d/5+H/2), to obtain an original image y(2).

In a time period from t(2)_y to t(3)_y, the photosensitive element moves by the distance 11d/5 in the y direction. The photosensitive element captures an image at a position at a moment t(3)_y, that is, the photosensitive element captures an image at a position (11d+W/2, 33d/5+H/2), to obtain an original image y(3).

In a time period from t(3)_y to t(4)_y, the photosensitive element moves by the distance 11d/5 in the y direction. The photosensitive element captures an image at a position at a moment t(4)_y, that is, the photosensitive element captures an image at a position (11d+W/2, 44d/5+H/2), to obtain an original image y(4).

In a time period from t(4)_y to t(5)_y, the photosensitive element moves by the distance 11d/5 in the y direction. The photosensitive element captures an image at a position at a moment t(5)_y, that is, the photosensitive element captures an image at a position (11d+W/2, 11d+H/2), to obtain an original image y(5).

2. Synthesis process

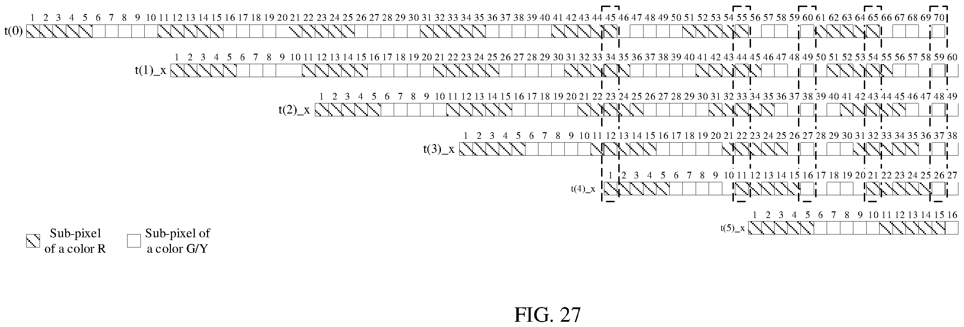

A process of movement and image capturing, and superimposition in the x direction of any row of sensing sub-pixels in which the first sensing sub-pixel has a color R is shown in FIG. 27. For any row of sub-pixels collected by this row of sensing sub-pixels, there are a total of 70 sub-pixels, which are numbered from 1 to 70 in sequence. After movement is performed for four times in the x direction, five rows of sub-pixels collected by this row of sensing sub-pixels are superimposed based on positions of the sub-pixels in the coordinate system xOy, where the five rows of sub-pixels are respectively in the original image 0, the original image x(1), the original image x(2), the original image x(3), and the original image x(4). Sub-pixels of only a same color are superimposed in the superimposition process, for example, sub-pixels framed by the dashed line box in FIG. 27 are superimposed with only one color. For example, a sub-pixel whose row number is 60 in the original image 0, a sub-pixel whose row number is 49 in the original image x(1), a sub-pixel whose row number is 38 in the original image x(2), a sub-pixel whose row number is 27 in the original image x(3), and a sub-pixel whose row number is 16 in the original image x(4) are superimposed with only one color, and a sub-pixel whose row number is 65 in the original image 0, a sub-pixel whose row number is 54 in the original image x(1), a sub-pixel whose row number is 43 in the original image x(2), a sub-pixel whose row number is 32 in the original image x(3), and a sub-pixel whose row number is 21 in the original image x(4) are superimposed with only one color, and so on. In this way, sub-pixels that can obtain only one type of color information exist intermittently in one row of sub-pixels obtained through superimposition, and a segment of consecutive sub-pixels that can obtain two colors cannot exist.

In the superimposition process, each sub-pixel needs to obtain three colors. Specifically, two colors need to be obtained in the x direction and two colors need to be obtained in the y direction, that is, R and G/Y/W obtained through image capturing in the x direction and G/Y/W and B obtained through image capturing in the y direction, or G/Y and B obtained through image capturing in the x direction and R and G/Y obtained through image capturing in the y direction. Therefore, in this case, movement and image capturing need to be added once in the x direction, to obtain the original image x(5). After movement is performed for five times in the x direction, six rows of sub-pixels collected by this row of sensing sub-pixels are superimposed based on positions of the sub-pixels in the coordinate system xOy, where the six rows of sub-pixels are respectively in the original image 0, the original image x(1), the original image x(2), the original image x(3), the original image x(4), and the original image x(5). In this way, existing sub-pixels superimposed with only one color only when the original image 0, the original image x(1), the original image x(2), the original image x(3), and the original image x(4) are superimposed and sub-pixels of another color of the original image x(5) are superimposed. For example, the sub-pixel whose row number is 60 in the original image 0, the sub-pixel whose row number is 49 in the original image x(1), the sub-pixel whose row number is 38 in the original image x(2), the sub-pixel whose row number is 27 in the original image x(3), and the sub-pixel whose row number is 16 in the original image x(4) are superimposed with only one color, and a sub-pixel whose row number is 5 in the original image x(5) is of another color; and when the sub-pixel whose row number is 60 in the original image 0, the sub-pixel whose row number is 49 in the original image x(1), the sub-pixel whose row number is 38 in the original image x(2), the sub-pixel whose row number is 27 in the original image x(3), the sub-pixel whose row number is 16 in the original image x(4), and the sub-pixel whose row number is 5 in the original image x(5) are superimposed, the sub-pixels are superimposed with two colors. In this way, a segment of consecutive sub-pixels that all can obtain two types of color information exists in a row of sub-pixels obtained through superimposition, and therefore, a requirement for obtaining the composite image is met. It should be noted that, because there is an excessive quantity of sub-pixels, the sub-pixels cannot be listed one by one in FIG. 27, and FIG. 27 shows superimposition of only some sub-pixels.

Similarly, a process of movement and image capturing, and superimposition in the x direction of any row of sensing sub-pixels in which the first sensing sub-pixel has a color G/Y, a process of movement and image capturing in the y direction of any column of sensing sub-pixels in which the first sensing sub-pixel has a color R, and a process of movement and image capturing, and superimposition in the y direction of any column of sensing sub-pixels in which the first sensing sub-pixel has a color G/Y are all the same as the process of movement and image capturing, and superimposition in the x direction of any row of sensing sub-pixels in which the first sensing sub-pixel has a color R in terms of principles or laws. Refer to the description shown in FIG. 27, and details are not listed herein again.

It should be understood that, in this case, a principle or a law of a process of obtaining the composite image based on sub-pixels is the same as the principle or the law described in FIG. 19. For details, refer to the description shown in FIG. 19. Details are not described herein again.

Example 8: The technical solution provided in this embodiment of this application is described by using an example in which movement and image capturing are performed by using the photosensitive element shown in FIG. 13 when n=2, a=1, b=1, and s=3d/2. Specifically: In this case, each sensing pixel in the photosensitive element is divided into 2×2 sensing sub-pixels, where a size of each sensing sub-pixel is d/2×d/2, as shown in FIG. 23. When movement is performed simultaneously in the x direction and the y direction at a same rate by a distance s=3d/2, it is impossible that all sub-pixels in the complete image capturing region include three types of color information, and color information lacked by a sub-pixel needs to be estimated and supplemented.

1. Image capturing process

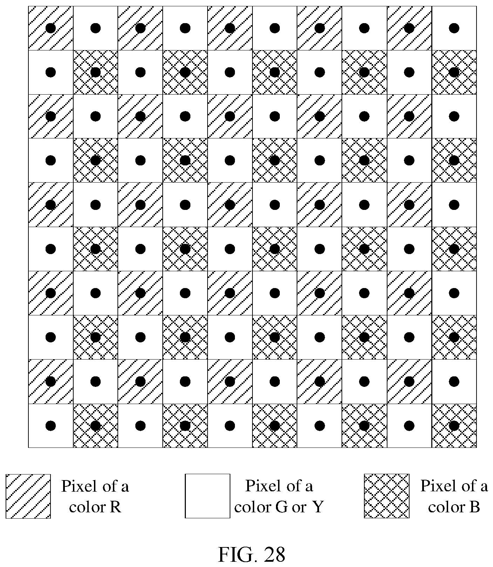

(1) Capture an image at the initial position.
At a moment t(0), the photosensitive element captures an image at the initial position (W/2, H/2), to obtain an original image 0. The original image 0 is shown in FIG. 28.
(2) Move by a distance s=3d/2 simultaneously in the x and y directions at a same rate, and then capture an image.

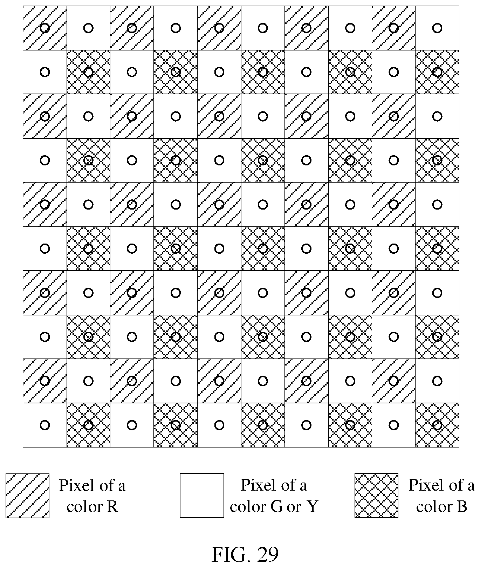

In a time period from t(0) to t(1), the photosensitive element moves from the initial position (W/2, H/2) to an image capturing position (3d/2+W/2, 3d/2+H/2). At a moment t(1), the photosensitive element captures an image at the position (3d/2+W/2, 3d/2+H/2), to obtain an original image 1. The original image 1 is shown in FIG. 29.

2. Synthesis process

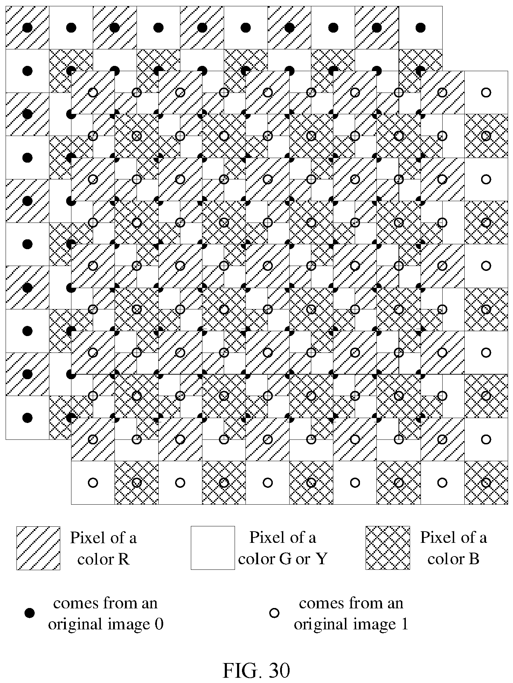

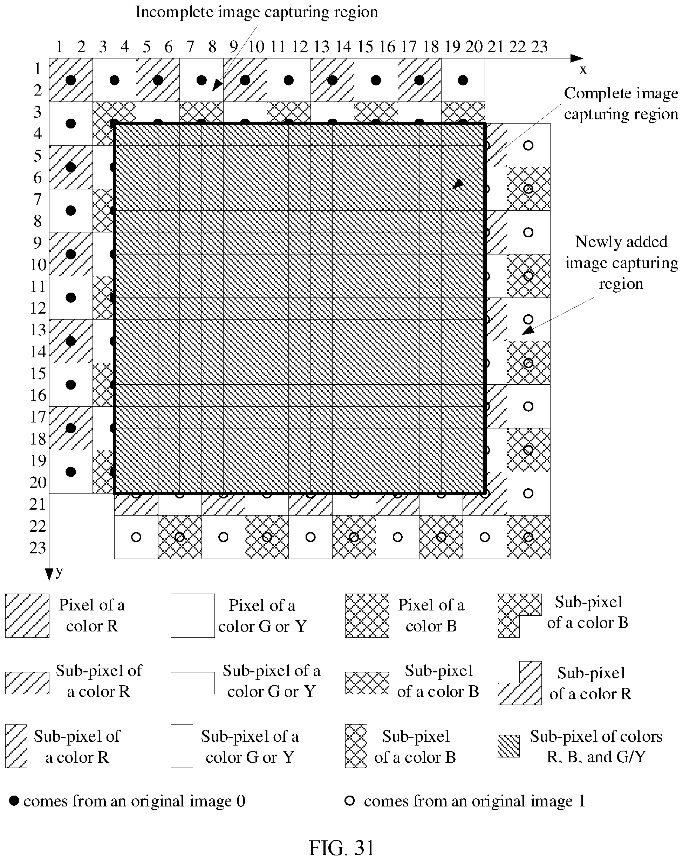

FIG. 30 shows a superimposition process in which the original image 0 and the original image 1 are superimposed based on image capturing positions. FIG. 30 shows a result of superimposing the original image 0 and the original image 1 based on the image capturing positions. As shown in FIG. 31, a size of a sub-pixel in the complete image capturing region is d/2×d/2. Sub-pixels of a plurality of sizes and pixels that are not divided into sub-pixels exist in the incomplete image capturing regions. The sizes of the sub-pixels in the incomplete image capturing regions include d×d/2, d/2×d, and 3/4 of a size of a sensing pixel. A sub-pixel whose size is d×d/2 in the incomplete image capturing regions may be considered as 2×1 sub-pixels whose size is d/2×d/2, a sub-pixel whose size is 3/4 of the size of the sensing pixel may be considered as three sub-pixels whose size is d/2×d/2, and a pixel that is not divided into sub-pixels may be considered as 2×2 sub-pixels whose size is d/2×d/2. Sub-pixels of a plurality of sizes and pixels that are not divided into sub-pixels exist in the newly added image capturing regions. The sizes of the sub-pixels in the newly added image capturing regions include d×d/2, d/2×d, and 3/4 of a size of a sensing pixel. A sub-pixel whose size is d×d/2 in the newly added image capturing regions may be considered as 2×1 sub-pixels whose size is d/2×d/2, a sub-pixel whose size is 3/4 of the size of the sensing pixel may be considered as three sub-pixels whose size is d/2×d/2, and a pixel that is not divided into sub-pixels may be considered as 2×2 sub-pixels whose size is d/2×d/2.

The pixels in the composite image come from sub-pixels whose row numbers are 1 to 20 and whose column numbers are 1 to 20. Sub-pixels whose row numbers are 4 to 20 and whose column numbers are 1 to 20 are sub-pixels in the complete image capturing region, and sub-pixels whose row numbers are 1 to 3 and whose column numbers are 1 to 3 are sub-pixels in the incomplete image capturing regions. Sub-pixels whose row numbers are 21 to 23 and whose column numbers are 21 to 23 are sub-pixels in the newly added image capturing regions.

The sub-pixels in the complete image capturing region may be used as pixels in the composite image; or the sub-pixels in the complete image capturing region and the sub-pixels in the incomplete image capturing regions may be used as pixels in the composite image; or the sub-pixels in the complete image capturing region, the sub-pixels that are in the incomplete image capturing regions and that are used as pixels in the composite image, and the pixels that are not divided into sub-pixels in the incomplete image capturing regions may be used as pixels in the composite image. A sub-pixel in the complete image capturing region includes one or two types of color information. When the sub-pixel in the complete image capturing region is used as a pixel in the composite image, color information lacked the sub-pixel is obtained through color estimation and supplementation. For a process of color estimation and supplementation, refer to the foregoing description, and details are not described herein again.

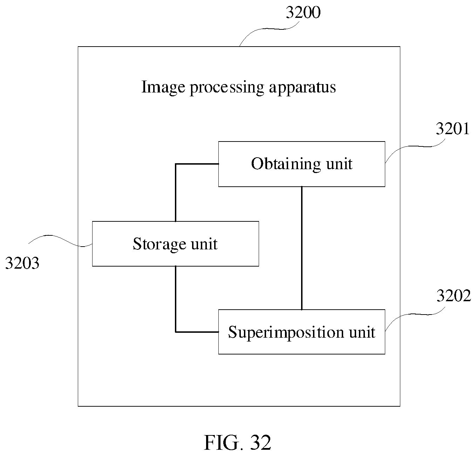

FIG. 32 is a schematic diagram of a structure of an image processing apparatus 3200 according to an embodiment of this application. The image processing apparatus 3200 includes: an obtaining unit 3201, configured to obtain a plurality of original images, where the plurality of original images are images obtained by separately sensing at a plurality of image capturing positions by using a photosensitive element, and a distance between two image capturing positions with a minimum distance in the plurality of image capturing positions is greater than a distance between any two adjacent sensing pixels in the photosensitive element; and a superimposition unit 3202, configured to superimpose the plurality of original images based on the plurality of image capturing positions, to obtain a composite image, where pixels in the composite image are determined based on sub-pixels obtained through division in a process of superimposing the plurality of original images, and a resolution of the composite image is greater than a resolution of any one of the plurality of original images.

In a possible implementation, the distance s between the two image capturing positions with the minimum distance in the plurality of image capturing positions is [(a×n+b)/n]×d; a is a positive integer; n is a prime number; 1≤b≤n-1, and b is an integer; and d is the distance between any two adjacent sensing pixels in the photosensitive element.

In a possible implementation, n is not 2 and n<f×(n-1), and coordinates of any image capturing position in the plurality of image capturing positions are (i×s+W/2, j×s+H/2) in a same coordinate system, where

$$f = \begin{cases} m, & n > m \\ 2n - m, & n < m \end{cases}$$

and m is a remainder of a×n+b divided by 2n; 0≤i≤n-1 and 0≤j≤n-1, and in any update of (i×s+W/2, j×s+H/2), i and j do not change simultaneously, i and j both change monotonically, and i and j are integers; W is a quantity of sensing pixels in a width direction of the photosensitive element; and H is a quantity of sensing pixels in a height direction of the photosensitive element; and the photosensitive element senses spectrums in three wavelength ranges, where the spectrums in the three wavelength ranges correspond to three types of color information, and that pixels in the composite image are determined based on sub-pixels obtained through division in a process of superimposing the plurality of original images includes: the pixels in the composite image are determined based on first sub-pixels obtained through division in the process of superimposing the plurality of original images, where the first sub-pixel includes the three types of color information.

In a possible implementation, n is 2 or n>f×(n-1), and coordinates of any image capturing position in the plurality of image capturing positions are (i×s+W/2, j×s+H/2) in a same coordinate system, where

$$f = \begin{cases} m, & n > m \\ 2n - m, & n < m \end{cases}$$

and m is a remainder of a×n+b divided by 2n; 0≤i≤n and 0≤i≤n, and in any update of (i×s+W/2, j×s+H/2), i and j do not change simultaneously, i and j both change monotonically, and i and j are integers; W is a quantity of sensing pixels in a width direction of the photosensitive element; and H is a quantity of sensing pixels in a height direction of the photosensitive element; and the photosensitive element senses spectrums in three wavelength ranges, where the spectrums in the three wavelength ranges correspond to three types of color information, and that pixels in the composite image are determined based on sub-pixels obtained through division in a process of superimposing the plurality of original images includes: the pixels in the composite image are determined based on first sub-pixels obtained through division in the process of superimposing the plurality of original images, where the first sub-pixel includes the three types of color information.

In a possible implementation, that pixels in the composite image are determined based on sub-pixels obtained through division in a process of superimposing the plurality of original images further includes: the pixels in the composite image are determined based on second sub-pixels obtained through division in the process of superimposing the plurality of original images, where the second sub-pixel lacks one or two of the three types of color information; and any color information lacked by the second sub-pixel is determined based on the any color information of a third sub-pixel, where the third sub-pixel is a sub-pixel obtained through division in the process of superimposing the plurality of original images, and the third sub-pixel is a sub-pixel that is near the second sub-pixel and that includes the any color information.

In a possible implementation, n is 2 or n>f×(n-1), and coordinates of any image capturing position in the plurality of image capturing positions are (i×s+W/2, j×s+H/2) in a same coordinate system, where

$$f = \begin{cases} m, & n > m \\ 2n - m, & n < m \end{cases},$$

and m is a remainder of a×n+b divided by 2n; 0≤i≤n-1 and 0≤j≤n-1, and in any update of (i×s+W/2, j×s+H/2), i and j do not change simultaneously, i and j both change monotonically, and i and j are integers; W is a quantity of sensing pixels in a width direction of the photosensitive element; and H is a quantity of sensing pixels in a height direction of the photosensitive element; the photosensitive element senses spectrums in three wavelength ranges, where the spectrums in the three wavelength ranges correspond to three types of color information, and that pixels in the composite image are determined based on sub-pixels obtained through division in a process of superimposing the plurality of original images includes: the pixels in the composite image are determined based on first sub-pixels and second sub-pixels obtained through division in the process of superimposing the plurality of original images, where the first sub-pixel includes the three types of color information, and the second sub-pixel lacks one or two of the three types of color information; and any color information lacked by the second sub-pixel is determined based on the any color information of a third sub-pixel, where the third sub-pixel is a sub-pixel obtained through division in the process of superimposing the plurality of original images, and the third sub-pixel is a sub-pixel that is near the second sub-pixel and that includes the any color information.

In a possible implementation, the photosensitive element senses a spectrum in one wavelength range, and coordinates of any image capturing position in the plurality of image capturing positions are (i×s+W/2, j×s+H/2) in a same coordinate system, where 0≤i≤n-1 and 0≤j≤n-1, and in any update of (i×s+W/2, j×s+H/2), i and j do not change simultaneously, i and j both change monotonically, and i and j are integers; W is a quantity of sensing pixels in a width direction of the photosensitive element; and H is a quantity of sensing pixels in a height direction of the photosensitive element.

In a possible implementation, n is 2, the plurality of image capturing positions are two image capturing positions, and coordinates of the two image capturing positions are respectively (W/2, H/2) and (s+W/2, s+H/2) in a same coordinate system; W is a quantity of sensing pixels in a width direction of the photosensitive element; and H is a quantity of sensing pixels in a height direction of the photosensitive element; the photosensitive element senses spectrums in three wavelength ranges, where the spectrums in the three wavelength ranges correspond to three types of color information, and that pixels in the composite image are determined based on sub-pixels obtained through division in a process of superimposing the plurality of original images includes: the pixels in the composite image are determined based on second sub-pixels obtained through division in the process of superimposing the plurality of original images, where the second sub-pixel lacks one or two of the three types of color information; and any color information lacked by the second sub-pixel is determined based on the any color information of a third sub-pixel, where the third sub-pixel is a sub-pixel obtained through division in the process of superimposing the plurality of original images, and the third sub-pixel is a sub-pixel that is near the second sub-pixel and that includes the any color information.

In a possible implementation, the photosensitive element senses a spectrum in one wavelength range, n is 2, the plurality of image capturing positions are two image capturing positions, and coordinates of the two image capturing positions are respectively (W/2, H/2) and (s+W/2, s+H/2) in a same coordinate system; W is a quantity of sensing pixels in a width direction of the photosensitive element; and H is a quantity of sensing pixels in a height direction of the photosensitive element.

It should be noted that, for implementation of the units in this embodiment of this application, refer to related descriptions in the foregoing other embodiments. Details are not described herein again. Certainly, the image processing apparatus 3200 provided in this embodiment of this application includes but is not limited to the foregoing unit modules. For example, the image processing apparatus 3200 may further include a storage unit 3203. The storage unit 3203 may be configured to store program code and data of the image processing apparatus 3200. It should be further noted that, for beneficial effects of the embodiment shown in FIG. 32, refer to related descriptions in the foregoing other embodiments.

An embodiment of this application further provides an image processing apparatus, where the image processing apparatus includes a processor and a photosensitive element, where the processor is configured to: separately sense at a plurality of image capturing positions by using the photosensitive element, to obtain a plurality of original images, where a distance between two image capturing positions with a minimum distance in the plurality of image capturing positions is greater than a distance between any two adjacent sensing pixels in the photosensitive element; and superimpose the plurality of original images based on the plurality of image capturing positions, to obtain a composite image, where pixels in the composite image are determined based on sub-pixels obtained through division in a process of superimposing the plurality of original images, and a resolution of the composite image is greater than a resolution of any one of the plurality of original images.

An embodiment of this application further provides an image processing apparatus, including a processor, a memory, a communication interface, and one or more programs, where the one or more programs are stored in the memory, and are configured to be executed by the processor, and the program includes instructions used to perform the steps in the methods in the foregoing embodiments.

An embodiment of this application further provides an electronic device, including a processor, a memory, a communication interface, and one or more programs, where the one or more programs are stored in the memory, and are configured to be executed by the processor, and the program includes instructions used to perform the steps in the methods in the foregoing embodiments.

An embodiment of this application further provides a chip, including a processor, configured to: invoke a computer program from a memory and run the computer program, so that a device in which the chip is mounted performs the methods in the foregoing embodiments.

An embodiment of this application further provides a computer-readable storage medium, where the computer-readable storage medium includes a computer program, and when the computer program is run on a computer or a processor, the computer or the processor is enabled to perform the methods in the foregoing embodiments.

An embodiment of this application further provides a computer program product, where the computer program product includes a computer program, and when the computer program is run on a computer or a processor, the computer or the processor is enabled to perform the methods in the foregoing embodiments.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The software product is stored in a storage medium, and includes several instructions for instructing a computer device (which may be a personal computer, a server, or a network device) to perform all or some of the steps of the methods described in embodiments of this application. The foregoing storage medium includes: any medium that can store program code, for example, a USB flash drive, a removable hard disk, a read-only memory (Read-Only Memory, ROM), a random access memory (Random Access Memory, RAM), a magnetic disk, or an optical disc.

The steps of the methods in embodiments of this application may be adjusted in sequence, combined, and deleted based on an actual requirement. In addition, for terms and explanations in embodiments of this application, refer to corresponding descriptions in other embodiments.

The modules in the apparatuses in embodiments of this application may be combined, divided, and deleted based on an actual requirement.

In conclusion, the foregoing embodiments are merely intended for describing the technical solutions of this application, but not for limiting this application. Although this application is described in detail with reference to the foregoing embodiments, a person of ordinary skill in the art should understand that they may still make modifications to the technical solutions described in the foregoing embodiments or make equivalent replacements to some technical features thereof, without departing from the scope of the technical solutions of embodiments of this application.

**Claims**

1. An image processing method, comprising:

obtaining a plurality of original images, wherein the plurality of original images are images obtained by separately sensing at a plurality of image capturing positions by using a photosensitive element, and a distance between two image capturing positions with a minimum distance in the plurality of image capturing positions is greater than a distance between any two adjacent sensing pixels in the photosensitive element; and
superimposing the plurality of original images based on the plurality of image capturing positions, to obtain a composite image, wherein pixels in the composite image are determined based on sub-pixels obtained through division in a process of superimposing the plurality of original images, and a resolution of the composite image is greater than a resolution of any one of the plurality of original images.

2. The method according to claim 1, wherein the distance s between the two image capturing positions with the minimum distance in the plurality of image capturing positions is $[(a{\times}n+b)/n]{\times}d$; a is a positive integer; n is a prime number; $1{\leq}b{\leq}n-1$, and b is an integer; and d is the distance between any two adjacent sensing pixels in the photosensitive element.

3. The method according to claim 2, wherein n is not 2 and $n<f{\times}(n-1)$, and coordinates of any image capturing position in the plurality of image capturing positions are $(i{\times}s+W/2, j{\times}s+H/2)$ in a same coordinate system, wherein

$$f = \begin{cases} m, & n > m \\ 2n - m, & n < m \end{cases},$$

and m is a remainder of $a{\times}n+b$ divided by 2n;

$0{\leq}i{\leq}n-1$ and $0{\leq}j{\leq}n-1$, and in any update of $(i{\times}s+W/2, j{\times}s+H/2)$, i and j do not change simultaneously, i and j both change monotonically, and i and j are integers; W is a quantity of sensing pixels in a width direction of the photosensitive element; and H is a quantity of sensing pixels in a height direction of the photosensitive element; and
the photosensitive element senses spectrums in three wavelength ranges, wherein the spectrums in the three wavelength ranges correspond to three types of color information, and that pixels in the composite image are determined based on sub-pixels obtained through division in a process of superimposing the plurality of original images comprises: the pixels in the composite image are determined based on first sub-pixels obtained through division in the process of superimposing the plurality of original images, wherein the first sub-pixel comprises the three types of color information.

4. The method according to claim 2, wherein n is 2 or $n>f{\times}(n-1)$, and coordinates of any image capturing position in the plurality of image capturing positions are $(i{\times}s+W/2, j{\times}s+H/2)$ in a same coordinate system, wherein

$$f = \begin{cases} m, & n > m \\ 2n - m, & n < m \end{cases},$$

and m is a remainder of $a{\times}n+b$ divided by 2n;

$0{\leq}i{\leq}n$ and $0{\leq}i{\leq}n$, and in any update of $(i{\times}s+W/2, j{\times}s+H/2)$, i and j do not change simultaneously, i and j both change monotonically, and i and j are integers; W is a quantity of sensing pixels in a width direction of the photosensitive element; and H is a quantity of sensing pixels in a height direction of the photosensitive element; and
the photosensitive element senses spectrums in three wavelength ranges, wherein the spectrums in the three wavelength ranges correspond to three types of color information, and that pixels in the composite image are determined based on sub-pixels obtained through division in a process of superimposing the plurality of original images comprises: the pixels in the composite image are determined based on first sub-pixels obtained through division in the process of superimposing the plurality of original images, wherein the first sub-pixel comprises the three types of color information.

5. The method according to claim 3 or 4, wherein that pixels in the composite image are determined based on sub-pixels obtained through division in a process of superimposing the plurality of original images further comprises: the pixels in the composite image are determined based on second sub-pixels obtained through division in the process of superimposing the plurality of original images, wherein the second sub-pixel lacks one or two of the three types of color information; and

   any color information lacked by the second sub-pixel is determined based on the any color information of a third sub-pixel, wherein the third sub-pixel is a sub-pixel obtained through division in the process of superimposing the plurality of original images, and the third sub-pixel is a sub-pixel that is near the second sub-pixel and that comprises the any color information.

6. The method according to claim 2, wherein n is 2 or n>f×(n-1), and coordinates of any image capturing position in the plurality of image capturing positions are (i×s+W/2, j×s+H/2) in a same coordinate system, wherein

$$f = \begin{cases} m, n > m \\ 2n - m, n < m \end{cases}$$

and m is a remainder of a×n+b divided by 2n;

   0≤i≤n-1 and 0≤i≤n-1, and in any update of (i×s+W/2, j×s+H/2), i and j do not change simultaneously, i and j both change monotonically, and i and j are integers; W is a quantity of sensing pixels in a width direction of the photosensitive element; and H is a quantity of sensing pixels in a height direction of the photosensitive element;

   the photosensitive element senses spectrums in three wavelength ranges, wherein the spectrums in the three wavelength ranges correspond to three types of color information, and that pixels in the composite image are determined based on sub-pixels obtained through division in a process of superimposing the plurality of original images comprises: the pixels in the composite image are determined based on first sub-pixels and second sub-pixels obtained through division in the process of superimposing the plurality of original images, wherein the first sub-pixel comprises the three types of color information, and the second sub-pixel lacks one or two of the three types of color information; and any color information lacked by the second sub-pixel is determined based on the any color information of a third sub-pixel, wherein the third sub-pixel is a sub-pixel obtained through division in the process of superimposing the plurality of original images, and the third sub-pixel is a sub-pixel that is near the second sub-pixel and that comprises the any color information.

7. The method according to claim 2, wherein the photosensitive element senses a spectrum in one wavelength range, and coordinates of any image capturing position in the plurality of image capturing positions are (i×s+W/2, j×s+H/2) in a same coordinate system, wherein 0≤i≤n-1 and 0≤j≤n-1, and in any update of (i×s+W/2, j×s+H/2), i and j do not change simultaneously, i and j both change monotonically, and i and j are integers; W is a quantity of sensing pixels in a width direction of the photosensitive element; and H is a quantity of sensing pixels in a height direction of the photosensitive element.

8. The method according to claim 2, wherein n is 2, the plurality of image capturing positions are two image capturing positions, and coordinates of the two image capturing positions are respectively (W/2, H/2) and (s+W/2, s+H/2) in a same coordinate system; W is a quantity of sensing pixels in a width direction of the photosensitive element; and H is a quantity of sensing pixels in a height direction of the photosensitive element;

   the photosensitive element senses spectrums in three wavelength ranges, wherein the spectrums in the three wavelength ranges correspond to three types of color information, and that pixels in the composite image are determined based on sub-pixels obtained through division in a process of superimposing the plurality of original images comprises: the pixels in the composite image are determined based on second sub-pixels obtained through division in the process of superimposing the plurality of original images, wherein the second sub-pixel lacks one or two of the three types of color information; and any color information lacked by the second sub-pixel is determined based on the any color information of a third sub-pixel, wherein the third sub-pixel is a sub-pixel obtained through division in the process of superimposing the plurality of original images, and the third sub-pixel is a sub-pixel that is near the second sub-pixel and that comprises the any color information.

9. The method according to claim 2, wherein the photosensitive element senses a spectrum in one wavelength range, n is 2, the plurality of image capturing positions are two image capturing positions, and coordinates of the two image capturing positions are respectively (W/2, H/2) and (s+W/2, s+H/2) in a same coordinate system; W is a quantity of sensing pixels in a width direction of the photosensitive element; and H is a quantity of sensing pixels in a height direction of the photosensitive element.

10. An image processing apparatus, comprising:

an obtaining unit, configured to obtain a plurality of original images, wherein the plurality of original images are images obtained by separately sensing at a plurality of image capturing positions by using a photosensitive element, and a distance between two image capturing positions with a minimum distance in the plurality of image capturing positions is greater than a distance between any two adjacent sensing pixels in the photosensitive element; and
a superimposition unit, configured to superimpose the plurality of original images based on the plurality of image capturing positions, to obtain a composite image, wherein pixels in the composite image are determined based on subpixels obtained through division in a process of superimposing the plurality of original images, and a resolution of the composite image is greater than a resolution of any one of the plurality of original images.

11. The image processing apparatus according to claim 10, wherein the distance s between the two image capturing positions with the minimum distance in the plurality of image capturing positions is [(a×n+b)/n] ×d; a is a positive integer; n is a prime number; 1≤b≤n-1, and b is an integer; and d is the distance between any two adjacent sensing pixels in the photosensitive element.

12. The image processing apparatus according to claim 11, wherein n is not 2 and n<f×(n-1), and coordinates of any image capturing position in the plurality of image capturing positions are (i×s+W/2, j×s+H/2) in a same coordinate system, wherein

$$f = \begin{cases} m, n > m \\ 2n - m, n < m \end{cases}$$

and m is a remainder of a×n+b divided by 2n;

0≤i≤n-1 and 0≤j≤n-1, and in any update of (i×s+W/2, j×s+H/2), i and j do not change simultaneously, i and j both change monotonically, and i and j are integers; W is a quantity of sensing pixels in a width direction of the photosensitive element; and H is a quantity of sensing pixels in a height direction of the photosensitive element; and
the photosensitive element senses spectrums in three wavelength ranges, wherein the spectrums in the three wavelength ranges correspond to three types of color information, and that pixels in the composite image are determined based on sub-pixels obtained through division in a process of superimposing the plurality of original images comprises: the pixels in the composite image are determined based on first sub-pixels obtained through division in the process of superimposing the plurality of original images, wherein the first sub-pixel comprises the three types of color information.

13. The image processing apparatus according to claim 11, wherein n is 2 or n>f×(n-1), and coordinates of any image capturing position in the plurality of image capturing positions are (i×s+W/2, j×s+H/2) in a same coordinate system, wherein

$$f = \begin{cases} m, n > m \\ 2n - m, n < m \end{cases}$$

and m is a remainder of a×n+b divided by 2n;

0≤i≤n and 0≤i≤n, and in any update of (i×s+W/2, j×s+H/2), i and j do not change simultaneously, i and j both change monotonically, and i and j are integers; W is a quantity of sensing pixels in a width direction of the photosensitive element; and H is a quantity of sensing pixels in a height direction of the photosensitive element; and
the photosensitive element senses spectrums in three wavelength ranges, wherein the spectrums in the three wavelength ranges correspond to three types of color information, and that pixels in the composite image are determined based on sub-pixels obtained through division in a process of superimposing the plurality of original images comprises: the pixels in the composite image are determined based on first sub-pixels obtained through division in the process of superimposing the plurality of original images, wherein the first sub-pixel comprises the three types of color information.

14. The image processing apparatus according to claim 12 or 13, wherein that pixels in the composite image are determined based on sub-pixels obtained through division in a process of superimposing the plurality of original images further comprises: the pixels in the composite image are determined based on second sub-pixels obtained through division in the process of superimposing the plurality of original images, wherein the second sub-pixel lacks one or two of the three types of color information; and
any color information lacked by the second sub-pixel is determined based on the any color information of a third sub-pixel, wherein the third sub-pixel is a sub-pixel obtained through division in the process of superimposing the plurality of original images, and the third sub-pixel is a sub-pixel that is near the second sub-pixel and that comprises the any color information.

15. The image processing apparatus according to claim 11, wherein n is 2 or n>f×(n-1), and coordinates of any image capturing position in the plurality of image capturing positions are (i×s+W/2, j×s+H/2) in a same coordinate system, wherein

$$f = \begin{cases} m, & n > m \\ 2n - m, & n < m \end{cases}$$

and m is a remainder of a×n+b divided by 2n;

0≤i≤n-1 and 0≤i≤n-1, and in any update of (i×s+W/2, j×s+H/2), i and j do not change simultaneously, i and j both change monotonically, and i and j are integers; W is a quantity of sensing pixels in a width direction of the photosensitive element; and H is a quantity of sensing pixels in a height direction of the photosensitive element;
the photosensitive element senses spectrums in three wavelength ranges, wherein the spectrums in the three wavelength ranges correspond to three types of color information, and that pixels in the composite image are determined based on sub-pixels obtained through division in a process of superimposing the plurality of original images comprises: the pixels in the composite image are determined based on first sub-pixels and second sub-pixels obtained through division in the process of superimposing the plurality of original images, wherein the first sub-pixel comprises the three types of color information, and the second sub-pixel lacks one or two of the three types of color information; and any color information lacked by the second sub-pixel is determined based on the any color information of a third sub-pixel, wherein the third sub-pixel is a sub-pixel obtained through division in the process of superimposing the plurality of original images, and the third sub-pixel is a sub-pixel that is near the second sub-pixel and that comprises the any color information.

16. The image processing apparatus according to claim 11, wherein the photosensitive element senses a spectrum in one wavelength range, and coordinates of any image capturing position in the plurality of image capturing positions are (i×s+W/2, j×s+H/2) in a same coordinate system, wherein 0≤i≤n-1 and 0≤j≤n-1, and in any update of (i×s+W/2, j×s+H/2), i and j do not change simultaneously, i and j both change monotonically, and i and j are integers; W is a quantity of sensing pixels in a width direction of the photosensitive element; and H is a quantity of sensing pixels in a height direction of the photosensitive element.

17. The image processing apparatus according to claim 11, wherein n is 2, the plurality of image capturing positions are two image capturing positions, and coordinates of the two image capturing positions are respectively (W/2, H/2) and (s+W/2, s+H/2) in a same coordinate system; W is a quantity of sensing pixels in a width direction of the photosensitive element; and H is a quantity of sensing pixels in a height direction of the photosensitive element;

the photosensitive element senses spectrums in three wavelength ranges, wherein the spectrums in the three wavelength ranges correspond to three types of color information, and that pixels in the composite image are determined based on sub-pixels obtained through division in a process of superimposing the plurality of original images comprises: the pixels in the composite image are determined based on second sub-pixels obtained through division in the process of superimposing the plurality of original images, wherein the second sub-pixel lacks one or two of the three types of color information; and any color information lacked by the second sub-pixel is determined based on the any color information of a third sub-pixel, wherein the third sub-pixel is a sub-pixel obtained through division in the process of superimposing the plurality of original images, and the third sub-pixel is a sub-pixel that is near the second sub-pixel and that comprises the any color information.

18. The image processing apparatus according to claim 11, wherein the photosensitive element senses a spectrum in one wavelength range, n is 2, the plurality of image capturing positions are two image capturing positions, and coordinates of the two image capturing positions are respectively (W/2, H/2) and (s+W/2, s+H/2) in a same coordinate system; W is a quantity of sensing pixels in a width direction of the photosensitive element; and H is a quantity of sensing pixels in a height direction of the photosensitive element.

19. An image processing apparatus, wherein the image processing apparatus comprises a processor and a photosensitive element, wherein

the processor is configured to: separately sense at a plurality of image capturing positions by using the photosensitive element, to obtain a plurality of original images, wherein a distance between two image capturing positions with a minimum distance in the plurality of image capturing positions is greater than a distance between any two adjacent sensing pixels in the photosensitive element; and

superimpose the plurality of original images based on the plurality of image capturing positions, to obtain a composite image, wherein pixels in the composite image are determined based on sub-pixels obtained through division in a process of superimposing the plurality of original images, and a resolution of the composite image is greater than a resolution of any one of the plurality of original images.

20. An image processing apparatus, comprising a processor, a memory, a communication interface, and one or more programs, wherein the one or more programs are stored in the memory, and are configured to be executed by the processor, and the program comprises instructions used to perform the steps in the method according to any one of claims 1 to 9.

21. A chip, comprising a processor, configured to: invoke a computer program from a memory and run the computer program, so that a device in which the chip is mounted performs the method according to any one of claims 1 to 9.

22. A computer-readable storage medium, wherein the computer-readable storage medium comprises a computer program, and when the computer program is run on a computer or a processor, the computer or the processor is enabled to perform the method according to any one of claims 1 to 9.

Electronic device 100

FIG. 1A

| Application layer | Camera | Calender | Map | WLAN | Music | Messages |
|---|---|---|---|---|---|---|
| | Gallery | Phone | Navigation | Bluetooth | Video | ... |

↕

| Application framework layer | Window manager | | Content provider | | Phone manager | | Resource manager |
|---|---|---|---|---|---|---|---|
| | Notification manager | | View system | | Event manager | | ... |

↕

| System library | Surface manager | Three-dimensional graphics processing library | Android Runtime |
|---|---|---|---|
| | Two-dimensional graphics engine | Media library | ... |

↕

| Kernel layer | Display driver | Camera driver | |
|---|---|---|---|
| | Audio driver | Sensor driver | ... |

FIG. 1B

Brake combination 193A

Lens combination 193B

Photosensitive element combination 193C

FIG. 1C

Photographing target

Aperture Night Portrait Photo Video Professional More

A user presses a photo key

FIG. 2

FIG. 3

Original    Original
image 0    image 1

x

y

FIG. 4

FIG. 5

Composite image

Today

Yesterday

Photos   Album   Moments   Discovery

FIG. 6

701

Obtain a plurality of original images, where the plurality of original images are images obtained by separately sensing at a plurality of image capturing positions by using a photosensitive element, and a distance between two image capturing positions with a minimum distance in the plurality of image capturing positions is greater than a distance between any two adjacent sensing pixels in the photosensitive element

702

Superimpose the plurality of original images based on the plurality of image capturing positions, to obtain a composite image, where pixels in the composite image are determined based on sub-pixels obtained through division in a process of superimposing the plurality of original images, and a resolution of the composite image is greater than a resolution of any one of the plurality of original images

FIG. 7

FIG. 8A

FIG. 8B

FIG. 8C

FIG. 8D

FIG. 9

FIG. 10

FIG. 11

FIG. 12

Sensing pixel of a color R

Sensing pixel of a color G/Y

Sensing pixel of a color B

FIG. 13

FIG. 14

FIG. 15

EP 4 307 212 A1

1 2 3 4 5 6 7 8 9 10 11 12 13 14 15 16 17 18 19 20 21 22 23 24 25 26 27 28 29 30

t(0)

1 2 3 4 5 6 7 8 9 10 11 12 13 14 15 16 17 18 19 20 21 22 23 24 25 26 27 28 29 30

t(1)_x

1 2 3 4 5 6 7 8 9 10 11 12 13 14 15 16 17 18 19 20 21 22 23 24 25 26 27 28 29 30

t(2)_x

1 2 3 4 5 6 7 8 9 10 11 12 13 14 15 16 17 18 19 20 21 22 23 24 25 26 27 28 29 30 31 32 33 34 35 36 37 38

Synthesis

☐ Sub-pixel of a color G/Y   ▨ Sub-pixel of a color B   ⸬ Sub-pixel of colors B and G/Y

FIG. 16

FIG. 17

FIG. 18

FIG. 19

FIG. 20

FIG. 21

t(0)

t(1)_x

t(2)_x

t(3)_x

t(4)_x

Synthesis

Sub-pixel of a color R  Sub-pixel of a color G/Y  Sub-pixel of colors R and G/Y

FIG. 22

FIG. 23

t(0)

t(1)_x

Synthesis 1

t(2)_x

Synthesis 2

Sub-pixel of
a color R

Sub-pixel of
a color G/Y

Sub-pixel of
colors R and G/Y

FIG. 24

FIG. 25

Sub-pixel of a color R    Sub-pixel of a color G/Y

FIG. 26

FIG. 27

Sub-pixel of a color R     Sub-pixel of a color G/Y

| | | |
|---|---|---|
| Pixel of a color R | Pixel of a color G or Y | Pixel of a color B |

FIG. 28

| | | |
|:--:|:--:|:--:|
| Pixel of a color R | Pixel of a color G or Y | Pixel of a color B |

FIG. 29

| Pixel of a color R | Pixel of a color G or Y | Pixel of a color B |

● comes from an original image 0

○ comes from an original image 1

FIG. 30

FIG. 31

FIG. 32

## INTERNATIONAL SEARCH REPORT

| | International application No. |
|---|---|
| | **PCT/CN2022/085191** |

**A.     CLASSIFICATION OF SUBJECT MATTER**

G06T 5/50(2006.01)i；  H04N 5/349(2011.01)n；  H04N 5/232(2006.01)n

According to International Patent Classification (IPC) or to both national classification and IPC

**B.     FIELDS SEARCHED**

Minimum documentation searched (classification system followed by classification symbols)

G06T; H04N

Documentation searched other than minimum documentation to the extent that such documents are included in the fields searched

Electronic data base consulted during the international search (name of data base and, where practicable, search terms used)

CNABS; CNTXT; WPABSC; CJFD; ENTXTC; VEN; DWPI; SIPOABS; USTXT; CNKI; IEEE; Wiley: 亚象素, 移动, 合成, 位移, 平移, 移位, 距离, 偏移, 照像, 摄像, 照相, 拍摄, 取像, 成像, 获取图像, 图像, 分辨率, 像素, 叠加, 融合, 合成, 亚像素, 次像素, 次级像素, 次象素, 亚单元, 次级象素, 子像素, 超过, 大于, camera, capture, move, subpixel, sub-pixel, image, fusion, synthesis, composite, distance

**C.     DOCUMENTS CONSIDERED TO BE RELEVANT**

| Category* | Citation of document, with indication, where appropriate, of the relevant passages | Relevant to claim No. |
|---|---|---|
| X | US 7003177 B1 (RAMOT AT TEL-AVIV UNIVERSITY LTD.) 21 February 2006 (2006-02-21)<br>    description, column 2, paragraphs 6-8, and column 7, paragraph 3 | 1-2, 7, 9-11, 16, 18-22 |
| X | US 9501683 B1 (HATSTAT, A. et al.) 22 November 2016 (2016-11-22)<br>    description, columns 1-3, column 9, paragraph 3, and column 12 | 1-2, 7, 9-11, 16, 18-22 |
| A | CN 104041006 A (CANON INC.) 10 September 2014 (2014-09-10)<br>    entire document | 1-22 |
| A | CN 103905746 A (TSINGHUA UNIVERSITY) 02 July 2014 (2014-07-02)<br>    entire document | 1-22 |
| A | WO 2019092844 A1 (OLYMPUS CORP.) 16 May 2019 (2019-05-16)<br>    entire document | 1-22 |
| A | US 6570613 B1 27 May 2003 (2003-05-27)<br>    entire document | 1-22 |

☑ Further documents are listed in the continuation of Box C.          ☑ See patent family annex.

| | |
|---|---|
| *       Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **27 May 2022** | **16 June 2022** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
|---|
| **PCT/CN2022/085191** |

**C.    DOCUMENTS CONSIDERED TO BE RELEVANT**

| Category* | Citation of document, with indication, where appropriate, of the relevant passages | Relevant to claim No. |
|---|---|---|
| A | CN 112541867 A (OPPO (CHONGQING) INTELLIGENT TECHNOLOGY CO., LTD.) 23 March 2021 (2021-03-23)<br>     entire document | 1-22 |
| A | KR 20210034300 A (LG INNOTEK CO., LTD.) 30 March 2021 (2021-03-30)<br>     entire document | 1-22 |
| A | SEI, S. et al. "Superresolved Image Synthesis for Multiple-Plane Scenes Captured with an Uncalibrated Moving Camera"<br>*Systems and Computers in Japan,* Vol. 36, No. 10, 01 September 2005 (2005-09-01),<br>     entire document | 1-22 |

Form PCT/ISA/210 (second sheet) (January 2015)

**INTERNATIONAL SEARCH REPORT**
**Information on patent family members**

International application No.

**PCT/CN2022/085191**

| Patent document cited in search report | | | Publication date (day/month/year) | Patent family member(s) | | | Publication date (day/month/year) |
|---|---|---|---|---|---|---|---|
| US | 7003177 | B1 | 21 February 2006 | DE | 60043694 | D1 | 04 March 2010 |
| | | | | WO | 0059206 | A1 | 05 October 2000 |
| | | | | EP | 1169847 | A1 | 09 January 2002 |
| | | | | AU | 3453000 | A | 16 October 2000 |
| | | | | EP | 1169847 | B1 | 21 February 2006 |
| US | 9501683 | B1 | 22 November 2016 | US | 2017076128 | A1 | 16 March 2017 |
| CN | 104041006 | A | 10 September 2014 | JP | 2013145979 | A | 25 July 2013 |
| | | | | US | 2014368690 | A1 | 18 December 2014 |
| | | | | US | 2016234435 | A1 | 11 August 2016 |
| | | | | WO | 2013105383 | A1 | 18 July 2013 |
| | | | | JP | 5818697 | B2 | 18 November 2015 |
| | | | | US | 9344624 | B2 | 17 May 2016 |
| | | | | US | 9609208 | B2 | 18 March 2017 |
| | | | | CN | 104041006 | B | 10 October 2017 |
| CN | 103905746 | A | 02 July 2014 | CN | 103905746 | B | 22 February 2017 |
| WO | 2019092844 | A1 | 16 May 2019 | US | 2019149728 | A1 | 16 May 2019 |
| | | | | JP | 6553826 | B1 | 31 July 2019 |
| | | | | CN | 111164959 | A | 15 May 2020 |
| | | | | US | 10491815 | B2 | 16 November 2019 |
| | | | | CN | 111164959 | B | 03 August 2021 |
| | | | | JPWO | 2019092844 | X | 14 November 2019 |
| US | 6570613 | B1 | 27 May 2003 | None | | | |
| CN | 112541867 | A | 23 March 2021 | None | | | |
| KR | 20210034300 | A | 30 March 2021 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110473797